# EUROPEAN PATENT APPLICATION

(11) **EP 4 803 958 A2**
(43) Date of publication of application: **09.09.2026**
(21) Application number: 26192681.0
(22) Date of filing: 05.06.2020
(51) Int. Cl.: G02F 1/31

(54) **WAVEGUIDE DEVICES**

(30) Priority: 06.06.2019 US 201962858181 P; 07.06.2019 US 201962858448 P; 14.10.2019 GB 201914805; 14.10.2019 GB 201914811; 14.10.2019 GB 201914816; 14.10.2019 GB 201914828; 14.10.2019 GB 201914853; 15.10.2019 GB 201914877; 16.10.2019 GB 201914932
(62) Document number(s) of the earlier application(s) in accordance with Art. 76 EPC: 20732794.1 / 3 980 846
(71) Applicant: Optalysys Limited, Leeds LS1 4JB (GB)
(72) Inventor: PALANI, Ananta, Nevada, 89509 (US)
(74) Representative: Kilburn & Strode LLP

(57) **Abstract**

A spatial light modulating, SLM, device comprises one or more optical inputs, one or more optical outputs, a plurality of waveguides arranged into an array of receivers and/or emitters, wherein each waveguide is coupled to one or more optical inputs, and at least one light modulating element for modulating light passing through at least one of the plurality of waveguides; wherein said waveguides and said light modulating elements are integrated in at least one common module with one of said optical inputs or optical outputs having an interface with a free space region occupied in part by a vacuum, gas, liquid, and/or solid medium.

## Description

### Technical Field

The invention generally relates to waveguide devices and optical systems comprising waveguide devices. Certain embodiments concern optical correlation based processing systems.

### Background

Traditional optical information processing systems are comprised of displays and cameras that operate in free-space environments to take advantage of the physics of light propagation and interaction in that environment, such as reflection, refraction, and diffraction. This includes systems where air is replaced by another gas (such as nitrogen), complete removal of gases (by creating a vacuum), or insertion of a liquid (such as index-matched fluid) or a solid (such as index-matched glass). Such changes are made in order to overcome problems due to air flow, heat, vibration, etc. in real-world operating environments.

To input or alter data within these traditional systems, microdisplay devices are typically used, such as liquid crystal displays (LCDs) and digital micro-mirror displays (DMDs). Such devices include pixel arrays and typically operate by modulating light transmission (each pixel in the device acts like a shutter), reflection (each pixel alters the direction and or properties of the incident light), or diffraction (each pixel diffracts the incident light).

More recently, self-emissive microdisplay devices such as organic and inorganic light-emitting diode (OLED and microLED) displays have been developed where each electrically-controllable pixel produces its own light. For display applications that require coherent light, such as optical information processing or computation, both non-emissive and self-emissive displays have their drawbacks. Non-emissive displays can be quite limited in their switching speeds as they rely on mechanical movement of a liquid material or solid structure, a speed that is theoretically much slower than solid-state electrical signal modulation could achieve. Existing self-emissive displays emit incoherent light, which cannot be used for system designs that require light coherence. Therefore, it is desirable to have a new display type that could both emit coherent light and be modulated at a high speed.

Similarly, cameras and sensors are used in these traditional systems to convert the result of the optical processing system into an electrical signal for use with traditional electrical computing systems. Such sensors are typically photodetector arrays, or imaging sensors (cameras) manufactured with complementary metal-oxide-semiconductor (CMOS) or charge-coupled device (CCD) technologies. However, the majority of these sensors are typically designed for use in cinematography or astronomy where light intensity is more important than light phase, where phase is preferable for optical information processing systems due to its higher information carrying capability. Likewise, the speed at which typical sensors operate is often quite slow relative to memory technologies available to traditional computing systems (typically one- to two-orders of magnitude slower), partly due to the targeted operating use (human-centric devices such as film and cinema cameras) and partly due to chip packaging. Therefore, a photodetecting array that is both high speed and which operates on phase or multiple properties of light is very desirable.

### Brief summary

According to a first independent aspect, there is provided a SLM device according to claim 1. Optionally, said SLM device may be self-emissive.

This aspect of the invention concerns the modulation of light (especially phase, but optionally intensity, amplitude, and/or polarization) for the purpose of transmission and/or processing of information, where multiple light emitting, modulating, and/or detecting components or devices are combined in various configurations with or without traditional optical components or devices thereby forming optical information processing systems. The devices according to this aspect comprise of one or more optical waveguides which carry light for the purpose of modulation, transmission, and/or detection (either of phase, intensity, amplitude, polarization, or a combination thereof) of the light. At least one (preferably every) waveguide may be modulated or affected by in-line, adjacent, or enclosing components such as electro-optic, thermo-optic, or other adjacent waveguides, with the purpose of altering or sustaining properties of the light including phase, intensity, amplitude, and/or polarization as the light passes through the waveguide and device.

The device according to at least one of the independent aspects of the invention is an optical modulating or pass-through device. On-device phase-, intensity-, amplitude-, and/or polarization-modulated optical waveguides are arranged into an array of emitters thereby forming an emitting or self-emitting spatial light modulator or display device.

Light modulation may be attained for example by a modulating material or multiple materials in-line, adjacent, or enclosing the optical waveguide that alter the waveguide's refractive index or create interference within the waveguide to produce the desired modulation, either passively through the physical design of the waveguide, or actively through an electrically controlled modulator. Such modulating materials or components may include but are not limited to those that induce linear (Pockels) effects, such as thermo-optic phase shifters, quadratic (Kerr) effect, such as electro-optic polymers, or other nonlinear effects. The modulating components may also include gain components, such as linear, planar, or volumetric waveguide amplifiers including evanescently-coupled-pump amplifiers. The light source may be on- or off-device for example, coupled into each emitting waveguide of the device via a branching or fan-out waveguide array thereby splitting the original light source into multiple paths. This allows the emitted light to maintain coherence properties of the original light source if desirable, such as if the original light source is fiber-coupled laser diode. Waveguide and phase modulating elements may be formed using lithographic techniques for example. The emitting elements may be optionally followed in the optical path by a microlens (lenslet) array, which is used to capture the light emitted from each waveguide and project it towards a collimation stage.

Optionally, all emitting-element waveguides branch from a single waveguide which is coupled to an on- or off-device light source via a waveguide or fiber. Each waveguide may have any number of the modulating or mixing components as described for the core modulating device. The emitting surface may be planar, hemi-spherical, or some other non-planar shape.

In a further independent aspect, there is provided a receiver-transmitter SLM device according to any of the aspects defined in the accompanying claims. Accordingly, the device has at least two arrays of elements, one for receiving light and one for emitting light. The number of elements on the receiving array may or may not be equal to the emitting array elements. The receiving and/or transmitting elements may each be coupled to their own external fiber-optic cables, allowing modulated light to enter and/or exit the device by fiber rather than free-space. At least one waveguide connects the receiving elements to the emitting elements and may or may not have any number of modulating components as described above for the first independent aspect. The receiving array may or may not be on the same spatial plane, an orthogonal plane, an opposing plane, or any other configuration relative to the transmitting array, including a non-planar arrangement or orientation.

A variation of the receiver-transmitter device where the number of receiving array elements is equal to the number of transmitting array elements, with or without waveguide modulating or mixing components within the device. A second variation of the receiver-transmitter device where the number of receiving array elements is less than the number of transmitting array elements may or may not be configured to scale the input to a larger array with or without waveguide modulating or mixing components within the device. A third variation of the receiver-transmitter device where the number of receiving array elements is greater than the number of transmitting array elements may or may not be configured to reduce the larger array to a smaller array with or without waveguide modulating or mixing components within the device, where the waveguides may or may not be configured such that light in one or multiple waveguides may or may not interact or affect the light in one or multiple waveguides within the device.

In a dependent aspect, a combination of the single-light-source-emitter and receiver-transmitter SLM device variations, data enters the receiver array per element via free-space or coupled fiber and modulates a single-light-source branching waveguide array inside the device. After modulation, light exits the device from the modulated single-light-source branching waveguide transmitter array. The internal waveguide arrays may or may not have modulating or mixing components as described previously for the core, single-light-source-emitter, and receiver-transmitter devices.

In a further independent aspect, there is provided a photo-detection device as claimed in any of the appropriate claims. The photo-detection device may include receiver waveguide-coupled light-receiving elements as described by the receiver-transmitter device. The internal waveguides may or may not have modulating or mixing components as described for the first device and its variations.

In a variation of the photo-detection device, a photo-detector-array device, each waveguide terminates at an electro-optic photodetector. All waveguides may or may not have modulating or mixing components as described for all other devices and variations.

In a further variation of the photo-detection device, an element-wise-interferometry device, the light source used as data carrier for the system is branched as described in the single-light-source-emitter SLM device and coupled to the receiver-element waveguide array via interferometry or differential elements such as Mach-Zender interferometer or differential detector elements which determine the phase shift between the original light source and the light received by each elemental waveguide in the device. All waveguides may or may not have modulating or mixing components as described for all other devices and variations.

In a further variation of the photo-detection device, a hybrid-amplitude-phase-detection device, is a combination of the first and second variations, where each elemental waveguide is terminated by a hybrid-detection device that may or may not split the waveguide into one or more separate detectors to measure multiple light properties, including but not limited to a detector to measure the amplitude or intensity of the light, a detector to measure the phase of the light, a detector to measure the polarization of the light, or a detector to measure any combination of light properties, where all possible detectors either measure these values relative to a known value (such known-constant value), a previous value, or to the original light source. All waveguides may or may not have modulating or mixing components as described for all other devices and variations.

In a further dependent aspect, there is provided an optical system comprising a self-emissive SLM device, wherein each one of the plurality of waveguides shares a common optical axis with at least one other device via a region of free space. The free space region may be a gas, liquid, a solid or vacuum for example.

Optionally, the optical system comprises at least one lens with a focal length f and any number of additional optical elements. Optionally, the optical system comprises at least one assembly with a focal length *f* and any number of additional optical elements. The optical path length of the free space between two connected devices may be equal to 2f. Optionally, the total optical path length of the free space between three successively connected devices is equal to 4f. Alternatively, the optical path length of the free space between two connected devices is at least 2f. Optionally, the total optical path length of the free space between three successively connected devices is at least 4f.

Any device which performs photodetection may detect: a phase of the light, the amplitude of the light, the polarization of the light, the intensity of the light, both the phase and amplitude of the light, both the phase and intensity of the light, both the phase and polarization of the light, both the amplitude and polarization of the light, both the intensity and polarization of the light, the phase, amplitude, and polarization of the light, the phase, intensity, and polarization of the light.

Fundamentally, the first independent aspect represents a spatial light modulating device for modulating or passing the light to later stages of the system and at least one further independent aspect represents a photo-detection device for terminating the system and converting information from the optical to electrical domain. Variations of these two devices may form components in optical information processing systems.

Variations of the independent aspects defined in the claims may be used to replace one or multiple components in a traditional optical information processing system. The single-light-source-emitter may be used in place of a traditional display device (such as television, computer, or projector display) or as the first stage of a traditional optical information processing system, replacing both the light source and the first spatial light modulator in the system. Likewise, the receiver-transmitter SLM device may be used as the filter stage of an optical modulator / optical information processing system. The photo-detection device may be used as a replacement for the final stage of a traditional optical information processing system replacing the camera or imaging sensor array where the input light source is a laser or other coherent light source that could be coupled into the photo-detection device.

Utilizing these display and sensor arrays together allows the creation of compact optical information processing systems. Different combinations of these display and camera devices provide different benefits, offering the possibility to replace some or all of a traditional optical information processing system with the components. In its preferred configurations, the optical information processing system offers substantial improvements on speed, resolution, and accuracy over traditional systems, possibly replacing traditional electronic computing architectures entirely.

### Further aspects

In a further independent aspect, a spatial light modulating, SLM, device comprises one or more optical inputs, one or more optical outputs, a plurality of waveguides arranged into an array of receivers and/or emitters, wherein each waveguide is coupled to one or more optical inputs, and at least one light modulating element for modulating light passing through at least one of the plurality of waveguides; wherein said waveguides and said light modulating elements are integrated in at least one common module with one of said optical inputs or optical outputs having an interface with a free space region occupied in part by a vacuum, gas, liquid, and/or solid medium. Preferably, said module has an electro-optic interconnection for connection to a processing system. Preferably, the at least one light modulating element is in-line with the at least one of the plurality of waveguides. Preferably, the at least one light modulating element is a waveguide adjacent to the at least one of the plurality of waveguides. Optionally, the at least one light modulating element is enclosing the at least one of the plurality of waveguides.

Preferably, at least one light modulating element comprises one or more of the following: a thermo-optic phase-shifter, an electro-optic polymer, at least one gain component, and/or an evanescently-coupled-pump amplifier. Optionally, the optical input is off-device and coupled to each of the plurality of waveguides via a branching element. In a further embodiment, the device further comprising a further waveguide array for splitting the optical input into a plurality of light paths. In a further embodiment, the device further comprises a micro-lens array for capturing the modulated light after passing through at least one of the plurality of waveguides and projecting the captured modulated light towards a free space region occupied in part by a vacuum, gas, liquid, and/or solid medium. In a subsidiary aspect, the plurality of waveguides branch out from a single waveguide coupled to the optical input. In a further subsidiary aspect, the module integrates a plurality of waveguides and possesses a light-emitting surface and/or a light-receiving surface. In a further subsidiary aspect, the at least one of the plurality of waveguides has a planar light-emitting surface and/or a planar light-receiving surface. Optionally, the at least one of the plurality of waveguides has a non-planar light-emitting surface and/or a non-planar light-receiving surface. In a further subsidiary aspect, said SLM device is self-emissive.

In further independent aspect, an embodiment provides an optical processing system comprising a plurality of SLM devices according to any of the aspects disclosed herein, wherein at least two SLM devices communicate through a common free space region occupied in part by a vacuum, gas, liquid, and/or solid medium. In a subsidiary aspect, at least one lens is optically positioned between said at least two SLM devices. In a further subsidiary aspect, at least one of said SLM devices interfaces with an electro-optic carrier. In a further subsidiary aspect, the optical processing system comprises at least one lens with a focal length f and any number of additional optical elements. Preferably, the optical processing system comprises at least one assembly with a focal length f and any number of additional optical elements. Preferably, the optical path length of the free space between two connected devices is equal to 2f. Further optionally, the optical path length of the free space between two connected devices is at least 2f. Further optionally, the optical path length of the free space between two connected devices is one or more of: at least f, less than f, equal to f. Further optionally, the total optical path length of the free space between three successively connected devices is equal to 4f. Further optionally, the total optical path length of the free space between three successively connected devices is at least 4f. In further aspects, the total optical path length of the free space between three successively connected devices is one or more of: at least f, less than f, equal to f. In a further subsidiary aspect, one or more of said devices performs photodetection and detects one or more of the following: the phase of light; the amplitude of light; the polarization of light; the intensity of light; both the phase and amplitude of light; both the phase and intensity of light; both the phase and polarization of light; both the amplitude and polarization of light; both the intensity and polarization of light; optionally the intensity and the polarization may be detected simultaneously; the combination of phase, amplitude, and polarization of light; the combination of phase, intensity, and polarization of light.

In a further broad aspect, embodiments provide an optical correlator comprising a plurality of SLM devices according to any one of the aspects described herein, wherein at least two SLM devices communicate through a common free space region occupied in part by a vacuum, gas, liquid, and/or solid medium.

In a further broad aspect, a receiver-transmitter SLM device, comprises a first plurality of elements arranged into an array of emitters, a second plurality of elements arranged into an array of receivers; and an array of waveguides coupling said array of emitters with said array of receivers; wherein said array of emitters, said array of receivers and said array of waveguides are integrated into a common module. Preferably, said module has an electro-optic interconnection for connection to a processing system. Further preferably, the first plurality of elements are coupled to respective optical fibres for allowing the modulated light to exit the device. Optionally, the second plurality of elements are coupled to respective optical fibres for allowing the modulated light to enter the device. In a further subsidiary aspect, the receiver-transmitter SLM device further comprises at least one light modulating element for modulating light passing through the at least one waveguides. In a further subsidiary aspect, the at least one light modulating element is in-line with the at least one waveguide. In a further subsidiary aspect, the at least one light modulating element is a waveguide adjacent to at least one waveguide. In a further subsidiary aspect, at least one light modulating element is enclosing part or all of the at least one waveguide. Preferably, at least one light modulating element comprises one or more of the following a thermo-optic modulator, an electro-optic modulator, an acousto-optic modulator, a mechanical modulator, at least one gain component; optionally said at least one gain component comprises an evanescently-coupled-pump amplifier. Optionally, the array of emitters is in a same plane as the array of receivers. Further preferably, the array of emitters is a plane orthogonal to the array of receivers. Optionally, the array of emitters is in plane opposing the array of receivers. In a further subsidiary aspect, the number of emitters is equal to, greater than, or less than the number of receivers.

In a further broad aspect, embodiments provide a system comprising at least one of an SLM device according to any one of the aspects described herein and at least one of a receiver-transmitter SLM device according to any of one of the aspects described herein, configured to receive light with the array of receivers of the receiver-transmitter SLM device to thereby provide the optical input, wherein the plurality of waveguides of the self-emissive spatial light modulating, SLM, device branch out from a single waveguide coupled to the optical input.

In a further broad aspect, a photo-detection device comprises an array of inputs, an array of outputs and a plurality of waveguides optically arranged between said array of inputs and said array of outputs, wherein said array of inputs, said array of outputs and a plurality of waveguides are integrated into a common module and a photo detector is provided to convert modulated light from the optical domain to the electrical domain. Optionally, the photo-detection device further comprises at least one light modulating element for modulating light passing through at least one of the plurality of waveguides. Optionally, a photo-detection device comprises at least one of the plurality of waveguides which terminates at one or a combination of the following: an interferometric photodetector, an electro-optic photodetector, and/or a differential photodetector. Optionally, one or more waveguides are split into multiple detectors for measuring multiple light properties. In a further subsidiary aspect, said photo detector performs photodetection by one or more of the following: detecting the phase of light, detecting the amplitude of light, detecting the polarization of light, detecting the intensity of light, detecting both the phase and amplitude of light, detecting both the phase and intensity of light, detecting both the phase and polarization of light, detecting both the amplitude and polarization of light, detecting both the intensity and polarization of light; optionally the intensity and the polarization may be detected simultaneously, detecting a combination of the phase, amplitude, and polarization of light, detecting a combination of the phase, intensity, and polarization of light.

In a further broad aspect, embodiments provide a display device comprising a SLM device according to any one of the aspects described herein.

In a further broad aspect, a SLM-photo-detection device comprises one or more optical inputs, one or more optical outputs, a plurality of waveguides arranged into an array of receivers and/or emitters, wherein each waveguide is coupled to one or more optical inputs, and at least one light modulating element for modulating light passing through at least one of the plurality of waveguides; wherein said waveguides and said light modulating elements are integrated in at least one common module with one of said optical inputs or optical outputs having an interface with a free space region occupied in part by a vacuum, gas, liquid, and/or solid medium; said device further comprising one or more photo-detection elements for converting modulated light from the optical domain to the electrical domain, said photo-detection elements operating with a plurality of waveguide elements of said waveguides or of another plurality of waveguides; said plurality of waveguide elements being arranged to form an array of receivers.

In a further broad aspect, embodiments of the invention concern a SLM-photo-detection device.

In a further broad aspect, a receiver-transmitter-photo-detection device comprises a first plurality of elements arranged into an array of emitters, a second plurality of elements arranged into an array of receivers; and at least one waveguide coupling at least one of the first plurality of elements to at least one of the second plurality of elements; said device further comprising one or more photo-detection elements for converting modulated light from the optical domain to the electrical domain, said photo-detection elements operating with one or more of said plurality of elements or with one or more of a further plurality of elements; said plurality of elements being arranged as part of said array of receivers or as a further array of receivers.

In further broad aspects, embodiments describe an optical information processing system which includes at least one SLM device according to any one of the aspects described herein.

In further broad aspects, embodiments describe an optical information processing system which includes at least one SLM-photo-detection device according to any of the aspects described herein.

In a further broad aspect, embodiments describe an optical information processing system which includes at least one receiver-transmitter-photo-detection device according to any of the appropriate preceding aspects.

In a further broad aspect, embodiments describe an optical information processing system which includes at least one receiver-transmitter SLM device and a photo-detection device according to any of the appropriate preceding aspects.

In a further broad aspect, embodiments described an optical information processing system which includes at least one SLM and a photo-detection device according to any of the appropriate preceding aspects.

In a further broad aspect, an optical system comprising at least one SLM device according to any one of the preceding claims, wherein each one of the emitting or receiving surfaces from any given SLM shares a common optical axis with at least one other emitting or receiving surface via a free space region occupied in part by a vacuum, gas, liquid, and/or solid medium.

Advantageously many of these embodiments whilst providing a significant reduction in pixel count and consequential lower resolution when compared to liquid crystal SLM arrays or panels, the integrated waveguides provide the enhanced speed for integrated solutions.

### Brief description of the drawings

Aspects of the invention will be described with reference to the figures, in which:
- FIG. 1: shows a schematic of a 2f system with one input device and one output device.
- FIG. 2: shows a schematic of a 4f system with one input device and one output device.
- FIG. 3: shows a schematic of a 4f system with one input device, one filter device, and one output device.
- FIG. 4: shows a schematic of a 4f system with two input devices, one filter device, and one output device.
- FIG. 5: shows a schematic of a configuration of the system shown in FIG. 4 where each input has an independent external laser providing the carrier signal and/or pump energy.
- FIG. 6: shows a schematic of a configuration of the system shown in FIG. 4 where all inputs share the same external laser providing the carrier signal and/or pump energy.
- FIG. 7: shows a schematic of a configuration of the system shown in FIG. 4 where all inputs share the same on-device laser providing the carrier signal and/or pump energy.
- FIG. 8: shows a schematic of a configuration of the system shown in FIG. 3 where the input has an external laser providing the carrier signal and/or pump energy.
- FIG. 9: shows a schematic of a configuration of the system shown in FIG. 3 where the input has an on-device laser providing the carrier signal and/or pump energy.
- FIG. 10: shows a schematic of a configuration of the system shown in FIG. 1 where the input has an external laser providing the carrier signal and/or pump energy.
- FIG. 11: shows a schematic of a configuration of the system shown in FIG. 1 where the input has an on-device laser providing the carrier signal and/or pump energy.
- FIG. 12: shows a schematic of a configuration of the system shown in FIG. 4 where each input has an independent on-device laser providing the carrier signal and/or pump energy.
- FIG. 13: shows a schematic of a configuration of the system shown in FIG. 4 data lines supply both the carrier and data signals.
- FIG. 14: shows a schematic of a configuration of the system shown in FIG. 3 data lines supply both the carrier and data signals.
- FIG. 15: shows a schematic of a configuration of the system shown in FIG. 1 data lines supply both the carrier and data signals.
- FIG. 16a and FIG. 16b: show the top- and side-view respectively of a schematic of a possible construction of the configuration shown in FIG. 5 where all devices and their receiving and emitting surfaces are parallel to the top surface of their shared carrier chip.
- FIG. 17a and FIG. 17b: show the top- and side-view respectively of a schematic of a possible construction of the configuration shown in FIG. 5 where all devices are comprised of multiple chips and all receiving and emitting surfaces of devices are perpendicular to the top surface of their shared carrier chip.
- FIG. 18a: and FIG. 18b show the top- and side-view respectively of a schematic of a possible construction of the configuration shown in FIG. 5 where all devices are comprised of multiple chips, all receiving and emitting surfaces of devices are perpendicular to the top surface of their shared carrier chip, and all device components and waveguide networks are incorporated into the carrier chip except the receiving and emitting chips.
- FIG. 19a and FIG. 19b: show the top- and side-view respectively of a schematic of a possible construction of the configuration shown in FIG. 5 where all devices are comprised of multiple chips, all receiving and emitting surfaces of devices are parallel to the top surface of their shared carrier chip, and all device components and waveguide networks are incorporated into the carrier chip except the receiving and emitting chips.
- FIG. 20a and FIG. 20b: show the top- and side-view respectively of a schematic of a possible construction of the configuration shown in FIG. 5 where all devices are integrated into their shared carrier chip and all receiving and emitting surfaces are parallel to the top surface of their shared carrier chip.
- FIG. 21a and FIG. 21b: show the top- and side-view respectively of a schematic of a possible construction of the configuration shown in FIG. 5 where all devices are single monolithic components and all receiving and emitting surfaces are perpendicular to the top surface of their shared carrier chip.
- FIG. 22a and FIG. 22b: show the top- and side-view respectively of a schematic of a possible construction of the configuration shown in FIG. 5 where all devices are comprised of multiple components stacked parallel to the top surface of their shared carrier chip and all aggregate receiving and emitting surfaces are perpendicular to the top surface of their shared carrier chip.
- FIG. 23a and FIG. 23b: show the top- and side-view respectively of a schematic of a possible construction of the configuration shown in FIG. 5 where all devices are comprised of multiple components stacked perpendicular to the top surface of their shared carrier chip and all aggregate receiving and emitting surfaces are perpendicular to the top surface of their shared carrier chip.
- FIG. 24a and FIG. 24b: show the top- and side-view respectively of a schematic of a possible construction of the configuration shown in FIG. 5 where all devices and free space regions are integrated into their shared carrier chip and all receiving and emitting surfaces are parallel to the top surface of their shared carrier chip.
- FIG. 25a and FIG. 25b: show the top- and side-view respectively of a schematic of a possible construction of the configuration shown in FIG. 5 where all devices and free space regions are integrated into their shared carrier chip and all receiving and emitting surfaces are perpendicular to the top surface of their shared carrier chip.
- FIG. 26a and FIG. 26b: show the top- and side-view respectively of a schematic of a possible construction of the configuration shown in FIG. 8 where all devices and their receiving and emitting surfaces are parallel to the top surface of their shared carrier chip.
- FIG. 27a and FIG. 27b: show the top- and side-view respectively of a schematic of a possible construction of the configuration shown in FIG. 8 where all devices are comprised of multiple chips and all receiving and emitting surfaces of devices are perpendicular to the top surface of their shared carrier chip.
- FIG. 28a and FIG. 28b: show the top- and side-view respectively of a schematic of a possible construction of the configuration shown in FIG. 8 where all devices are comprised of multiple chips, all receiving and emitting surfaces of devices are perpendicular to the top surface of their shared carrier chip, and all device components and waveguide networks are incorporated into the carrier chip except the receiving and emitting chips.
- FIG. 29a and FIG. 29b: show the top- and side-view respectively of a schematic of a possible construction of the configuration shown in FIG. 8 where all devices are comprised of multiple chips, all receiving and emitting surfaces of devices are parallel to the top surface of their shared carrier chip, and all device components and waveguide networks are incorporated into the carrier chip except the receiving and emitting chips.
- FIG. 30a and FIG. 30b: show the top- and side-view respectively of a schematic of a possible construction of the configuration shown in FIG. 8 where all devices are integrated into their shared carrier chip and all receiving and emitting surfaces are parallel to the top surface of their shared carrier chip.
- FIG. 31a and FIG. 31b: show the top- and side-view respectively of a schematic of a possible construction of the configuration shown in FIG. 8 where all devices are single monolithic components and all receiving and emitting surfaces are perpendicular to the top surface of their shared carrier chip.
- FIG. 32a and FIG. 32b: show the top- and side-view respectively of a schematic of a possible construction of the configuration shown in FIG. 8 where all devices are comprised of multiple components stacked parallel to the top surface of their shared carrier chip and all aggregate receiving and emitting surfaces are perpendicular to the top surface of their shared carrier chip.
- FIG. 33a and FIG. 33b: show the top- and side-view respectively of a schematic of a possible construction of the configuration shown in FIG. 8 where all devices are comprised of multiple components stacked perpendicular to the top surface of their shared carrier chip and all aggregate receiving and emitting surfaces are perpendicular to the top surface of their shared carrier chip.
- FIG. 34a and FIG. 34b: show the top- and side-view respectively of a schematic of a possible construction of the configuration shown in FIG. 8 where all devices and free space regions are integrated into their shared carrier chip and all receiving and emitting surfaces are parallel to the top surface of their shared carrier chip.
- FIG. 35a and FIG. 35b: show the top- and side-view respectively of a schematic of a possible construction of the configuration shown in FIG. 8 where all devices and free space regions are integrated into their shared carrier chip and all receiving and emitting surfaces are perpendicular to the top surface of their shared carrier chip.
- FIG. 36a and FIG. 36b: show the top- and side-view respectively of a schematic of a possible construction of the configuration shown in FIG. 10 where all devices and their receiving and emitting surfaces are parallel to the top surface of their shared carrier chip.
- FIG. 37a and FIG. 37b: show the top- and side-view respectively of a schematic of a possible construction of the configuration shown in FIG. 10 where all devices are comprised of multiple chips and all receiving and emitting surfaces of devices are perpendicular to the top surface of their shared carrier chip.
- FIG. 38a and FIG. 38b: show the top- and side-view respectively of a schematic of a possible construction of the configuration shown in FIG. 10 where all devices are comprised of multiple chips, all receiving and emitting surfaces of devices are perpendicular to the top surface of their shared carrier chip, and all device components and waveguide networks are incorporated into the carrier chip except the receiving and emitting chips.
- FIG. 39a and FIG. 39b: show the top- and side-view respectively of a schematic of a possible construction of the configuration shown in FIG. 10 where all devices are comprised of multiple chips, all receiving and emitting surfaces of devices are parallel to the top surface of their shared carrier chip, and all device components and waveguide networks are incorporated into the carrier chip except the receiving and emitting chips.
- FIG. 40a and FIG. 40b: show the top- and side-view respectively of a schematic of a possible construction of the configuration shown in FIG. 10 where all devices are integrated into their shared carrier chip and all receiving and emitting surfaces are parallel to the top surface of their shared carrier chip.
- FIG. 41a and FIG. 41b: show the top- and side-view respectively of a schematic of a possible construction of the configuration shown in FIG. 10 where all devices are single monolithic components and all receiving and emitting surfaces are perpendicular to the top surface of their shared carrier chip.
- FIG. 42a and FIG. 42b: show the top- and side-view respectively of a schematic of a possible construction of the configuration shown in FIG. 10 where all devices are comprised of multiple components stacked parallel to the top surface of their shared carrier chip and all aggregate receiving and emitting surfaces are perpendicular to the top surface of their shared carrier chip.
- FIG. 43a and FIG. 43b: show the top- and side-view respectively of a schematic of a possible construction of the configuration shown in FIG. 10 where all devices are comprised of multiple components stacked perpendicular to the top surface of their shared carrier chip and all aggregate receiving and emitting surfaces are perpendicular to the top surface of their shared carrier chip.
- FIG. 44a and FIG. 44b: show the top- and side-view respectively of a schematic of a possible construction of the configuration shown in FIG. 10 where all devices and free space regions are integrated into their shared carrier chip and all receiving and emitting surfaces are parallel to the top surface of their shared carrier chip.
- FIG. 45a and FIG. 45b: show the top- and side-view respectively of a schematic of a possible construction of the configuration shown in FIG. 10 where all devices and free space regions are integrated into their shared carrier chip and all receiving and emitting surfaces are perpendicular to the top surface of their shared carrier chip.
- FIG. 46: shows a schematic of a generic complex optical system comprised of one or more sub-system components, where the sub-system components may be any and/or possible complex optical system, construction, configuration, system, device, and/or their variations.
- FIG. 47: shows a schematic of a possible configuration of the complex system shown in FIG. 46 with four sub-system components.
- FIG. 48: shows a schematic of a possible computer peripheral device that incorporates a complex optical system.
- FIG. 49: shows a schematic of a possible computer peripheral device that incorporates a complex optical system with the functionality of the complex optical system and the electrical and/or memory components from the peripheral device shown in FIG. 48.
- FIG. 50: shows a schematic of a possible computer motherboard that incorporates a complex optical system.
- FIG. 51: shows a schematic of a possible smartphone motherboard that incorporates a complex optical system.
- FIG. 52: shows a schematic of a possible processor that incorporates electrical processing unit(s) and a complex optical system.
- FIG. 53: shows a schematic of a possible computer motherboard that incorporates the electro-optic processor shown in FIG. 52.
- FIG. 54: shows a schematic of a possible electro-optic computer motherboard that incorporates a complex optical system.
- FIG. 55: shows a schematic of a possible electro-optic high-performance computing system comprised of one or more electrical and/or electro-optic computer servers.
- FIG. 56: shows a schematic of the fundamental waveguide array device.
- FIG. 57: shows a schematic of the fundamental waveguide array device with an enlarged view of the waveguide array.
- FIG. 58: shows a schematic of the fundamental waveguide array device with an enlarged view of the internal waveguide network.
- FIG. 59: shows a schematic of the photo-detection device with an enlarged view of the waveguide array and internal waveguide network.

### Detailed description

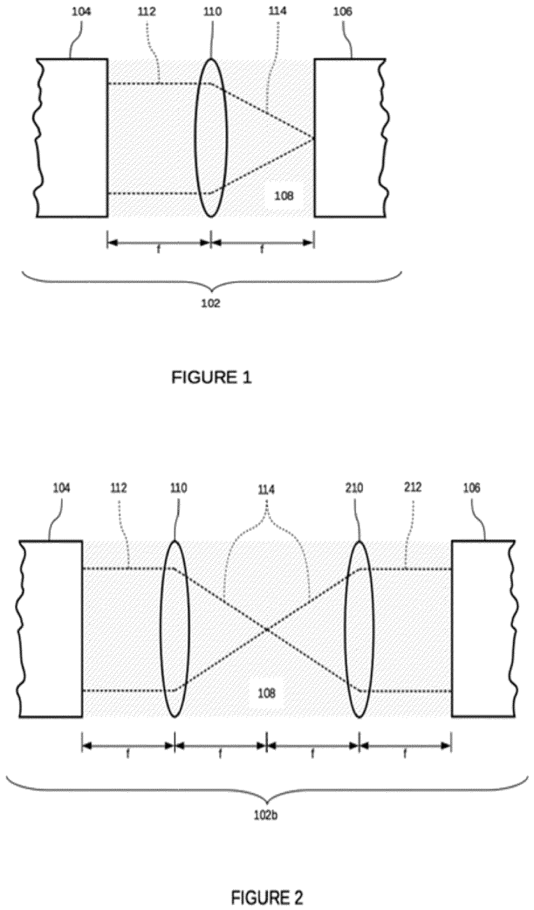

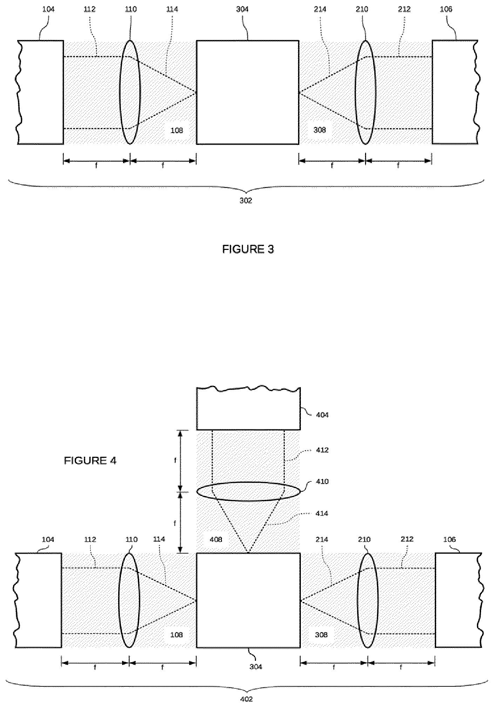

In an example, an optical information processing system is comprised of one or more variations of devices according to the independent aspects described herein, where the devices may be configured as a 2f optical information processing system (such as a joint-transform correlator system) as shown in FIG. 1, a 4f optical information processing system (such as a matched-filter correlator system) as shown in FIG. 2 and 3, and/or any other combination of components and/or devices. Components and/or devices of the optical information processing system may be separated by free-space, a gas (such as nitrogen), a liquid (such as an index-matched liquid), a solid (such as index-matched glass), or a vacuum. One or multiple light sources may be used as data carrier and/or modulator with one or multiple devices in the system. Embodiments of the system may be free-standing, part of a larger system (either a traditional optic, electric, or electro-optic system or chained together with the same or other configurations of the system), or integrated into a fiber-optic communication system (such as integrated into a fiber-optic transmission line for in-line analysis, processing, or modulating). For a 2f, 4f, and/or free-space optical system, it is that the systems described herein may be fully analog internally and may detect the phase or both amplitude and phase of the light simultaneously. Likewise, embodiments employ waveguide emission arrays with receiving (photodetecting) arrays to implement an optical information processing system. The potential for small waveguides to be combined into compact arrays of waveguides allows these optical information processing systems, in certain embodiments, to be packaged into a compact form factor, similar to that of current chip-scale devices such as central processing unit (CPU) chips, field programmable gate array (FPGA) chips, and graphics processing unit (GPU) chips.

For embodiments of certain devices, systems, configurations, complex systems, and/or their variations disclosed herein, a waveguide refers to an optical waveguide, i.e. a waveguide capable of propagating light including but not limited to a wire, rib, slot, buried channel, strip-loaded, light pipe, fiber, etc., with a design wavelength preferably between 100 nm and 1 mm, with preference for visible light wavelengths of approximately 380 to 750 nm for compatibility with traditional display and camera systems, and telecom wavelengths in the range 850 to 1625 nm. Telecom wavelength 1550 nm is the preferred target wavelength for embodiments of the invention as it is predominant wavelength used in telecoms and would allow for the potential to directly couple the optical information processing systems with existing fiber infrastructure to perform inline functions, such as network monitoring or routing, analysis or filtering, encryption or decryption, encoding or decoding, compression or decompression, or many other imaginable functions (all of which may be implemented in using traditional mathematical models or artificial intelligence methods). Additionally, the waveguide is likely to be designed for single-mode propagation, which make the fiber both small and more predictable since the waveguide could only propagate a single-mode of light, making defects quite obvious if zero propagation occurs. Therefore, at the preferred telecom wavelength of 1550 nm where the waveguide satisfies single-mode propagation conditions, the primary waveguide diameter of interest in at least some embodiments of this invention would be between 100 and 1000 nm. There are many materials the waveguides described herein could be manufactured from, including but not limited to silicon, germanium, gallium arsenide, indium phosphate, where the preferred material would have low loss and be compatible with traditional electronic chip lithography methodologies to increase ease of integration with existing chips and platforms, and to minimize cost. For the preferred design wavelength of 1550 nm, silicon-on-insulator (such as silicon on silicon dioxide) with a rib waveguide design could support single-mode propagation with zero birefringence at a rib diameter of 277 nm and an etch depth of 360 nm. To ensure there is no cross-talk between waveguides, it is assumed that the waveguides are separated by a distance of at least one to two times the maximum rib dimension (although a smaller separation may be feasible). Therefore, if we consider a 2-D array of waveguides, such as those in embodiment of receiving and/or emitting arrays, the array would optionally have a pixel pitch between 720 and 1080 nm. The larger pixel pitch will be used for calculating the waveguide array resolutions for example systems described herein, but for simplicity of discussion will be rounded to 1 µm.

The modulators, detectors, and other electro-optic elements coupled to the waveguide networks of all devices, systems, configurations, complex systems, and/or their variations disclosed herein may be the components that in certain embodiments limit the maximum possible data throughput since the optical components of the system operate in preferred embodiments passively at the speed of light. Therefore, the assumed operating rate of the system may in certain embodiments be equivalent to operating rate of the slowest system component. Depending on the devices included, the operating speed will likely be between 20 MHz and 30 GHz, although slower or faster operating speeds are envisaged .

The schematics for all devices, systems, configurations, constructions, complex systems, and/or their variations, as shown in FIG. 1 through FIG. 55 inclusive, are not intended to limit the scope of the invention but rather to clearly depict the elemental components which may be incorporated in embodiments of each device, system, configuration, construction, complex system, and/or their variations. Therefore, the figures do not necessarily depict the actual dimensions, scale, nor position of any component, device, system, configuration, construction, complex system, and/or their variations unless explicitly stated herein. Likewise, there may be additional elements, components, and/or devices that comprise a given device, system, configuration, construction, complex system, and/or their variations to those depicted in any figure and/or described herein unless explicitly stated.

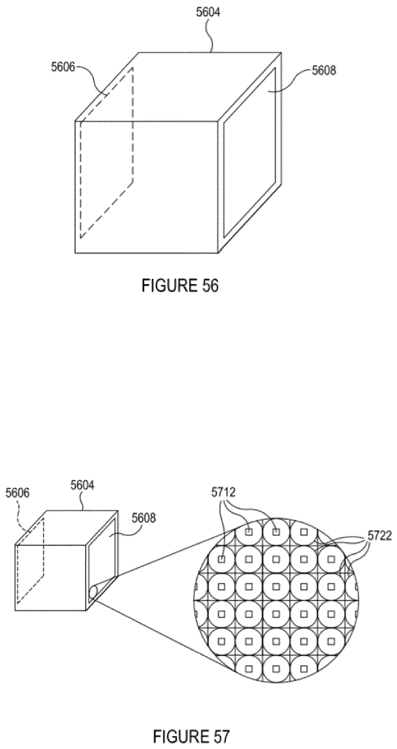

FIG. 56 shows a device 5604 that is a simple depiction that encompasses an embodiment of a building block or module which may be employed in any of the embodiments of a spatial light modulating device, the receiver-transmitter device, and/or their variations. In a broad aspect, the device may be a receiver-transmitter SLM device, comprising a first plurality of elements arranged into an array of emitters, a second plurality of elements arranged into an array of receivers; and at least one waveguide coupling at least one of the first plurality of elements to at least one of the second plurality of elements. In a further broad aspect, the device may be receiver or a transmitter SLM device. In a subsidiary aspect, the device optionally comprises a first plurality of elements which are coupled to respective optical fibres for allowing the modulated light to exit the device. In a further subsidiary aspect, the second plurality of elements are optionally coupled to respective optical fibres for allowing the modulated light to enter the device. In a further subsidiary aspect, the device further optionally comprises at least one light modulating element for modulating light passing through the at least one waveguides. In a further subsidiary aspect, the at least one light modulating element is in-line with the at least one waveguide. In a further subsidiary aspect, the at least one light modulating element is a waveguide adjacent to the at least one waveguide. Preferably, said modulating element and said waveguides are enclosed in a silicon chip. In a further subsidiary aspect, at least one light modulating element is optionally enclosing part or all of the at least one waveguide. In a further subsidiary aspect, at least one light modulating element is one or a combination of a thermo-optic modulator, an electro-optic modulator, an acousto-optic modulator, and/or a mechanical modulator. In a further subsidiary aspect, the at least one light modulating element optionally includes at least one gain component. In a further subsidiary aspect, the at least one gain component optionally comprises an evanescently-coupled-pump amplifier. In a further subsidiary aspect, the array of emitters is in a same plane as the array of receivers. In a further subsidiary aspect, the array of emitters is a plane orthogonal to the array of receivers. In a further subsidiary aspect, the array of emitters is in a plane opposing the array of receivers. In a further subsidiary aspect, the number of emitters is equal to, greater than, or less than the number of receivers.

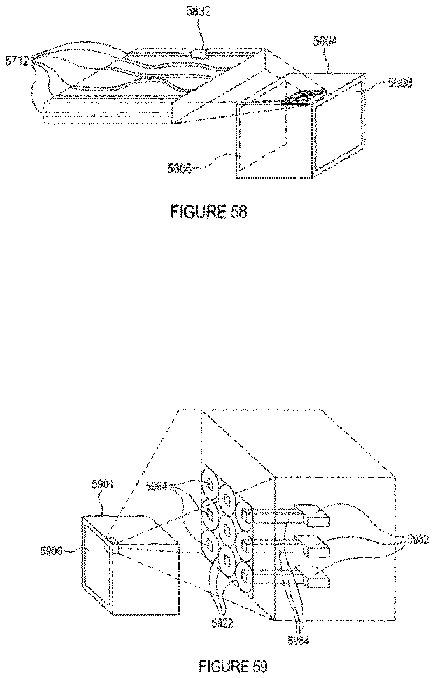

Preferably, these devices have internal waveguide networks (see FIG. 58) comprised of one or more optical waveguides which carry light for the purpose of modulation, transmission, and/or detection (either of phase, intensity, amplitude, polarization, or a combination thereof) of the light carried within. Every waveguide may be modulated or affected by in-line, adjacent, or enclosing components such as electro-optic, thermo-optic, or other adjacent waveguides, with the purpose of altering or sustaining properties of the light including phase, intensity, amplitude, and/or polarization as the light passes through the waveguide and device. Likewise, the devices have one or more waveguide-coupling array surfaces which allow the waveguide network to be connected externally (see FIG. 57). Device 5604 shows a device with two surfaces, optional surface 5606 and surface 5608. The surfaces may be used to receive light from an external source, such as via optional surface 5606, or may be used to emit light, such as via surface 5608. There are no restrictions on the number of elements in a waveguide array on any given surface. Likewise, the number of elements in any given waveguide array may not equal the number of elements in any other waveguide array surface.

FIG. 57 shows a device 5604 with a simple schematic showing an enlarged view of the waveguide array surface. The description for device 5604 for FIG. 57 is the same as that given for FIG. 56 with additional optional details as follows. Internal waveguides 5712 are terminated in surface 5608 such that the light within internal waveguides 5712 may emit via surface 5608 in an emitting configuration, or receive light from surface 5608 in a receiving configuration. Each waveguide termination is optionally coupled to a micro-lens 5722 that helps couple light into and/out of the waveguides.

FIG. 58 shows device 5604 with a simple schematic showing an enlarged view of the internal waveguides 5712. The description for embodiments of the device 5604 for FIG. 58 may be the same as that given for FIG. 56 and FIG. 57 with additional details as follows. Internal waveguides 5712 are optionally terminated in waveguide array 5608 such that the light within internal waveguides 5712 may emit via waveguide array surface 5608 in an emitting configuration, or receive light from waveguide array surface 5608. Each waveguide termination is optionally coupled to a micro-lens 5722 that helps couple light into and/out of the waveguide. Modulator 5832 is representative of any in-line, adjacent, or enclosing component that may alter or sustain properties of the light within the waveguide including phase, intensity, amplitude, and/or polarization by means of electro-optic, thermo-optic, acousto-optic, or any other means of modulation. Any waveguide in the network of internal waveguides 5712 may have any number of modulators like modulator 5832. If a device has multiple waveguide array surfaces, the internal waveguide network will interconnect the surfaces to implement the desired modulation of the received light. In certain embodiments, both the waveguide and the modulator are integrated in a same block, module or chip which may optionally be of silicon. The block or module being arranged in certain embodiments to emit or receive light from free space, through a space with gas or liquid appropriate for optical communication between modules or blocks of the kind in question.

FIG. 59 shows photo-detection device 5904, a simple example of a photo-detection device for converting light to electrical signals. In broad independent aspect, embodiments comprise a photo-detection device for converting modulated light from the optical domain to the electrical domain, the device comprising a plurality of waveguide elements arranged to form an array of receivers. Optionally, the photo-detection device further comprises at least one light modulating element for modulating light passing through at least one of the plurality of waveguides. In a further subsidiary aspect, at least one of the plurality of waveguides terminates at one or more interferometric photodetectors, one or more electro-optic photodetectors, and/or one or more differential photodetectors. In a further subsidiary aspect, the device further comprises an optical input where that optical input is coupled to at least one waveguide element. In a further subsidiary aspect, said coupling is via interferometry or differential elements. In a further subsidiary aspect, at least another one of the plurality of waveguides is optionally split into multiple detectors for measuring multiple light properties. In a further subsidiary aspect, the photo-detection device performs photodetection by one or more of the following: detecting the phase of the light, detecting the amplitude of the light, detecting the polarization of the light, detecting the intensity of the light, detecting both the phase and amplitude of the light, detecting both the phase and intensity of the light, detecting both the phase and polarization of the light, detecting both the amplitude and polarization of the light, detecting both the intensity and polarization of the light; optionally the intensity and the polarization may be detected simultaneously, photodetection by detecting the phase, amplitude, and polarization of the light, photodetection by detecting the phase, intensity, and polarization of the light.

Returning to figure 59, the surface 5906 is a light-receiving surface with an array of coupled waveguide elements shown in an enlarged view. In certain embodiments, the description for surface 5906 is the same as that given for surface 5608 in FIG. 56-58. Likewise, in certain embodiments, the description internal waveguides 5964 is the same as that given for internal waveguides 5608 in FIG. 56-58. The description for micro-lens 5922 may in certain embodiments also be the same as that given for micro-lens 5722 in FIG. 56-58. The photo-detection device 5904 and the internal waveguides 5964 are coupled to photo-detector components 5982, where photo-detector components 5982 are one or more electro-optic or optical components including but not limited to a detector component to measure the amplitude or intensity of the light, a detector component to measure the phase of the light, a detector component to measure the polarization of the light, or a detector component to measure any combination of light properties, where all possible detector components may measure these values relative to a known value (such known-constant value), a previous value, or to the original light source and may have interferometry or differential components such as Mach-Zender interferometer or differential detector elements which determine the relative difference between a reference light source and the light received by internal waveguides 5964. In certain embodiments, both the waveguides and the photo-detectors are integrated into a common block, module or chip, preferably a silicon comprising chip. The block or module being arranged in certain embodiments to emit or receive light from free space, through a space with gas or liquid appropriate for optical communication between modules or blocks of the kind in question.

FIG. 1 shows a system 102 that may be an embodiment of an optical information system. In a further broad aspect, embodiments of the invention provide an optical processing system comprising a plurality of SLM devices, wherein SLM devices comprise one or more optical inputs, one or more optical outputs, a plurality of waveguides arranged into an array of receivers and/or emitters, wherein each waveguide is coupled to one or more optical inputs, and at least one light modulating element for modulating light passing through at least one of the plurality of waveguides; wherein said waveguides and said light modulating elements are integrated in at least one common module with one of said optical inputs or optical outputs having an interface with a free space region occupied in part by a vacuum, gas, liquid, and/or solid medium; wherein at least two SLM devices communicate through a common free space region occupied in part by a vacuum, gas, liquid, and/or solid medium. In subsidiary aspect in accordance with a broad aspect, at least one of the SLM devices is configured so that at least one light modulating element is in-line with at least one of the plurality of waveguides. Optionally, at least one of the SLM devices is configured so that the at least one light modulating element is a waveguide adjacent to the at least one of the plurality of waveguides. In a further subsidiary aspect, at least one of said SLM devices comprises at least one light modulating element which encloses the at least one of the plurality of waveguides. In a further subsidiary aspect, the at least one light modulating element for at least one of the SLM devices is selected from the group comprising a thermo-optic phase-shifter, an electro-optic polymer, and at least one gain component which is optionally an evanescently-coupled-pump amplifier. In a further subsidiary aspect, the optical input for at least one of said SLM devices is coupled to each of the plurality of waveguides via a branching element. In a further subsidiary aspect, at least one of the SLM devices further comprises a further waveguide array for splitting the optical input into a plurality of light paths. In a further subsidiary aspect, at least one of the SLM devices further comprises a micro-lens array for capturing the modulated light after passing through at least one of the plurality of waveguides and projecting the captured modulated light towards a free space region occupied in part by a vacuum, gas, liquid, and/or solid medium. In a further subsidiary aspect, at least one of the SLM devices is configured so that its plurality of waveguides branch out from a single waveguide coupled to the optical input. In a further subsidiary aspect, at least one of the SLM devices is configured so that the at least one of its plurality of waveguides has a planar light-emitting surface and/or a planar light-receiving surface. In a further subsidiary aspect, at least one of the SLM devices is configured so that at least one of its plurality of waveguides has a non-planar light-emitting surface and/or a non-planar light-receiving surface. In a further subsidiary aspect, at least one of the SLM devices is self-emissive. In a further subsidiary aspect, the optical processing system optionally comprises at least one lens with a focal length f and any number of additional optical elements. In a further subsidiary aspect, the optical processing system optionally comprises at least one assembly with a focal length f and any number of additional optical elements. In a further subsidiary aspect, the optical path length of the free space between two connected devices is equal to 2f. In a further subsidiary aspect, the optical path length of the free space between two connected devices may be at least 2f. In a further subsidiary aspect, the optical path length of the free space between two connected devices may be one or more of: at least f, less than f, equal to f. In a further subsidiary aspect, the total optical path length of the free space between three successively connected devices is equal to 4f. In a further subsidiary aspect, the total optical path length of the free space between three successively connected devices is at least 4f. In a further subsidiary aspect, the total optical path length of the free space between three successively connected devices is one or more of: at least f, less than f, equal to f. In a further subsidiary aspect, a device which performs photodetection is optionally configured to detect one or more of the following: the phase of the light, the amplitude of the light, the polarization of the light, the intensity of the light, both the phase and amplitude of the light, both the phase and intensity of the light, both the phase and polarization of the light, both the amplitude and polarization of the light, both the intensity and polarization of the light; optionally the intensity and the polarization being detected simultaneously; the phase, amplitude, and polarization of the light; and/or the phase, intensity, and polarization of the light.

For example, system 102 is a single processing device system that includes one each of any variation of the spatial light modulator device (input device 104) and any variation of the photo-detection device (output device 106). The input device may take the form of transmitter device of for example figures 56 and 57. The output device may take the form of a receiver device of for example figure 59. One or both of the input and output devices may also incorporate light modulating elements which may be embedded in the silicon photonics as for example illustrated in figure 58. Input device 104 and output device 106 are separated from each other along their common optical axis a distance 2f by a region of free space 108. Other embodiments envisage instead of the free space, a space occupied with gas or liquid appropriate for optical communication between modules or blocks of the kind in question. The term device may in certain embodiments take the form of an integrated chip or part of a chip incorporating itself an arrangement of waveguides and/or modulators as described in any one of the other embodiments. A Fourier transform lens 110 is placed a distance f between input device 104 and output device 106 along their common optical axis. Input data is received through electrical wires, optical fibers, or free space (not shown) by input device 104 and is used to modulate the light within input device 104. Modulated light 112 is emitted from input device 104, is received by lens 110, and becomes converging light 114, which is then incident on the receiving array (not shown) of output device 106. Output data is transferred from system 102 using electrical wires, optical fibers, or free space (not shown) connected to output device 106 on the output stage of system 102. System 102 reflects the functionality of a traditional "2f" optical Fourier transform configuration. A variation of the simplest system 102 includes a replacement of the air in free space 108 with a gas (such as nitrogen), a liquid (such as index-matching fluid), a solid (such as an index-matching glass), or a vacuum. A further variation of one of the simplest systems and all its variations includes zero or more lenses, beam splitters, polarizers, waveplates, waveguides, fibers, microlens arrays, or other optical components along, in certain embodiments, the common optical axis between input device 104 and output device 106.

One configuration of system 102 is a linear operation system, where linear element-wise mathematical operations such as addition, multiplication, etc. are performed either on input data prior to modulation of the light within input device 104 or on the modulated light after modulation by input data within input device 104 prior to emission. A second configuration of system 102 is a nonlinear operation system, where nonlinear element-wise mathematical operations such as quadratic, cubic, etc. are performed either on input data prior to modulation of the light within input device 104 or on the modulated light after modulation by input data within input device 104 prior to emission from device 104. A fourth configuration of system 102 shown in FIG. 2 is a system 102b, a "do-nothing" or buffer system, where the light within input device 104 is modulated directly by input data without additional modulation, is emitted as modulated light 112, passes through Fourier transforming lens 110 followed by Fourier transforming lens 210, and is received as collimated light 212 by output device 106, where it is converted to electrical signals without further modulation. System 102b may in certain embodiments resemble the system 102 except for the increased 4f optical path length between input device 104 and output device 106 and the addition of a second Fourier transforming lens 210 along the common optical axis of input device 104 and output device 106. A fifth configuration of system 102 features any combination or variation of configurations or capabilities of input device 104 and/or output device 106. All variations of system 102 apply to all configurations of system 102. For the avoidance of any doubt, the transmitter device may take the form of the integrated waveguide unit described in any of figures 56 to 58 whilst the receiver device may take the form of the integrated waveguide unit of figure 59. The receiver devices may also take the form of the integrated waveguide units of figures 56 to 58 with appropriate configuration of these.

A more capable optical information system than system 102, a multiple processing device system, that includes one or more of any variations of the spatial light modulator devices arranged in any relative configuration to each other and any variation of the photo-detection device (the output device). The SLM devices and output devices may in certain embodiments be separated from each other by free space. Between the SLM and output devices may be a Fourier transforming lens. Input data is received through electrical wires, optical fibers, or free space by input stages(s) of the system and is used to modulate the light within input device(s) of the system. Output data is transferred out of the system using one or more from the group comprising electrical wires, optical fibers, or free space connected to the output device on the output stage of the system. A variation of the system includes a replacement of one or more of the inter-device free space air gaps with a gas (such as nitrogen), a liquid (such as index-matching fluid), a solid (such as an index-matching glass), or a vacuum, where such replacement of air in one region of free space with another medium does not need to be performed in any other region of free space, nor be the same as the replacement performed in any other region of free space. A further variation of the system and all its variations includes zero or more lenses, beam splitters, polarizers, waveplates, waveguides, fibers, microlens arrays, or other optical components.

FIG. 3 shows a system 302 that is a relatively simple form of a multiple processing device system. System 302 is a dual processing device system that includes an input device 104 and a filter device 304 (where both input device 104 and filter device 304 are any variation of the spatial light modulator device which may be of the kind shown in figures 56 to 58) and an output device 106 (which is any variation of the photo-detection device which may be of the kind shown in figure 59). Input device 104 and filter device 304 are separated from each other along their common optical axis a distance 2f by a region of free space 108. Likewise, filter device 304 and output device 106 are separated from each other along their common optical axis a distance 2f by a region of free space 308. A Fourier transform lens 110 is placed a distance f between input device 104 and filter device 304 along their common optical axis. Likewise, a Fourier transform lens 210 is placed a distance f between filter device 304 and output device 106 along their common optical axis. Because the converging light 114 received by filter device 304 travels internally before emission into free space 308 as modulated diverging light 214, it is not necessary for the optical axis shared by input device 104 and filter device 304 within free space 108 and that shared by filter device 304 and output device 106 within free space 308 to be the same optical axis (i.e. the optical axes may differ). Input data is received through electrical wires, optical cables, or free space (not shown) by input device 104 of system 302 and is used to modulate the light within input device 104 of system 302. Modulated light 112 is emitted from input device 104, is received by lens 110, and becomes converging light 114, which is then incident on the receiving array (not shown) of filter device 304. Filter data is received through electrical wires, optical cables, or free space (not shown) by filter device 304 of system 302 and is used to modulate the light within filter device 304 of system 302. Modulated diverging light 214 is emitted from filter device 304, is received by lens 210, and becomes collimated light 212, which is then incident on the receiving array (not shown) of output device 106. Output data is transferred from system 302 using electrical wires, optical fibers, or free space (not shown) connected to output device 106 on output stage of system 302. System 302 reflects the functionality of a traditional 4f optical Fourier transform configuration. For this embodiment and any of the other embodiments, further variations of the embodiments includes a replacement of the air in free space 108 and/or any other free space (such as free space 308) with a gas (such as nitrogen), a liquid (such as index-matching fluid), a solid (such as an index-matching glass), or a vacuum, where such replacement of air in one region of free space with another medium does not need to be performed in any other region of free space, nor be the same as the replacement performed in any other region of free space. A further variation of the system of any embodiments and all its variations includes zero or more lenses, beam splitters, polarizers, waveplates, waveguides, fibers, microlens arrays, or other optical components along the common optical axis between input device 104 and any other device (such as filter device 304) and/or along the common optical axis between any device (such as filter device 304) and output device 106.

One configuration of system 302 is a linear operation system, where linear element-wise mathematical operations such as addition, multiplication, etc. are performed either on input data prior to modulation of the light within input device 104 or on the modulated light after modulation by input data within input device 104 prior to emission, and/or are performed either on filter data prior to modulation of the light within filter device 304 or on the modulated light after modulation by filter data within filter device 304 prior to emission. A second configuration of system 302 is a nonlinear operation system, where nonlinear element-wise mathematical operations such as quadratic, cubic, etc. are performed either on input data prior to modulation of the light within input device 104 or on the modulated light after modulation by input data within input device 104 prior to emission from device 104, and/or are performed either on filter data prior to modulation of the light within filter device 304 or on the modulated light after modulation by filter data within filter device 304 prior to emission. A third configuration of system 302 is a "do-nothing" or buffer system, where the light within input device 104 is modulated directly by input data without any additional modulation before emission, and filter device 304 performs no modulation of the light as it passes through filter device 304 and is emitted as diverging light 214. This configuration is similar to system 102b except for the insertion of filter device 304 (which performs no modulation and merely relays data between receiving and emitting surfaces) at a distance 2f between both input device 104 and filter device 106. A fourth configuration of system 302 features any combination or variation of configurations or capabilities of input device 104, of filter device 304, and/or of output device 106. All variations of the system 302 apply to all configurations of the system 302.

In certain embodiments, the transmitter device, the filter device and the receive device may comprise waveguides and/or modulators which are integrated into a common block, module or chip. The block or module being arranged in certain embodiments to emit/receive light on either of the blocks interfaces which may be contiguous with free space, or neighbouring a space with gas or liquid appropriate for optical communication between modules or blocks of the kind in question.

FIG. 4 shows a system 402 that is a more advanced form of the multiple processing device system. system 402 is a two-input dual processing device system that extends the functionality of system 302 by adding an additional input device 404 (where input device 404 is any variation of the spatial light modulator device). Both input device 104 and input device 404 are arranged such that each of their emission surfaces supply input to the filter device 304 via separate Fourier transform lenses. Both input devices may take the form of integrated waveguide units as described with respect to figures 56 to 58 whilst output device may likewise take the form of integrated waveguide units as described with respect to figure 59. System 402 allows calculation of the Fourier transform optically for two different sets of input data simultaneously, whose modulated signal are both are combined within the filter device 304 as described. Input device 104 and filter device 304 are separated from each other along their common optical axis a distance 2f by a region of free space 108. Likewise, input device 404 and filter device 304 are separated from each other along their common optical axis a distance 2f by a region of free space 408. Likewise, filter device 304 and output device 106 are separated from each other along their common optical axis a distance 2f by a region of free space 308. A Fourier transform lens 110 is placed a distance f between input device 104 and filter device 304 along their common optical axis. Likewise, a Fourier transform lens 410 is placed a distance f between input device 404 and filter device 304 along their common optical axis. Likewise, a Fourier transform lens 210 is placed a distance f between filter device 304 and output device 106 along their common optical axis. Because the converging light 114 and converging light 414 received by filter device 304 travels internally before emission into free space 308 as modulated diverging light 214, it is not necessary for the optical axis shared by input device 104 and filter device 304 within free space 108, that shared by input device 404 and filter device 304 within free space 408, and that shared by filter device 304 and output device 106 within free space 308 to be the same optical axis (i.e. the optical axes may differ). Input data is received through electrical wires, optical cables, or free space (not shown) by input device 104 of system 402 and is used to modulate the light within input device 104 of system 402. Modulated light 112 is emitted from input device 104, is received by lens 110, and becomes converging light 114, which is then incident on a receiving array (not shown) of filter device 304. Likewise, additional input data, which may or may not be the same input data as that received by input device 104, is received through electrical wires, optical cables, or free space (not shown) by input device 404 of system 402 and is used to modulate the light within input device 404 of system 402. Modulated light 412 is emitted from input device 404, is received by lens 410, and becomes converging light 414, which is then incident on a receiving array (not shown) of filter device 304. Converging light 114 and converging light 414 received by filter device 304 are mixed inside filter device 304 (i.e. filter device 304 uses light received from converging light 414 to modulate light received from converging light 114 within filter device 304). Modulated diverging light 214 is emitted from filter device 304, is received by lens 210, and becomes collimated light 212, which is then incident on the receiving array (not shown) of output device 106. Output data is transferred from system 402 using electrical wires, optical fibers, or free space (not shown) connected to output device 106 on output stage of system 402. System 402 reflects the functionality of a traditional 4f optical Fourier transform configuration. A variation of the simplest system 402 includes a replacement of the air in free space 108 and/or free space 308 and/or free space 408 with a gas (such as nitrogen), a liquid (such as index-matching fluid), a solid (such as an index-matching glass), or a vacuum, where such replacement of air in one region of free space with another medium does not need to be performed in any other region of free space, nor be the same as the replacement performed in any other region of free space. A further variation of the system 402 and all its variations includes zero or more lenses, beam splitters, polarizers, waveplates, waveguides, fibers, micro-lens arrays, or other optical components along the common optical axis between input device 104 and filter device 304 and/or along the common optical axis between input device 404 and filter device 304 and/or along the common optical axis between filter device 304 and output device 106.

One configuration of system 402 is a linear operation system, where linear element-wise mathematical operations such as addition, multiplication, etc. are performed either on input data prior to modulation of the light within input device 104 or on the modulated light after modulation by input data within input device 104 prior to emission, and/or are performed either on input data prior to modulation of the light within input device 404 or on the modulated light after modulation by input data within input device 404 prior to emission, and/or are performed either on received light prior to modulation of the light within filter device 304 or on the modulated light after modulation by filter data within filter device 304 prior to emission. A second configuration of system 402 is a nonlinear operation system, where nonlinear element-wise mathematical operations such as quadratic, cubic, etc. are performed either on input data prior to modulation of the light within input device 104 or on the modulated light after modulation by input data within input device 104 prior to emission from device 104, and/or are performed either on input data prior to modulation of the light within input device 404 or on the modulated light after modulation by input data within input device 404 prior to emission, and/or are performed either on received light prior to modulation of the light within filter device 304 or on the modulated light after modulation by filter data within filter device 304 prior to emission. A third configuration of system 402 is a "do-nothing" or buffer system, where the light within input device 104 is modulated directly by input data without any additional modulation before emission, input device 404 emits no light or emits uniformly modulated light, and filter device 304 performs no modulation of the light as it passes through filter device 304 and is emitted as diverging light 214. A fourth configuration of the simplest system 402 features any combination or variation of configurations or capabilities of input device 104, of input device 404, of filter device 304, and/or of output device 106. All variations of the system 402 apply to all configurations of the system 402. A configuration of the multiple processing device system may contain any number of combinations or variations of any configuration of any of the single or multiple device processing device systems.

In an embodiment of an optical information processing system, input data is received through one or multiple fiber-optic cables coupled directly into the waveguides of the input stage of the system, and is output from the output stage of the system onto one or multiple fiber-optic cables, allowing the system to operate at speeds up to and including optical-fiber transmission speeds. The input stage and output stage includes one or more of any variations of the spatial light modulator devices arranged in any relative configuration to each other. Likewise, between the input and output stage are any number of any variations of the spatial light modulator devices arranged in any relative configuration to each other. In a variation of this system, there may be a device to decode and/or encode data in a format suitable for transmission over fiber optic cables, such as a multiplexer and/or demultiplexer on the output and/or input sides of the system respectively.

In certain embodiments, the filter device may comprise waveguides and/or modulators which are integrated into a common block, module or chip. The block or module being arranged in certain embodiments to emit/receive light on either of the blocks interfaces which may be contiguous with free space, or neighbouring a space with gas or liquid appropriate for optical communication between modules or blocks of the kind in question. In further embodiments, the filter device incorporates a plurality of input interfaces and one or more output interfaces.

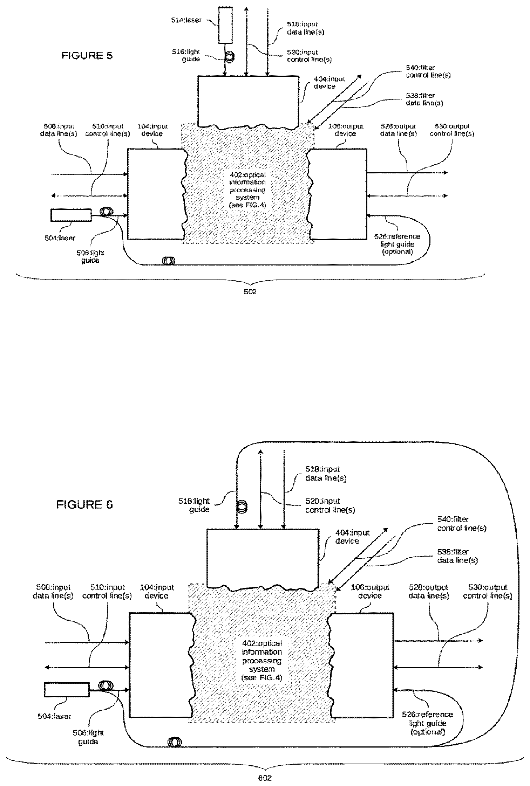

FIG. 5 shows a configuration 502 of system 402 where both input devices have separate external lasers providing data carrier light and/or pump energy for optically-induced signal amplification. External laser 504 generates coherent light and transmits it to input device 104 via light guide 506, where light guide 506 may be a waveguide, optical fiber, plasmonic waveguide, or any other light propagating medium. Input data (not shown), that is used by input device 104 internally to modulate light supplied on light guide 506, is supplied via input data line(s) 508, where input data line(s) 508 may be electrical wires, optical fibers, waveguides, and/or any other data carrying medium. Likewise control data (not shown) used to control and/or modify operating behavior of input device 104 and/or to read state, statistical, and/or other information from input device 104 is transmitted to and/or from input device 104 over input control line(s) 510, where input control line(s) 510 may be electrical wires, optical fibers, waveguides, and/or any other data carrying medium. Likewise, external laser 514 generates coherent light and transmits it to input device 404 via light guide 516, where light guide 516 may be a waveguide, optical fiber, plasmonic waveguide, or any other light propagating medium. Input devices 104 and 404 may take the form of the devices of figures 56 to 58 whilst output device may take the form of the output device of figure 59. Devices 104, 404 and 106 may be integrated onto a common silicon photonics system or chip. Input data (not shown), that is used by input device 404 internally to modulate light supplied on light guide 516, is supplied via input data line(s) 518, where input data line(s) 518 may be electrical wires, optical fibers, waveguides, and/or any other data carrying medium. Likewise control data (not shown) used to control and/or modify operating behavior of input device 404 and/or to read state, statistical, and/or other information from input device 404 is transmitted to and/or from input device 404 over input control line(s) 520, where input control line(s) 520 may be electrical wires, optical fibers, waveguides, and/or any other data carrying medium. A reference light guide 526 may optionally be connected to output device 106 in order to supply a reference signal to be used by output device 106 when determining how collimated light 212 (FIG. 4) has changed relative to the original laser light properties as the modulated light propagated through system 402, where light guide 526 may be a waveguide, optical fiber, plasmonic waveguide, or any other light propagating medium. Output data (not shown) is transmitted from output device 106 in configuration 502 over output data line(s) 528, where output data line(s) 528 may be electrical wires, optical fibers, waveguides, and/or any other data carrying medium. Likewise control data (not shown) used to control and/or modify operating behavior of output device 106 and/or to read state, statistical, and/or other information from output device 106 is transmitted to and/or from output device 106 over output control line(s) 530, where output control line(s) 530 may be electrical wires, optical fibers, waveguides, and/or any other data carrying medium. Filter data (not shown) is transmitted to filter device 304 (FIG. 4) in configuration 502 over filter data line(s) 538, where filter data line(s) 538 may be electrical wires, optical fibers, waveguides, and/or any other data carrying medium. Likewise control data (not shown) used to control and/or modify operating behavior of filter device 304 (FIG. 4) and/or to read state, statistical, and/or other information from filter device 304 (FIG. 4) is transmitted to and/or from filter device 304 (FIG. 4) over filter control line(s) 540, where filter control line(s) 540 may be electrical wires, optical fibers, waveguides, and/or any other data carrying medium. Filter device 304 (FIG. 4) may have an internal on-device laser (not shown) and/or external laser (not shown) providing data carrier light and/or pump energy for optically-induced signal amplification for filter device 304 (FIG. 4).

In one variation of configuration 502, instead of providing a data carrier signal, laser 504 supplies pump energy to amplify signals received over fiber and/or waveguide input data line(s) 508 that may or may not be directly coupled to receiving elements or a receiving array (not shown) of input device 104, where there may be as few as one fiber or waveguide coupled to input device 104 or as many as one fiber or waveguide per receiving element on the receiving array (not shown) of input device 104, where there may be any number of receiving elements in the receiving array of input device 104. In a second variation of configuration 502, instead of providing a data carrier signal, laser 514 supplies pump energy to amplify signals received over fiber and/or waveguide input data line(s) 518 that may or may not be directly coupled to receiving elements or a receiving array (not shown) of input device 404, where there may be as few as one fiber or waveguide coupled to input device 404 or as many as one fiber or waveguide per receiving element on the receiving array (not shown) of input device 404, where there may be any number of receiving elements in the receiving array of input device 404. A third variation combines the first and second variations of configuration 502. Any variation of configuration 502 may be combined into a new variation of configuration 502. In certain embodiments, the devices may comprise waveguides and/or modulators which are integrated into a common block, module or chip. The block or module being arranged in certain embodiments to emit/receive light on either of the blocks interfaces which may be contiguous with free space, or neighbouring a space with gas or liquid appropriate for optical communication between modules or blocks of the kind in question. In certain embodiments, the lasers are integral with said block, module or chip whereas in preferred embodiments they may be disposed externally from said block. In certain embodiments, the lasers input via a waveguide which is partly external to said block.

FIG. 6 shows a configuration 602 of system 402 where the same external laser provides data carrier light and/or pump energy for optically-induced signal amplification for both input devices. The description for configuration 602 is identical to configuration 502 except that light guide 516 now branches directly from light guide 506 and transmits light from laser 504. Light between light guide 506, light guide 516, and/or optional reference light guide 526 may be split in any ratio. All other descriptions of devices and variations for configuration 502 apply to configuration 602.

In one variation of configuration 602, instead of providing a data carrier signal, laser 504 supplies pump energy to amplify signals received over fiber and/or waveguide input data line(s) 508 that may or may not be directly coupled to receiving elements or a receiving array (not shown) of input device 104, where there may be as few as one fiber or waveguide coupled to input device 104 or as many as one fiber or waveguide per receiving element on the receiving array (not shown) of input device 104, where there may be any number of receiving elements in the receiving array of input device 104. In a second variation of configuration 602, instead of providing a data carrier signal, laser 504 supplies pump energy to amplify signals received over fiber and/or waveguide input data line(s) 518 that may or may not be directly coupled to receiving elements or a receiving array (not shown) of input device 404, where there may be as few as one fiber or waveguide coupled to input device 404 or as many as one fiber or waveguide per receiving element on the receiving array (not shown) of input device 404, where there may be any number of receiving elements in the receiving array of input device 404. A third variation combines the first and second variations of configuration 602. Any variation of configuration 602 may be combined into a new variation of configuration 602. In certain embodiments, the device or devices may comprise waveguides and/or modulators which are integrated into a common or a plurality of blocks, modules or chips. The block or module being arranged in certain embodiments to emit/receive light on either of the blocks interfaces which may be contiguous with free space, or neighbouring a space with gas or liquid appropriate for optical communication between modules or blocks of the kind in question.

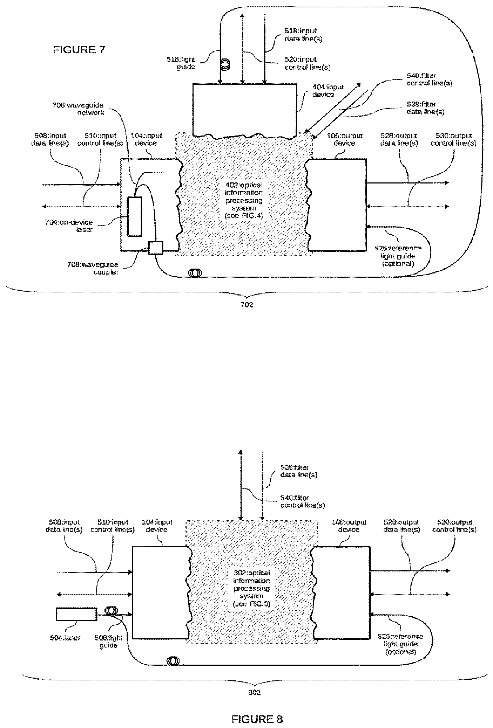

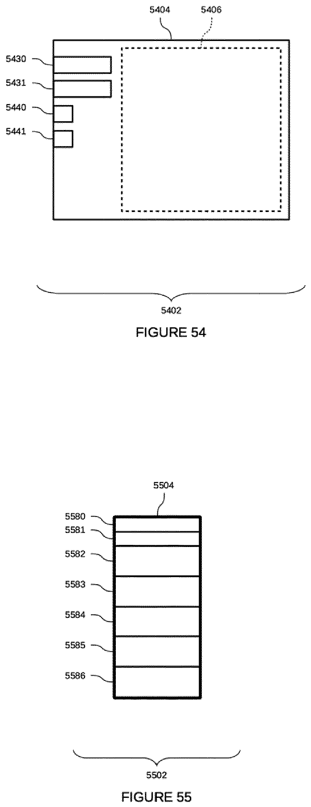

FIG. 7 shows a configuration 702 of system 402 where an internal on-device laser 704 provides data carrier light and/or pump energy for optically-induced signal amplification for both input devices. The description for configuration 702 is identical to configuration 602 except that now laser light is generated from on-device laser 704, where on-device laser 704 may be a diode laser, VCSEL, or any other chip-scale laser device that is mounted, bonded, attached, embedded, or fabricated within or on input device 104 and provides light to input device 104 via waveguide network 706. The integrated input device 104 may be configured as per the embodiment of figures 55 to 58 whilst output device 106 may also be configured as per the embodiment of figure 59. Laser light from on-device laser 704 is transmitted to light guide 516 and optional reference light guide 526 via a branch of waveguide network 706 to waveguide coupler 708 and finally light guide 516 and optional reference light guide 526, where waveguide coupler 708 may be any device or component that is capable of coupling a waveguide to light guide 516 and/or optional reference light guide 526, such as a waveguide-to-fiber coupler or a waveguide-to-waveguide coupler. Light between branches in waveguide network 706, light guide 516, and/or optional reference light guide 526 may be split in any ratio. All other descriptions of devices and variations for configuration 602 apply to configuration 702. In one variation of configuration 702, instead of providing a data carrier signal, laser 704 supplies pump energy to amplify signals received over fiber and/or waveguide input data line(s) 508 that may or may not be directly coupled to receiving elements or a receiving array (not shown) of input device 104, where there may be as few as one fiber or waveguide coupled to input device 104 or as many as one fiber or waveguide per receiving element on the receiving array (not shown) of input device 104, where there may be any number of receiving elements in the receiving array of input device 104. In a second variation of configuration 702, instead of providing a data carrier signal, laser 704 supplies pump energy to amplify signals received over fiber and/or waveguide input data line(s) 518 that may or may not be directly coupled to receiving elements or a receiving array (not shown) of input device 404, where there may be as few as one fiber or waveguide coupled to input device 404 or as many as one fiber or waveguide per receiving element on the receiving array (not shown) of input device 404, where there may be any number of receiving elements in the receiving array of input device 404. A third variation combines the first and second variations of configuration 702. Any variation of configuration 702 may be combined into a new variation of configuration 702. In certain preferred embodiments, the device or devices may comprise waveguides and/or modulators which are integrated into a common or a plurality of blocks, modules or chips in order to provide a silicon photonics integrated waveguide and modulator solution. The block or module being arranged in certain embodiments to emit/receive light on either of the blocks interfaces which may be contiguous with free space, or neighbouring a space with gas or liquid appropriate for optical communication between modules or blocks of the kind in question.

FIG. 8 shows a configuration 802 of system 302 where an external laser provides data carrier light and/or pump energy for optically-induced signal amplification. Configuration 802 is similar to configuration 502, except that the core optical information processing system is system 302 in configuration 802, so there is no secondary input device. For configuration 802, external laser 504 generates coherent light and transmits it to input device 104 via light guide 506, where light guide 506 may be a waveguide, optical fiber, plasmonic waveguide, or any other light propagating medium. Input data (not shown), that is used by input device 104 internally to modulate light supplied on light guide 506, is supplied via input data line(s) 508, where input data line(s) 508 may be electrical wires, optical fibers, waveguides, and/or any other data carrying medium. Likewise control data (not shown) used to control and/or modify operating behavior of input device 104 and/or to read state, statistical, and/or other information from input device 104 is transmitted to and/or from input device 104 over input control line(s) 510, where input control line(s) 510 may be electrical wires, optical fibers, waveguides, and/or any other data carrying medium. Input device 104 and output device 106 may be configured as arrays of integrated waveguides as described with reference to figures 56 to 59. A reference light guide 526 may optionally be connected to output device 106 in order to supply a reference signal to be used by output device 106 when determining how collimated light 212 (FIG. 3) has changed relative to the original laser light properties as the modulated light propagated through system 302, where light guide 526 may be a waveguide, optical fiber, plasmonic waveguide, or any other light propagating medium. Output data (not shown) is transmitted from output device 106 in configuration 802 over output data line(s) 528, where output data line(s) 528 may be electrical wires, optical fibers, waveguides, and/or any other data carrying medium. Likewise control data (not shown) used to control and/or modify operating behavior of output device 106 and/or to read state, statistical, and/or other information from output device 106 is transmitted to and/or from output device 106 over output control line(s) 530, where output control line(s) 530 may be electrical wires, optical fibers, waveguides, and/or any other data carrying medium.

Filter data (not shown) is transmitted to filter device 304 (FIG. 3) in configuration 802 over filter data line(s) 538, where filter data line(s) 538 may be electrical wires, optical fibers, waveguides, and/or any other data carrying medium. Likewise control data (not shown) used to control and/or modify operating behavior of filter device 304 (FIG. 3) and/or to read state, statistical, and/or other information from filter device 304 (FIG. 3) is transmitted to and/or from filter device 304 (FIG. 3) over filter control line(s) 540, where filter control line(s) 540 may be electrical wires, optical fibers, waveguides, and/or any other data carrying medium. Filter device 304 (FIG. 3) may have an internal on-device laser (not shown) and/or external laser (not shown) providing data carrier light and/or pump energy for optically-induced signal amplification for filter device 304 (FIG. 3).

In one variation of configuration 802, instead of providing a data carrier signal, laser 504 supplies pump energy to amplify signals received over fiber and/or waveguide input data line(s) 508 that may or may not be directly coupled to receiving elements or a receiving array (not shown) of input device 104, where there may be as few as one fiber or waveguide coupled to input device 104 or as many as one fiber or waveguide per receiving element on the receiving array (not shown) of input device 104, where there may be any number of receiving elements in the receiving array of input device 104. Any variation of configuration 802 may be combined into a new variation of configuration 802. In certain embodiments, the device or devices may comprise waveguides and/or modulators which are integrated into a common or a plurality of blocks, modules or chips preferably silicon photonics chips. The block or module being arranged in certain embodiments to emit/receive light on either of the blocks interfaces which may be contiguous with free space, or neighbouring a space with gas or liquid appropriate for optical communication between modules or blocks of the kind in question.

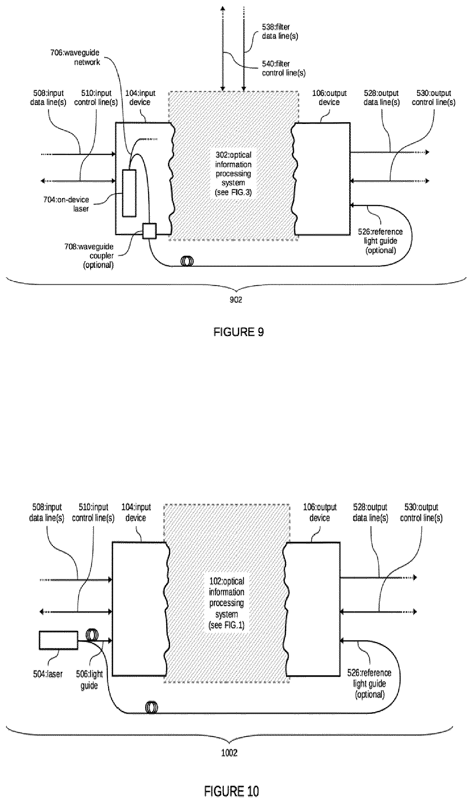

FIG. 9 shows a configuration 902 of system 302 where an internal on-device laser 704 provides data carrier light and/or pump energy for optically-induced signal amplification for both input devices. The description for configuration 902 is identical to configuration 802 except that now laser light is generated from on-device laser 704, where on-device laser 704 may be a diode laser, VCSEL, or any other chip-scale laser device that is mounted, bonded, attached, embedded, or fabricated within or on input device 104 and provides light to input device 104 via waveguide network 706. For the avoidance of any doubt, in preferred embodiments, the input and output devices may be configured as per the embodiments of figures 56 to 59. Laser light from on-device laser 704 is transmitted to optional reference light guide 526 via a branch of waveguide network 706 to optional waveguide coupler 708 and finally optional reference light guide 526, where optional waveguide coupler 708 may be any device or component that is capable of coupling a waveguide to optional reference light guide 526, such as a waveguide-to-fiber coupler or a waveguide-to-waveguide coupler. Light between branches in waveguide network 706 and/or optional reference light guide 526 may be split in any ratio. All other descriptions of devices and variations for configuration 802 apply to configuration 902.

In one variation of configuration 902, instead of providing a data carrier signal, laser 704 supplies pump energy to amplify signals received over fiber and/or waveguide input data line(s) 508 that may or may not be directly coupled to receiving elements or a receiving array (not shown) of input device 104, where there may be as few as one fiber or waveguide coupled to input device 104 or as many as one fiber or waveguide per receiving element on the receiving array (not shown) of input device 104, where there may be any number of receiving elements in the receiving array of input device 104. In another variation of configuration 902, input device 104 has no optional waveguide coupler 708. Any variation of configuration 902 may be combined into a new variation of configuration 902. In certain embodiments, the device or devices may comprise waveguides and/or modulators which are integrated into a common or a plurality of blocks, modules or chips. The block or module being arranged in certain embodiments to emit/receive light on either of the blocks interfaces which may be contiguous with free space, or neighbouring a space with gas or liquid appropriate for optical communication between modules or blocks of the kind in question.

FIG. 10 shows a configuration 1002 of system 102 where an external laser provides data carrier light and/or pump energy for optically-induced signal amplification. Configuration 1002 is similar to configuration 802, except that the core optical information processing system is system 102 in configuration 1002, so there is no filter device. For configuration 1002, external laser 504 generates coherent light and transmits it to input device 104 via light guide 506, where light guide 506 may be a waveguide, optical fiber, plasmonic waveguide, or any other light propagating medium. Input data (not shown), that is used by input device 104 internally to modulate light supplied on light guide 506, is supplied via input data line(s) 508, where input data line(s) 508 may be electrical wires, optical fibers, waveguides, and/or any other data carrying medium. Likewise control data (not shown) used to control and/or modify operating behavior of input device 104 and/or to read state, statistical, and/or other information from input device 104 is transmitted to and/or from input device 104 over input control line(s) 510, where input control line(s) 510 may be electrical wires, optical fibers, waveguides, and/or any other data carrying medium. A reference light guide 526 may optionally be connected to output device 106 in order to supply a reference signal to be used by output device 106 when determining how converging light 114 (FIG. 1) has changed relative to the original laser light properties as the modulated light propagated through system 102, where light guide 526 may be a waveguide, optical fiber, plasmonic waveguide, or any other light propagating medium. Output data (not shown) is transmitted from output device 106 in configuration 1002 over output data line(s) 528, where output data line(s) 528 may be electrical wires, optical fibers, waveguides, and/or any other data carrying medium. Likewise control data (not shown) used to control and/or modify operating behavior of output device 106 and/or to read state, statistical, and/or other information from output device 106 is transmitted to and/or from output device 106 over output control line(s) 530, where output control line(s) 530 may be electrical wires, optical fibers, waveguides, and/or any other data carrying medium.

In one variation of configuration 1002, instead of providing a data carrier signal, laser 504 supplies pump energy to amplify signals received over fiber and/or waveguide input data line(s) 508 that may or may not be directly coupled to receiving elements or a receiving array (not shown) of input device 104, where there may be as few as one fiber or waveguide coupled to input device 104 or as many as one fiber or waveguide per receiving element on the receiving array (not shown) of input device 104, where there may be any number of receiving elements in the receiving array of input device 104. Any variation of configuration 1002 may be combined into a new variation of configuration 1002. Input device 104 and output device 106 may be configured as the units described with reference to figures 56 to 59. In certain embodiments, the device or devices may comprise waveguides and/or modulators which are integrated into a common or a plurality of blocks, modules or chips. The block or module being arranged in certain embodiments to emit/receive light on either of the blocks interfaces which may be contiguous with free space, or neighbouring a space with gas or liquid appropriate for optical communication between modules or blocks of the kind in question.

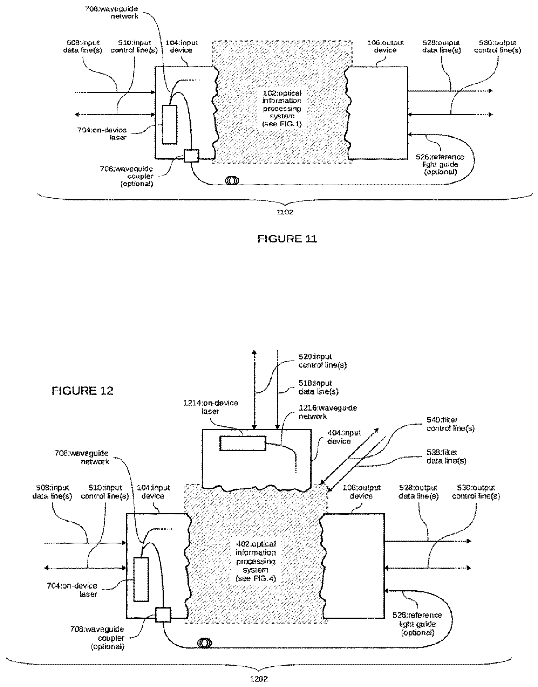

FIG. 11 shows a configuration 1102 of system 102 where an internal on-device laser 704 provides data carrier light and/or pump energy for optically-induced signal amplification for both input devices. The description for configuration 1102 is identical to configuration 1002 except that now laser light is generated from on-device laser 704, where on-device laser 704 may be a diode laser, VCSEL, or any other chip-scale laser device that is mounted, bonded, attached, embedded, or fabricated within or on input device 104 and provides light to input device 104 via waveguide network 706. Laser light from on-device laser 704 is transmitted to optional reference light guide 526 via a branch of waveguide network 706 to optional waveguide coupler 708 and finally to optional reference light guide 526, where optional waveguide coupler 708 may be any device or component that is capable of coupling a waveguide to optional reference light guide 526, such as a waveguide-to-fiber coupler or a waveguide-to-waveguide coupler. Light between branches in waveguide network 706 and/or optional reference light guide 526 may be split in any ratio. All other descriptions of devices and variations for configuration 1002 apply to configuration 1102.

In one variation of configuration 1102, instead of providing a data carrier signal, laser 704 supplies pump energy to amplify signals received over fiber and/or waveguide input data line(s) 508 that may or may not be directly coupled to receiving elements or a receiving array (not shown) of input device 104, where there may be as few as one fiber or waveguide coupled to input device 104 or as many as one fiber or waveguide per receiving element on the receiving array (not shown) of input device 104, where there may be any number of receiving elements in the receiving array of input device 104. In another variation of configuration 1102, input device 104 has no optional waveguide coupler 708. Any variation of configuration 1102 may be combined into a new variation of configuration 1102. In certain embodiments, the device or devices may comprise waveguides and/or modulators which are integrated into a common or a plurality of blocks, modules or chips. One or more of the devices may take the form of those described with reference to figures 56 to 59. The block or module being arranged in certain embodiments to emit/receive light on either of the blocks interfaces which may be contiguous with free space, or neighbouring a space with gas or liquid appropriate for optical communication between modules or blocks of the kind in question.

FIG. 12 shows a configuration 1202 of system 402 where both input devices have their own internal on-device lasers providing data carrier light and/or pump energy for optically-induced signal amplification. The description for configuration 1202 is identical to configuration 502 except that now laser light is generated from on-device laser 704 for input device 104 and from on-device laser 1214 for input device 404. On-device laser 704 may be a diode laser, VCSEL, or any other chip-scale laser device that is mounted, bonded, attached, embedded, or fabricated within or on input device 104 and provides light to input device 104 via waveguide network 706. Likewise, on-device laser 1214 may be a diode laser, VCSEL, or any other chip-scale laser device that is mounted, bonded, attached, embedded, or fabricated within or on input device 404 and provides light to input device 404 via waveguide network 1216. Laser light from on-device laser 704 is transmitted to optional reference light guide 526 via a branch of waveguide network 706 to optional waveguide coupler 708 and finally optional reference light guide 526, where optional waveguide coupler 708 may be any device or component that is capable of coupling a waveguide to optional reference light guide 526, such as a waveguide-to-fiber coupler or a waveguide-to-waveguide coupler. Light between branches in waveguide network 706 and/or optional reference light guide 526 may be split in any ratio. All other descriptions of devices and variations for configuration 502 apply to configuration 1202. In one variation of configuration 1202, instead of providing a data carrier signal, laser 704 supplies pump energy to amplify signals received over fiber and/or waveguide input data line(s) 508 that may or may not be directly coupled to receiving elements or a receiving array (not shown) of input device 104, where there may be as few as one fiber or waveguide coupled to input device 104 or as many as one fiber or waveguide per receiving element on the receiving array (not shown) of input device 104, where there may be any number of receiving elements in the receiving array of input device 104. In a second variation of configuration 1202, instead of providing a data carrier signal, laser 1214 supplies pump energy to amplify signals received over fiber and/or waveguide input data line(s) 518 that may or may not be directly coupled to receiving elements or a receiving array (not shown) of input device 404, where there may be as few as one fiber or waveguide coupled to input device 404 or as many as one fiber or waveguide per receiving element on the receiving array (not shown) of input device 404, where there may be any number of receiving elements in the receiving array of input device 404. In a third variation of configuration 1202, input device 104 has no optional waveguide coupler 708. Any variation of configuration 1202 may be combined into a new variation of configuration 1202. Any of the devices may preferably be of the kind described with reference to figures 56 to 59.

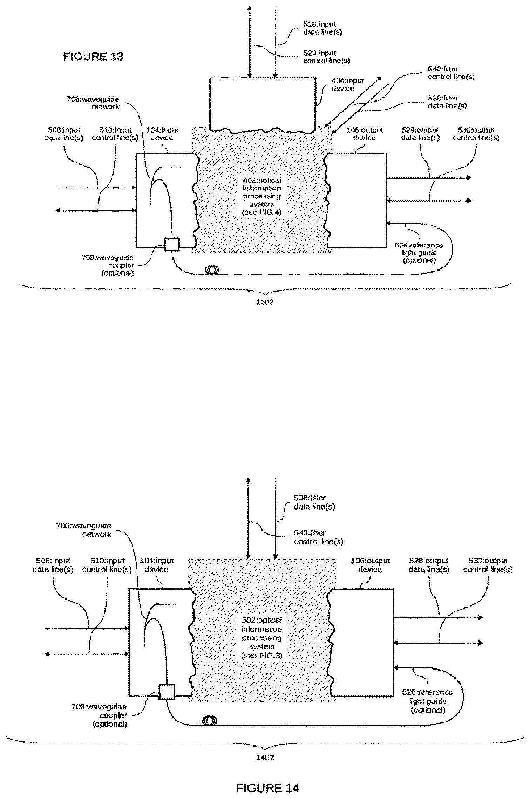

FIG. 13 shows a configuration 1302 of system 402 where laser light is received by the system through input data line(s) 508, input data lines(2) 518, and/or filter data line(s) 538. The description for configuration 1302 is identical to configuration 1202 except that there are no internal lasers on input device 104, input device 404, nor filter device 304 (FIG. 4). Input data line(s) 508 may or may not be directly coupled to receiving elements or a receiving array (not shown) of input device 104, where there may be as few as one fiber or waveguide coupled to input device 104 or as many as one fiber or waveguide per receiving element on the receiving array of input device 104, where there may be any number of receiving elements in the receiving array of input device 104. Likewise, input data line(s) 518 may or may not be directly coupled to receiving elements or a receiving array (not shown) of input device 404, where there may be as few as one fiber or waveguide coupled to input device 404 or as many as one fiber or waveguide per receiving element on the receiving array of input device 404, where there may be any number of receiving elements in the receiving array of input device 404. Filter data line(s) 538 may or may not be directly coupled to receiving elements or a receiving array (not shown) of filter device 304 (FIG. 4), where there may be as few as one fiber or waveguide coupled to filter device 304 (FIG. 4) or as many as one fiber or waveguide per receiving element on the receiving array of filter device 304 (FIG. 4), where there may be any number of receiving elements in the receiving array of filter device 304 (FIG. 4). Filter data lines(s) 538 are not required to carry light and may instead be electrical wires or any other data carrying medium. All other descriptions of devices and variations for configuration 1202 apply to configuration 1302. Any of the devices may preferably be of the kind described with reference to figures 56 to 59.

FIG. 14 shows a configuration 1402 of system 302 where laser light is received by the system through input data line(s) 508 and/or filter data line(s) 538. The description for configuration 1402 is identical to configuration 902 except that there are no internal lasers on input device 104 nor filter device 304 (FIG. 3). Input data line(s) 508 may or may not be directly coupled to receiving elements or a receiving array (not shown) of input device 104, where there may be as few as one fiber or waveguide coupled to input device 104 or as many as one fiber or waveguide per receiving element on the receiving array of input device 104, where there may be any number of receiving elements in the receiving array of input device 104. Filter data line(s) 538 may or may not be directly coupled to receiving elements or a receiving array (not shown) of filter device 304 (FIG. 3), where there may be as few as one fiber or waveguide coupled to filter device 304 (FIG. 3) or as many as one fiber or waveguide per receiving element on the receiving array of filter device 304 (FIG. 3), where there may be any number of receiving elements in the receiving array of filter device 304 (FIG. 3). Filter data lines(s) 538 are not required to carry light and may instead be electrical wires or any other data carrying medium. All other descriptions of devices and variations for configuration 902 apply to configuration 1402. Any of the devices may preferably be of the kind described with reference to figures 56 to 59.

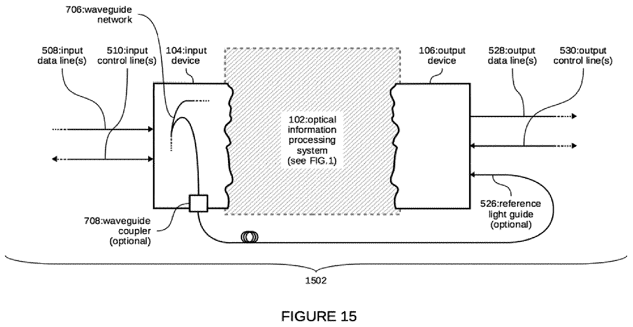

FIG. 15 shows a configuration 1502 of system 102 where laser light is received by the system through input data line(s) 508. The description for configuration 1502 is identical to configuration 1102 except that there are no internal lasers on input device 104. Input data line(s) 508 may or may not be directly coupled to receiving elements or a receiving array (not shown) of input device 104, where there may be as few as one fiber or waveguide coupled to input device 104 or as many as one fiber or waveguide per receiving element on the receiving array of input device 104, where there may be any number of receiving elements in the receiving array of input device 104. All other descriptions of devices and variations for configuration 1102 apply to configuration 1502. Any of the devices may preferably be of the kind described with reference to figures 56 to 59.

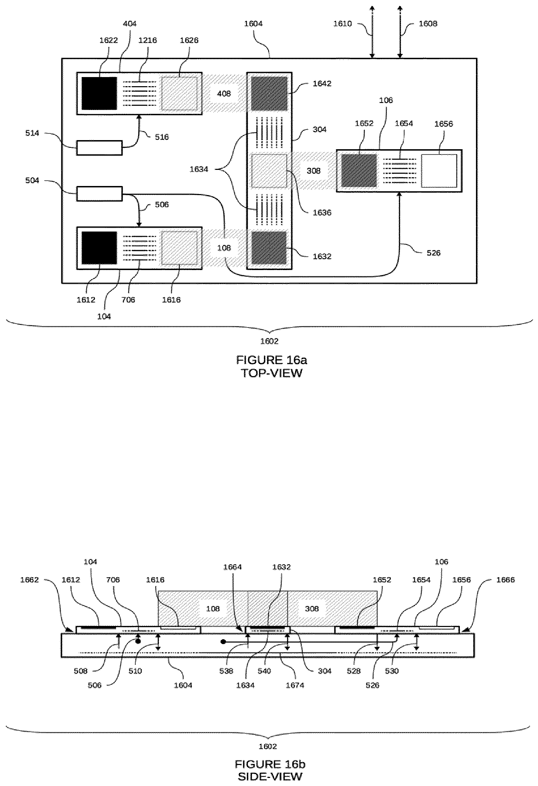

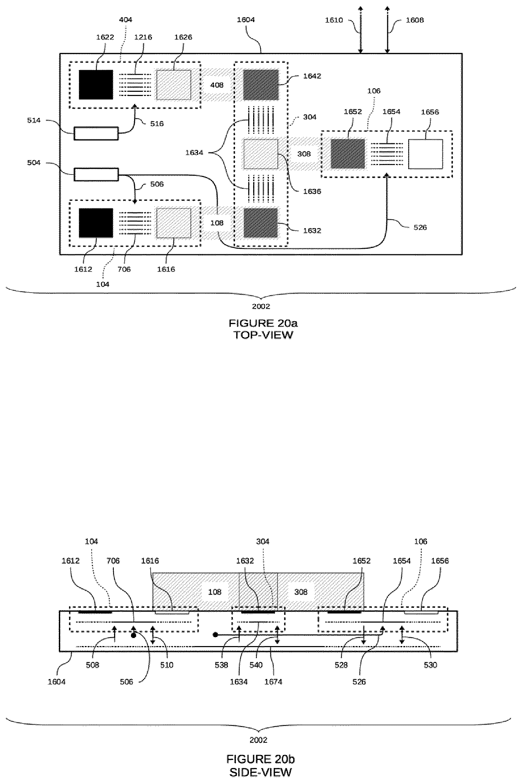

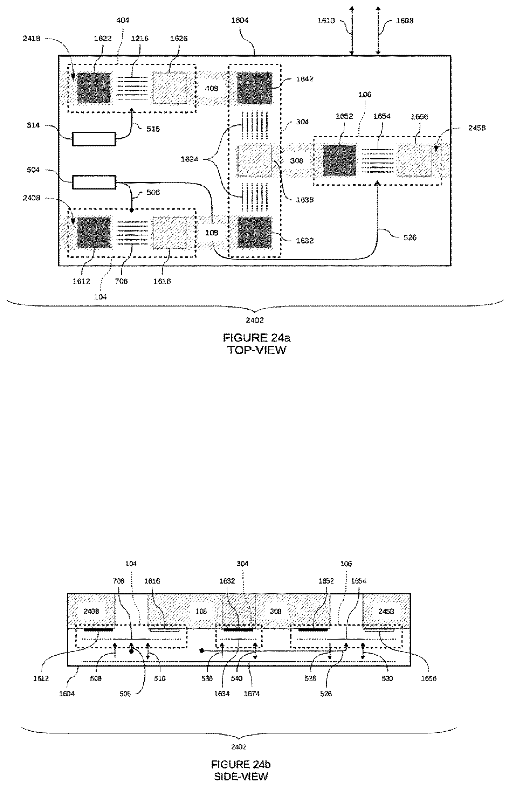

By combining any variation of any configuration of any system or device it is possible to form additional variations of configurations and/or systems. Additionally, any variation, configuration, system, or device may be connected together in any quantity to form more complex variations, configurations, or systems. The systems and system configurations as described may be constructed using electrically discrete components and devices, and discrete optics, such as is traditionally constructed upon an optical workbench. However, the systems and system configurations may be constructed using methods that allow interconnection between some or all electrical and/or optical components using an electrical, optical, or electro-optic carrier device with functionality similar to that of a printed circuit board providing electrical interconnection of mounted electrical components and devices, and may be a printed circuit board that supports optical interconnect and/or a carrier chip, hereafter referred to as a carrier chip. Such interconnected components may lie on the same carrier chip as each other, with their free-space optical receiving and emitting surfaces parallel to their electro-optic connection surfaces, perpendicular to their electro-optic connection surface, or at some other orientation. In all cases, the optical components would compensate for the various component and device orientations by use of mirrors, beamsplitters, and/or other optical components. Some examples of system configurations constructed using this carrier chip method are given in FIG. 16a-19b, 21a-23b, 26a-29b, 31a-33b, 36a-39b, and 41a-43b. Additionally, the systems and system configurations may be constructed using the same manufacturing process, such as microfabrication by e-beam or optical lithography on the same wafer, thereby creating a single chip with one or multiple components, which would then be optically connected using optical components such as lenses, mirrors, and beam splitters. Some examples of system configurations where the components and devices are manufactured as a single chip are given in FIG. 20a-20b, 30a-30b, and 40a-40b. Additionally, with advanced die stacking or three-dimensional (3D) microfabrication techniques, the systems and system configurations could be fabricated in their entirety, including optics, into a single solid-state 3D chip or device. Some examples of system configurations where the entire system configuration is manufactured as a single 3D chip are given in FIG. 24a-25b, 34a-35b, and 44a-45b. The potential realizations of systems and system configurations are not limited to the various constructions described herein.

FIG. 16a and FIG. 16b show a construction 1602 of configuration 502 (FIG. 5) where all devices and their receiving and emitting surfaces are oriented parallel to the top surface of carrier chip 1604. All components and devices of configuration 502 are incorporated into construction 1602. Likewise, the description for configuration 502 applies to construction 1602 except for the following additional details and described components. Carrier chip 1604 provides electrical and/or optical interconnection between itself and input device 104, filter device 304, input device 404, and/or output device 106, where carrier chip 1604 may be a printed circuit board, integrated chip, chip carrier, interposer, or any other electrical and/or optical interconnecting platform. Laser 504 and laser 514 may be mounted, bonded, attached, embedded, or fabricated within or on carrier chip 1604. Light guide 506, light guide 516, and/or optional light guide 526 may be waveguides on or within carrier chip 1604. Input, filter, output, and control data (not shown) for all devices connected to and/or including carrier chip 1604 may be transmitted to carrier chip 1604 via carrier chip data line(s) 1608 and carrier chip control line(s) 1610, where carrier chip data line(s) 1608 and/or carrier chip control line(s) 1610 may be electrical wires (including but not limited to pin grid arrays, ball grid arrays, or other chip carriers), optical fibers, waveguides, and/or any other data or energy propagating medium whose terminals, connectors, and/or connection surfaces may be positioned on one or more surfaces and/or edges of carrier chip 1604. Electro-optic network 1674 may carry electrical and/or optical signals throughout carrier chip 1610 and between carrier chip data line(s) 1608, carrier chip control line(s) 1610, and/or to/from input device 104, filter device 304, input device 404, and/or output device 106, where electro-optic network 1674 may contain electrical wires, optical fibers, waveguides, and/or any other data and/or energy propagating medium. Input device 104 is connected to carrier chip 1604 at electrical and/or optical contact surface 1662, where contact surface 1662 is the physical interface between input device 104 and carrier chip 1604 and may supply power, electrical, optical, and/or control data from carrier chip 1604 to input device 104. Input and control data (not shown) may be provided to input device 104 through contact surface 1662 via input data line(s) 508 and input control line(s) 510 which are connected to electro-optic network 1674. Likewise, input device 404 is connected to carrier chip 1604 at an electrical and/or optical contact surface (not shown), where its contact surface (not shown) is the physical interface between input device 404 and carrier chip 1604 and may supply power, electrical, optical, and/or control data from carrier chip 1604 to input device 404. Input and control data (not shown) may be provided to input device 404 through its contact surface (not shown) with carrier chip 1604 via input data line(s) 518 (FIG. 5) and input control line(s) 520 (FIG. 5) which are connected to electro-optic network 1674. Filter device 304 is connected to carrier chip 1604 at electrical and/or optical contact surface 1664, where contact surface 1664 is the physical interface between filter device 304 and carrier chip 1604 and may supply power, electrical, optical, and/or control data from carrier chip 1604 to filter device 304. Filter and control data (not shown) may be provided to filter device 304 through contact surface 1664 via filter data line(s) 538 and filter control line(s) 540 which are connected to electro-optic network 1674. Output device 106 is connected to carrier chip 1604 at electrical and/or optical contact surface 1666, where contact surface 1666 is the physical interface between output device 106 and carrier chip 1604 and may supply power, electrical, optical, and/or control data from carrier chip 1604 to output device 106. Output data (not shown) may be received from output device 106 through contact surface 1662 via output data line(s) 528 and control data (not shown) may be transmitted to and received from output device 106 through contact surface 1662 via output control line(s) 530, where both output data line(s) 528 and output control line(s) 530 are connected to electro-optic network 1674. Carrier chip 1604 may perform pre- or -post processing of any data transmitted over electro-optic network 1674 including but not limited to modulation of light propagated by optical waveguides and/or mathematical operations on electrical signals propagated by wires in electro-optic network 1674. Propagation and/or modulation of light within input device 104 as described for configuration 502 and its variations occurs within waveguide network 706. Input data (not shown) may be received by input device 104 via optional receiving surface 1612 and/or through contact surface 1662, where optional receiving surface 1612 is comprised of an array of optical waveguides coupled to waveguide network 706 and arranged in any configuration and/or variation as described for waveguide arrays of device 5604 (FIG. 56-58). Likewise, input device 104 includes emitting surface 1616 that emits light propagated by and/or modulated within waveguide network 706 into free space 108, where emitting surface 1616 is comprised of an array of optical waveguides coupled to waveguide network 706 and arranged in any configuration and/or variation as described for waveguide arrays of device 5604 (FIG. 56-58). Similarly, propagation and/or modulation of light within input device 404 as described for configuration 502 and its variations occurs within waveguide network 1216. Input data (not shown) may be received by input device 404 via optional receiving surface 1622 and/or through its contact surface (not shown) with carrier chip 1604, where optional receiving surface 1622 is comprised of an array of optical waveguides coupled to waveguide network 1216 and arranged in any configuration and/or variation as described for waveguide arrays of device 5604 (FIG. 56-58). Likewise, input device 404 includes emitting surface 1626 that emits light propagated by and/or modulated within waveguide network 1216 into free space 408, where emitting surface 1626 is comprised of an array of optical waveguides coupled to waveguide network 1216 and arranged in any configuration and/or variation as described for waveguide arrays of device 5604 (FIG. 56-58). Propagation and/or modulation of light within filter device 304 as described for configuration 502 and its variations occurs within waveguide network 1634. Filter data (not shown) may be received by filter device 304 from free space 108 via receiving surface 1632, from free space 408 via receiving surface 1642, and/or through contact surface 1664, where receiving surface 1632 and receiving surface 1642 are each comprised of an array of optical waveguides coupled to waveguide network 1634 and arranged in any configuration and/or variation as described for waveguide arrays of device 5604 (FIG. 56-58), and both arrays may contain different numbers of receiving waveguide elements. Likewise, filter device 304 includes emitting surface 1636 that emits light propagated by and/or modulated within waveguide network 1634 into free space 308, where emitting surface 1636 is comprised of an array of optical waveguides coupled to waveguide network 1634 and arranged in any configuration and/or variation as described for waveguide arrays of device 5604 (FIG. 56-58). Propagation, modulation, and/or detection of light within output device 106 as described for configuration 502 and its variations occurs within waveguide network 1654. Output data (not shown) may be received by output device 106 via receiving surface 1652, where receiving surface 1652 is comprised of an array of optical waveguides coupled to waveguide network 1654 and arranged in any configuration and/or variation as described for waveguide arrays of device 5604 (FIG. 56-58). Likewise, output device 106 may include an optional emitting surface 1656 that emits light propagated by and/or modulated within waveguide network 1654, where emitting surface 1656 is comprised of an array of optical waveguides coupled to waveguide network 1654 and arranged in any configuration and/or variation as described for waveguide arrays of device 5604 (FIG. 56-58).

In one variation of construction 1602, input device 104 has optional receiving surface 1612 whose receiving array is coupled to an off-device waveguide or array of waveguides (not shown) that provide input data, such as from another optical system, where receiving surface 1612 may have any number of waveguides in its receiving array. In a second variation of construction 1602, input device 104 has optional receiving surface 1612 whose receiving array is coupled to an off-device fiber or array of fibers (not shown) that provide input data, such as from another optical system, where receiving surface 1612 may have any number of waveguides in its receiving array. In a third variation of construction 1602, input device 104 has optional receiving surface 1612 whose receiving array is coupled to free space (not shown) that provides input data, such as from another optical system, where receiving surface 1612 may have any number of waveguides in its receiving array. In a fourth variation of construction 1602, input device 104 has optional receiving surface 1612 as described in the first, second, and/or third variations of construction 1602, and input data for input device 104 is only received via receiving surface 1612. In a fifth variation of construction 1602, input device 104 has optional receiving surface 1612 as described in the first, second, and/or third variations of construction 1602, and input data for input device 104 is received via receiving surface 1612 and/or input data line(s) 508. In a sixth variation of construction 1602, input device 104 has no optional receiving surface 1612 and input data is only supplied via input data line(s) 508 from carrier chip 1604. In a seventh variation of construction 1602, input device 404 has optional receiving surface 1622 whose receiving array is coupled to an off-device waveguide or array of waveguides (not shown) that provide input data, such as from another optical system, where receiving surface 1622 may have any number of waveguides in its receiving array. In an eighth variation of construction 1602, input device 404 has optional receiving surface 1622 whose receiving array is coupled to an off-device fiber or array of fibers (not shown) that provide input data, such as from another optical system, where receiving surface 1622 may have any number of waveguides in its receiving array. In a ninth variation of construction 1602, input device 404 has optional receiving surface 1622 whose receiving array is coupled to free space (not shown) that provides input data, such as from another optical system, where receiving surface 1622 may have any number of waveguides in its receiving array. In a tenth variation of construction 1602, input device 404 has optional receiving surface 1622 as described in the seventh, eighth, and/or ninth variations construction 1602, and input data for input device 404 is only received via receiving surface 1622. In an eleventh variation of construction 1602, input device 404 has optional receiving surface 1622 as described in the seventh, eighth, and/or ninth variations of construction 1602, and input data for input device 404 is received via receiving surface 1622 and/or input data line(s) 518 (FIG. 5). In a twelfth variation of construction 1602, input device 404 has no optional receiving surface 1622 and input data is only supplied via input data line(s) 518 (FIG. 5) from carrier chip 1604. In a thirteenth variation of construction 1602, output device 106 has optional emitting surface 1656 whose emitting array is coupled to an off-device waveguide or array of waveguides (not shown) to provide output data, such as to another optical system, where emitting surface 1656 may have any number of waveguides in its emitting array. In a fourteenth variation of construction 1602, output device 106 has optional emitting surface 1656 whose emitting array is coupled to an off-device fiber or array of fibers (not shown) to provide output data, such as to another optical system, where emitting surface 1656 may have any number of waveguides in its emitting array. In a fifteenth variation of construction 1602, output device 106 has optional emitting surface 1656 whose emitting array is coupled to free space (not shown) to provide output data, such as to another optical system, where emitting surface 1656 may have any number of waveguides in its emitting array. In a sixteenth variation of construction 1602, output device 106 has optional emitting surface 1656 as described in the thirteenth, fourteenth, and/or fifteenth variations of construction 1602, and input data for output device 106 is only received via emitting surface 1656. In a seventeenth variation of construction 1602, output device 106 has optional emitting surface 1656 as described in the thirteenth, fourteenth, and/or fifteenth variations of construction 1602, and output data for output device 106 is transmitted via emitting surface 1656 and/or output data line(s) 528. In an eighteenth variation of construction 1602, output device 106 has no optional emitting surface 1656 and output data is only transmitted via output data line(s) 528 to carrier chip 1604. In a nineteenth variation of construction 1602, which may be combined with any of variation one through eighteen of construction 1602 or any other variation, the basis configuration is instead configuration 602 (FIG. 6) where there is only one laser source, external laser 504, and light guide 516 and optional reference light guide 526 branch from light guide 506. In a twentieth variation of construction 1602, which may be combined with any of variation one through eighteen of construction 1602 or any other variation, the basis configuration is instead configuration 702 (FIG. 7) where there is only one laser source, internal laser 704 coupled to waveguide network 706, and light guide 516 and optional reference light guide 526 are coupled to waveguide network 706 through waveguide coupler 708. In a twenty-first variation of construction 1602, which may be combined with any of variation one through eighteen of construction 1602 or any other variation, the basis configuration is instead configuration 1202 (FIG. 12) where there are two laser sources, internal laser 704 coupled to waveguide network 706 and internal laser 1214 coupled to waveguide network 1216, and optional reference light guide 526 is coupled to waveguide network 706 through waveguide coupler 708. In a twenty-second variation of construction 1602, which may be combined with any of variation one through eighteen of construction 1602 or any other variation, the basis configuration is instead configuration 1302 (FIG. 12) where there are no on-configuration laser sources, and optional reference light guide 526 is coupled to waveguide network 706 through waveguide coupler 708. Any variation of construction 1602 may be combined into a new variation of construction 1602.

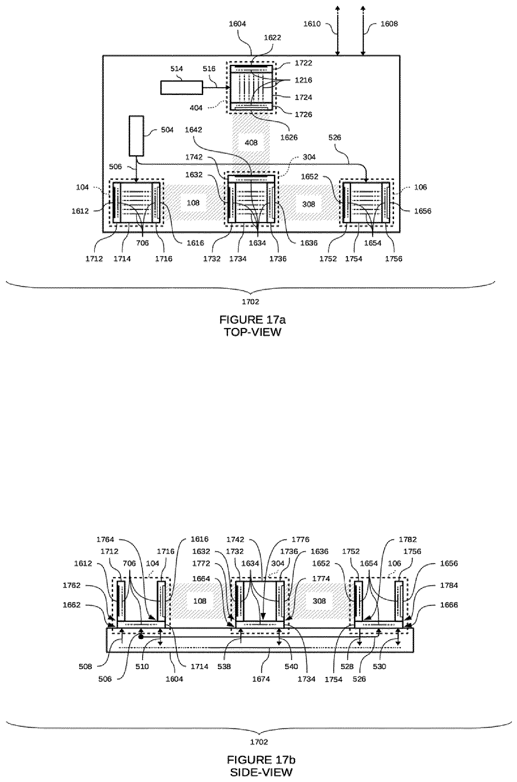

FIG. 17a and FIG. 17b show a construction 1702 of configuration 502 (FIG. 5) where all device receiving and emitting surfaces are oriented perpendicular to the top surface of carrier chip 1604. The description and variations for construction 1702 are identical to the description and variations for construction 1602 except that input, filter, and output devices have been split into multiple sub-device chips. Input device 104 is comprised of base control chip 1714, optional receiving chip 1712, and emitting chip 1716. Base control chip 1714 contains waveguide 706 and interfaces with carrier chip 1604 via contact surface 1662. Optional receiving chip 1712 contains optional receiving surface 1612 and interfaces with base control chip 1714 through contact surface 1762, where contact surface 1762 provides electro-optic interconnection between optional receiving chip 1712 and base control chip 1714. Likewise, emitting chip 1716 contains emitting surface 1616 and interfaces with base control chip 1714 through contact surface 1764, where contact surface 1764 provides electro-optic interconnection between emitting chip 1716 and base control chip 1714. Similarly, input device 404 is comprised of base control chip 1724, optional receiving chip 1722, and emitting chip 1726. Base control chip 1724 contains waveguide 1216 and interfaces with carrier chip 1604 via an electro-optic contact surface (not shown). Optional receiving chip 1722 contains optional receiving surface 1622 and interfaces with base control chip 1724 through a contact surface (not shown) that provides electro-optic interconnection between optional receiving chip 1722 and base control chip 1724. Likewise, emitting chip 1726 contains emitting surface 1626 and interfaces with base control chip 1724 through a contact surface (not shown) that provides electro-optic interconnection between emitting chip 1726 and base control chip 1724. Filter device 304 is comprised of a base control chip 1734, receiving chip 1732, receiving chip 1742, and emitting chip 1736. Base control chip 1734 contains waveguide 1634 and interfaces with carrier chip 1604 via contact surface 1664. Receiving chip 1732 contains receiving surface 1632 and interfaces with base control chip 1734 through contact surface 1772, where contact surface 1772 provides electro-optic interconnection between receiving chip 1732 and base control chip 1734. Likewise, receiving chip 1742 contains receiving surface 1642 and interfaces with base control chip 1734 through contact surface 1776, where contact surface 1776 provides electro-optic interconnection between receiving chip 1742 and base control chip 1734.

Emitting chip 1736 contains emitting surface 1636 and interfaces with base control chip 1734 through contact surface 1774, where contact surface 1774 provides electro-optic interconnection between emitting chip 1736 and base control chip 1734. Output device 106 is comprised of a base control chip 1754, receiving chip 1752, and optional emitting chip 1756. Base control chip 1754 contains waveguide 1654 and interfaces with carrier chip 1604 via contact surface 1666. Receiving chip 1752 contains receiving surface 1652 and interfaces with base control chip 1754 through contact surface 1782, where contact surface 1782 provides electro-optic interconnection between receiving chip 1752 and base control chip 1754. Likewise, optional emitting chip 1756 contains optional emitting surface 1656 and interfaces with base control chip 1754 through contact surface 1784, where contact surface 1784 provides electro-optic interconnection between optional emitting chip 1756 and base control chip 1754.

All variations of construction 1602 apply to construction 1702, except for the following. Any variation of construction 1702 that has optional receiving surface 1612 will also have optional receiving chip 1712, and any variation that does not have optional receiving surface 1612 will not have optional receiving chip 1712. Likewise, any variation of construction 1702 that has optional receiving surface 1622 will also have optional receiving chip 1722, and any variation that does not have optional receiving surface 1622 will not have optional receiving chip 1722. Finally, any variation of construction 1702 that has optional emitting surface 1656 will also have optional emitting chip 1756, and any variation that does not have optional emitting surface 1656 will not have optional receiving chip 1756. Any variation of construction 1702 may be combined into a new variation of construction 1702.

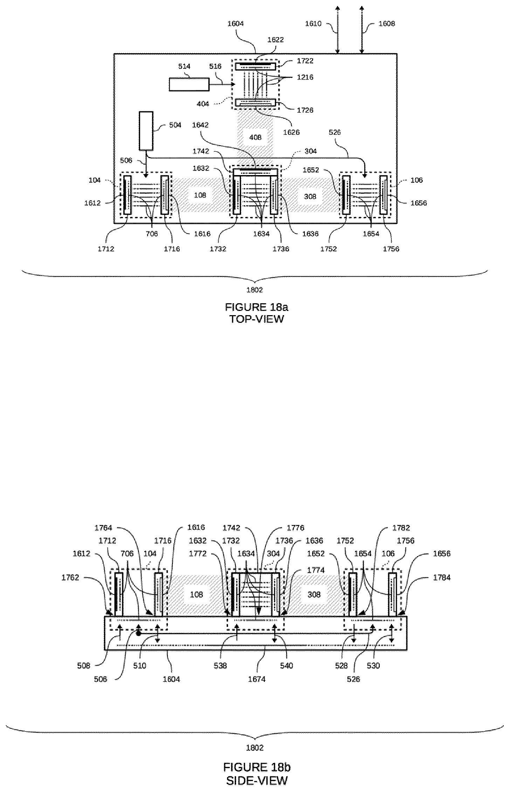

FIG. 18a and FIG. 18b show a construction 1802 of configuration 502 (FIG. 5) where all device receiving and emitting surfaces are oriented perpendicular to the top surface of carrier chip 1604, and portions of each input, filter, and output device are incorporated into carrier chip 1604. The description and variations for construction 1802 are identical to the description and variations for construction 1702 except that the components and functionality of control chips from construction 1702 have been integrated into carrier chip 1604 for construction 1802. For input device 104, components and functionality of control chip 1714, including portions of waveguide 706, have been integrated into carrier chip 1604 thereby eliminating contact surface 1662. Optional receiving chip 1712 interfaces with carrier chip 1604 through contact surface 1762, where contact surface 1762 provides electro-optic interconnection between optional receiving chip 1712, carrier chip 1604, and waveguide network 706. Likewise, emitting chip 1716 interfaces with carrier chip 1604 through contact surface 1764, where contact surface 1764 provides electro-optic interconnection between emitting chip 1716, carrier chip 1604, and waveguide network 706. Similarly, for input device 404, components and functionality of control chip 1724, including portions of waveguide 1216, have been integrated into carrier chip 1604. Optional receiving chip 1722 interfaces with carrier chip 1604 via an electro-optic contact surface (not shown) that provides electro-optic interconnection between optional receiving chip 1722, carrier chip 1604, and waveguide network 1216. Likewise, emitting chip 1726 interfaces with carrier chip 1604 via an electro-optic contact surface (not shown) that provides electro-optic interconnection between emitting chip 1726, carrier chip 1604, and waveguide network 1216. For filter device 304, components and functionality of control chip 1734, including portions of waveguide 1634, have been integrated into carrier chip 1604 thereby eliminating contact surface 1664. Receiving chip 1732 interfaces with carrier chip 1604 through contact surface 1772, where contact surface 1772 provides electro-optic interconnection between receiving chip 1732, carrier chip 1604, and waveguide network 1634. Likewise, receiving chip 1742 interfaces with carrier chip 1604 through contact surface 1776, where contact surface 1776 provides electro-optic interconnection between receiving chip 1742, carrier chip 1604, and waveguide network 1634. Emitting chip 1736 interfaces with carrier chip 1604 through contact surface 1774, where contact surface 1774 provides electro-optic interconnection between emitting chip 1736, carrier chip 1604, and waveguide network 1634. For output device 106, components and functionality of control chip 1754, including portions of waveguide 1654, have been integrated into carrier chip 1604 thereby eliminating contact surface 1666. Receiving chip 1752 interfaces with carrier chip 1604 through contact surface 1782, where contact surface 1782 provides electro-optic interconnection between receiving chip 1752, carrier chip 1604, and waveguide network 1654. Likewise, optional emitting chip 1756 interfaces with carrier chip 1604 through contact surface 1784, where contact surface 1784 provides electro-optic interconnection between optional emitting chip 1756, carrier chip 1604, and waveguide network 1654. All variations of construction 1702 apply to construction 1802. Any variation of construction 1802 may be combined into a new variation of construction 1802.

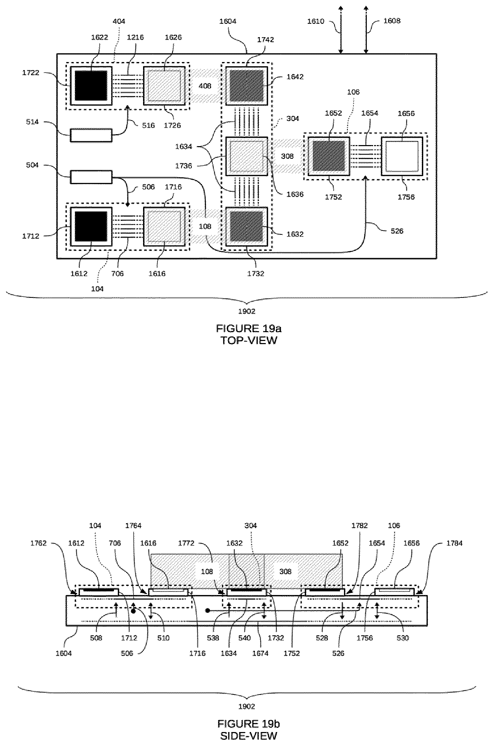

FIG. 19a and FIG. 19b show a construction 1902 of configuration 502 (FIG. 5) where all device receiving and emitting surfaces are oriented parallel to the top surface of carrier chip 1604, and portions of each input, filter, and output device are incorporated into carrier chip 1604. The description and variations for construction 1902 are identical to the description and variations for construction 1802 except that optional receiving chip 1712, emitting chip 1716, optional receiving chip 1722, emitting chip 1726, receiving chip 1732, emitting chip 1736, receiving chip 1742, receiving chip 1752, and optional emitting chip 1756 are oriented parallel to the top surface of carrier chip 1604 such that all receiving and emitting surfaces are oriented parallel to the top surface of carrier chip 1604. Construction 1902 is similar to construction 1602, except that portions of input device 104, input device 404, filter device 304, and output device 106 have been integrated into carrier chip 1604. All variations of construction 1802 apply to construction 1902. Any variation of construction 1902 may be combined into a new variation of construction 1902.

FIG. 20a and FIG. 20b show a construction 2002 of configuration 502 (FIG. 5) where all device receiving and emitting surfaces are oriented parallel to the top surface of carrier chip 1604, and all input, filter, and output devices are incorporated into carrier chip 1604. The description and variations for construction 2002 are identical to the description and variations for construction 1902 except that all components of input device 104, input device 404, filter device 304, and output device 106 are mounted, bonded, attached, incorporated, embedded, or fabricated within carrier chip 1604 thereby eliminating optional receiving chip 1712, emitting chip 1716, optional receiving chip 1722, emitting chip 1726, receiving chip 1732, emitting chip 1736, receiving chip 1742, receiving chip 1752, and optional emitting chip 1756. All variations of construction 1602 apply to construction 2002. Any variation of construction 2002 may be combined into a new variation of construction 2002.

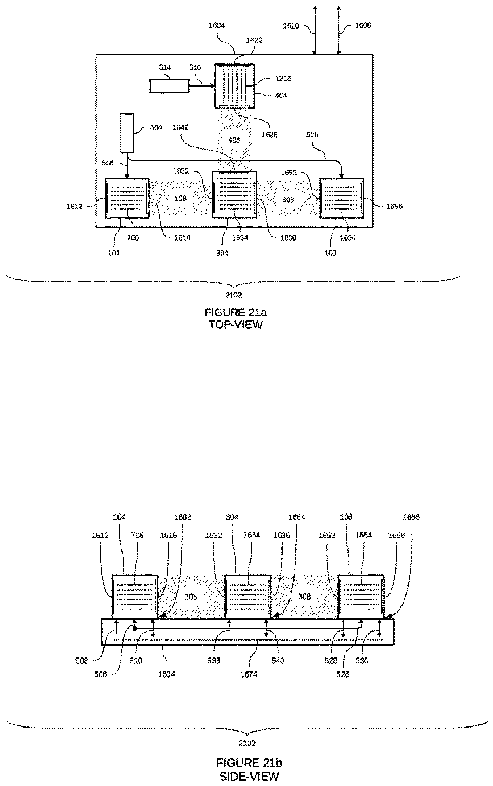

FIG. 21a and FIG. 21b show a construction 2102 of configuration 502 (FIG. 5) where all device receiving and emitting surfaces are oriented perpendicular to the top surface of carrier chip 1604. The description and variations for construction 2102 are identical to the description and variations for construction 1602 except that input device 104, input device 404, filter device 304, and output device 106 are interfaced to carrier chip 1604 such that optional receiving surface 1612, emitting surface 1616, optional receiving surface 1622, emitting surface 1626, receiving surface 1632, emitting surface 1636, receiving surface 1642, receiving surface 1652, and optional emitting surface 1656 are oriented perpendicular to the top surface of carrier chip 1604. All variations of construction 1602 apply to construction 2102. Any variation of construction 2102 may be combined into a new variation of construction 2102.

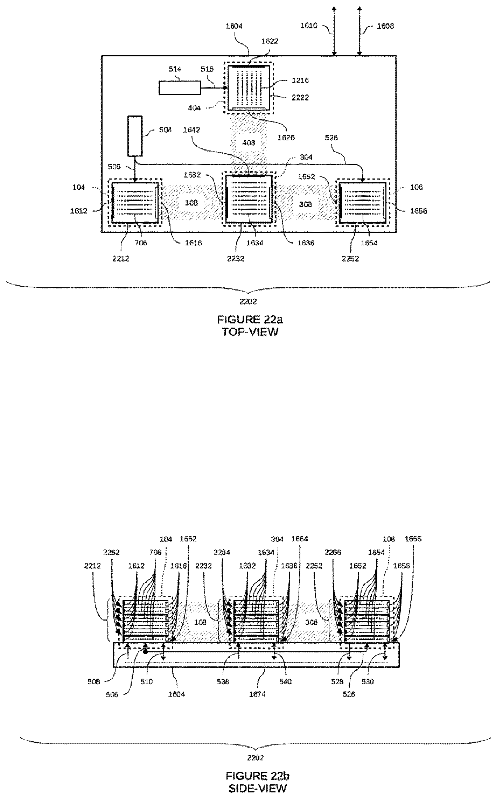

FIG. 22a and FIG. 22b show a construction 2202 of configuration 502 (FIG. 5) where all device receiving and emitting surfaces are oriented perpendicular to the top surface of carrier chip 1604, and all input, filter, and output devices are comprised of multiple stacked chips. The description and variations for construction 2202 are identical to the description and variations for construction 2102 except that input device 104, input device 404, filter device 304, and output device 106 are comprised of multiple chips stacked parallel to the top surface of carrier chip 1604. Input device 104 is comprised of chip stack 2212 which contains optional receiving surface 1612, waveguide network 706, and emitting surface 1616. Each chip in chip stack 2212 is comprised of one or multiple rows of the receiving array (not shown) of optional receiving surface 1612, one or multiple rows of the emitting array (not shown) of emitting surface 1616, and the necessary electro-optic components and/or parts of waveguide network 706 to provide the functionality required by input device 104 for the portion of optional receiving surface 1612 and emitting surface 1616 within each chip and to interconnect with adjacent chips through contact surface 2262 between each chip in chip stack 2212. There are as many chips in chip stack 2212 as required to construct optional receiving surface 1612 and emitting surface 1616 to the dimensions required for input device 104. Chip stack 2212 interfaces with carrier chip 1604 through contact surface 1662 as described for input device 104 of construction 1604 and its variations. Similarly, input device 404 is comprised of chip stack 2222 which contains optional receiving surface 1622, waveguide network 1216, and emitting surface 1626. Each chip in chip stack 2222 is comprised of one or multiple rows of the receiving array (not shown) of optional receiving surface 1622, one or multiple rows of the emitting array (not shown) of emitting surface 1626, and the necessary electro-optic components and/or parts of waveguide network 1216 to provide the functionality required by input device 404 for the portion of optional receiving surface 1622 and emitting surface 1626 within each chip and to interconnect with adjacent chips via an electro-optic contact surface (not shown) between each chip in chip stack 2222. There are as many chips in chip stack 2222 as required to construct optional receiving surface 1622 and emitting surface 1626 to the dimensions required for input device 404. Chip stack 2222 interfaces with carrier chip 1604 via an electro-optic contact surface (not shown) as described for input device 404 of construction 1604 and its variations. Filter device 304 is comprised of chip stack 2232 which contains receiving surface 1632, receiving surface 1642, waveguide network 1634, and emitting surface 1636. Each chip in chip stack 2232 is comprised of one or multiple rows of the receiving array (not shown) of receiving surface 1632, one or multiple rows of the receiving array (not shown) of receiving surface 1642, one or multiple rows of the emitting array (not shown) of emitting surface 1636, and the necessary electro-optic components and/or parts of waveguide network 1634 to provide the functionality required by filter device 304 for the portion of receiving surface 1632, receiving surface 1642, and emitting surface 1636 within each chip and to interconnect with adjacent chips through contact surface 2264 between each chip in chip stack 2232. There are as many chips in chip stack 2232 as required to construct receiving surface 1632, receiving surface 1642, and emitting surface 1636 to the dimensions required for filter device 304. Chip stack 2212 interfaces with carrier chip 1604 through contact surface 1664 as described for filter device 304 of construction 1604 and its variations. Output device 106 is comprised of chip stack 2252 which contains receiving surface 1652, waveguide network 1654, and optional emitting surface 1656. Each chip in chip stack 2252 is comprised of one or multiple rows of the receiving array (not shown) of receiving surface 1652, one or multiple rows of the emitting array (not shown) of optional emitting surface 1656, and the necessary electro-optic components and/or parts of waveguide network 1654 to provide the functionality required by output device 106 for the portion of receiving surface 1652 and optional emitting surface 1656 within each chip and to interconnect with adjacent chips through contact surface 2266 between each chip in chip stack 2252. There are as many chips in chip stack 2252 as required to construct receiving surface 1652 and optional emitting surface 1656 to the dimensions required for output device 106. Chip stack 2252 interfaces with carrier chip 1604 through contact surface 1666 as described for output device 106 of construction 1604 and its variations. All variations of construction 2102 apply to construction 2202. Any variation of construction 2202 may be combined into a new variation of construction 2202.

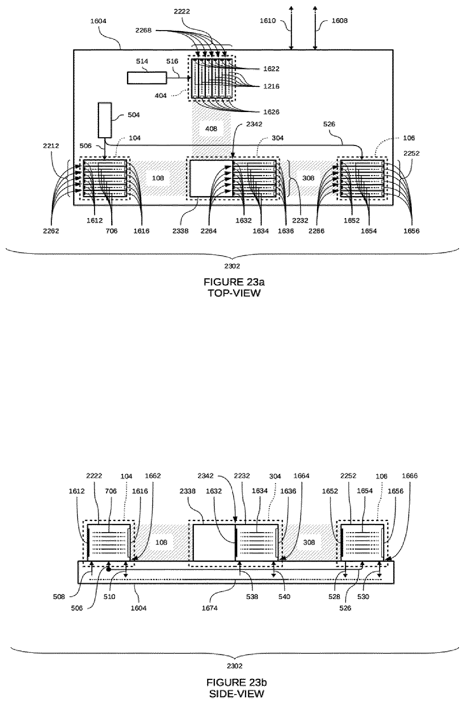

FIG. 23a and FIG. 23b show a construction 2302 of configuration 502 (FIG. 5) where all device receiving and emitting surfaces are oriented perpendicular to the top surface of carrier chip 1604, and all input, filter, and output devices are comprised of multiple chips stacked perpendicular to the top surface of carrier chip 1604. The description and variations for construction 2302 are identical to the description and variations for construction 2102 except that input device 104, input device 404, filter device 304, and output device 106 are comprised of multiple chips stacked perpendicular to the top surface of carrier chip 1604. Additionally, filter device 304 of construction 2302 does not have receiving surface 1642, and also includes an additional sub-device component 2338 designed to mix and/or modulate light received from free space 108 and free space 408 for transmission to receiving array 1632 at contact surface 2342 of chip stack 2232, where sub-device component 2338 may be an optical component such as a beamsplitter, a waveguide device, a compound stack of waveguide devices or components, or a waveguide system including but not limited to any of the previously described devices, systems, and/or their variations. Input device 104 is comprised of chip stack 2212 which contains optional receiving surface 1612, waveguide network 706, and emitting surface 1616. Each chip in chip stack 2212 is comprised of one or multiple columns of the receiving array (not shown) of optional receiving surface 1612, one or multiple columns of the emitting array (not shown) of emitting surface 1616, and the necessary electro-optic components and/or parts of waveguide network 706 to provide the functionality required by input device 104 for the portion of optional receiving surface 1612 and emitting surface 1616 within each chip and to interconnect with adjacent chips through contact surface 2262 between each chip in chip stack 2212. There are as many chips in chip stack 2212 as required to construct optional receiving surface 1612 and emitting surface 1616 to the dimensions required for input device 104. Chip stack 2212 interfaces with carrier chip 1604 through contact surface 1662 as described for input device 104 of construction 1604 and its variations. Similarly, input device 404 is comprised of chip stack 2222 which contains optional receiving surface 1622, waveguide network 1216, and emitting surface 1626. Each chip in chip stack 2222 is comprised of one or multiple columns of the receiving array (not shown) of optional receiving surface 1622, one or multiple columns of the emitting array (not shown) of emitting surface 1626, and the necessary electro-optic components and/or parts of waveguide network 1216 to provide the functionality required by input device 404 for the portion of optional receiving surface 1622 and emitting surface 1626 within each chip and to interconnect with adjacent chips via an electro-optic contact surface (not shown) between each chip in chip stack 2222. There are as many chips in chip stack 2222 as required to construct optional receiving surface 1622 and emitting surface 1626 to the dimensions required for input device 404. Chip stack 2222 interfaces with carrier chip 1604 via an electro-optic contact surface (not shown) as described for input device 404 of construction 1604 and its variations. Filter device 304 is comprised of chip stack 2232 which contains receiving surface 1632, waveguide network 1634, and emitting surface 1636. Each chip in chip stack 2232 is comprised of one or multiple columns of the receiving array (not shown) of receiving surface 1632, one or multiple columns of the emitting array (not shown) of emitting surface 1636, and the necessary electro-optic components and/or parts of waveguide network 1634 to provide the functionality required by filter device 304 for the portion of receiving surface 1632 and emitting surface 1636 within each chip and to interconnect with adjacent chips through contact surface 2264 between each chip in chip stack 2232. There are as many chips in chip stack 2232 as required to construct receiving surface 1632 and emitting surface 1636 to the dimensions required for filter device 304. Chip stack 2212 interfaces with carrier chip 1604 through contact surface 1664 as described for filter device 304 of construction 1604 and its variations. Output device 106 is comprised of chip stack 2252 which contains receiving surface 1652, waveguide network 1654, and optional emitting surface 1656. Each chip in chip stack 2252 is comprised of one or multiple columns of the receiving array (not shown) of receiving surface 1652, one or multiple columns of the emitting array (not shown) of optional emitting surface 1656, and the necessary electro-optic components and/or parts of waveguide network 1654 to provide the functionality required by output device 106 for the portion of receiving surface 1652 and optional emitting surface 1656 within each chip and to interconnect with adjacent chips through contact surface 2266 between each chip in chip stack 2252. There are as many chips in chip stack 2252 as required to construct receiving surface 1652 and optional emitting surface 1656 to the dimensions required for output device 106. Chip stack 2252 interfaces with carrier chip 1604 through contact surface 1666 as described for output device 106 of construction 1604 and its variations. All variations of construction 2102 apply to construction 2302. Any variation of construction 2302 may be combined into a new variation of construction 2302.

FIG. 24a and FIG. 24b show a construction 2402 of configuration 502 (FIG. 5) where all device receiving and emitting surfaces are oriented parallel to the top surface of carrier chip 1604, and all input devices, filter devices, output devices, and free space regions are incorporated into carrier chip 1604. The description and variations for construction 2402 are identical to the description and variations for construction 2002 except that all components of free space 108, free space 308, free space 408, optional free space 2408, optional free space 2418, and optional free space 2458 are mounted, bonded, attached, incorporated, embedded, or fabricated within carrier chip 1604, where optional free space 2408, optional free space 2418, and/or optional free space 2458 may be a region air or other gas (such as nitrogen), a liquid (such as index-matching fluid), a solid (such as index-matching glass), or a vacuum containing zero or more lenses, beam splitters, polarizers, waveplates, waveguides, fibers, micro-lens arrays, or other optical components. Optional free space 2408 provides optical connection between optional receiving array 1612 and the surface of carrier chip 1604 to allow interconnection between input device 104 and other devices, configurations, constructions and/or their variations, where all optical elements within free space 2408 share a common optical axis with optional receiving array 1612. Likewise, optional free space 2418 provides optical connection between optional receiving array 1622 and the surface of carrier chip 1604 to allow interconnection between input device 404 and other devices, configurations, constructions and/or their variations, where all optical elements within free space 2418 share a common optical axis with optional receiving array 1622. Optional free space 2458 provides optical connection between optional emitting array 1656 and the surface of carrier chip 1604 to allow interconnection between output device 106 and other devices, configurations, constructions and/or their variations, where all optical elements within free space 2458 share a common optical axis with optional receiving array 1656. All variations of construction 2002 apply to construction 2402. Any variation of construction 2402 may be combined into a new variation of construction 2402.

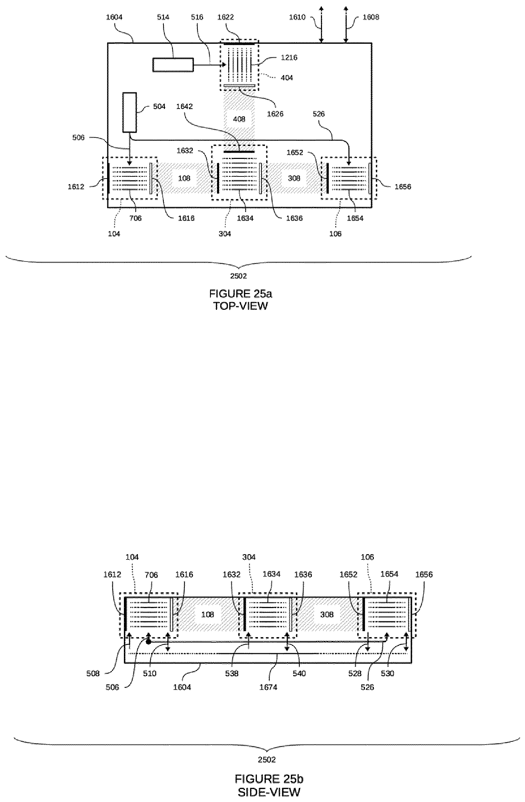

FIG. 25a and FIG. 25b show a construction 2502 of configuration 502 (FIG. 5) where all device receiving and emitting surfaces are oriented perpendicular to the top surface of carrier chip 1604, and all input devices, filter devices, output devices, and free space regions are incorporated into carrier chip 1604. The description and variations for construction 2502 are identical to the description and variations for construction 2102 except that all components of input device 104, input device 404, filter device 304, output device 106, free space 108, free space 308, and free space 408 are mounted, bonded, attached, incorporated, embedded, or fabricated within carrier chip 1604 thereby eliminating contact surface 1662, contact surface 1664, and contact surface 1666. Optional receiving surface 1612, optional receiving surface 1622, and optional emitting surface 1656 are positioned at the side surfaces of carrier chip 1604 such that they could optionally interconnect with other devices, configurations, constructions and/or their variations via free space regions, waveguides, fibers, microlens arrays, or other optical carrying medium (not shown). All variations of construction 2102 apply to construction 2502. Any variation of construction 2502 may be combined into a new variation of construction 2502.

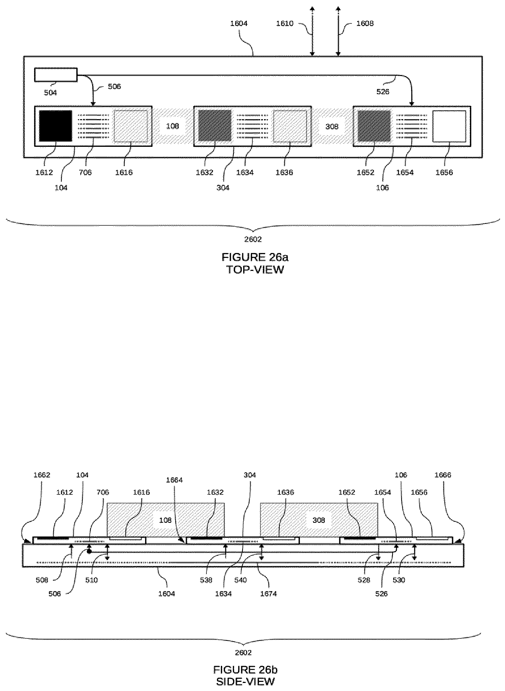

FIG. 26a and FIG. 26b show a construction 2602 of configuration 802 (FIG. 8) where all devices and their receiving and emitting surfaces are oriented parallel to the top surface of carrier chip 1604. All components and devices of configuration 802 are incorporated into construction 2602. Likewise, the description for configuration 802 applies to construction 2602 except for the following additional details and described components. Carrier chip 1604 provides electrical and/or optical interconnection between itself and input device 104, filter device 304, and/or output device 106, where carrier chip 1604 may be a printed circuit board, integrated chip, chip carrier, interposer, or any other electrical and/or optical interconnecting platform. Laser 504 may be mounted, bonded, attached, embedded, or fabricated within or on carrier chip 1604. Light guide 506 and/or optional light guide 526 may be waveguides on or within carrier chip 1604. Input, filter, output, and control data (not shown) for all devices connected to and/or including carrier chip 1604 may be transmitted to carrier chip 1604 via carrier chip data line(s) 1608 and carrier chip control line(s) 1610, where carrier chip data line(s) 1608 and/or carrier chip control line(s) 1610 may be electrical wires (including but not limited to pin grid arrays, ball grid arrays, or other chip carriers), optical fibers, waveguides, and/or any other data carrying or energy propagating medium whose terminals, connectors, and/or connection surfaces may be positioned on one or more surfaces and/or edges of carrier chip 1604. Electro-optic network 1674 may carry electrical and/or optical signals throughout carrier chip 1610 and between carrier chip data line(s) 1608, carrier chip control line(s) 1610, and/or to/from input device 104, filter device 304, and/or output device 106, where electro-optic network 1674 may contain electrical wires, optical fibers, waveguides, and/or any other data and/or energy propagating medium. Input device 104 is connected to carrier chip 1604 at electrical and/or optical contact surface 1662, where contact surface 1662 is the physical interface between input device 104 and carrier chip 1604 and may supply power, electrical, optical, and/or control data from carrier chip 1604 to input device 104. Input and control data (not shown) may be provided to input device 104 through contact surface 1662 via input data line(s) 508 and input control line(s) 510 which are connected to electro-optic network 1674. Filter device 304 is connected to carrier chip 1604 at electrical and/or optical contact surface 1664, where contact surface 1664 is the physical interface between filter device 304 and carrier chip 1604 and may supply power, electrical, optical, and/or control data from carrier chip 1604 to filter device 304. Filter and control data (not shown) may be provided to filter device 304 through contact surface 1664 via filter data line(s) 538 and filter control line(s) 540 which are connected to electro-optic network 1674. Output device 106 is connected to carrier chip 1604 at electrical and/or optical contact surface 1666, where contact surface 1666 is the physical interface between output device 106 and carrier chip 1604 and may supply power, electrical, optical, and/or control data from carrier chip 1604 to output device 106. Output data (not shown) may be received from output device 106 through contact surface 1662 via output data line(s) 528 and control data (not shown) may be transmitted to and received from output device 106 through contact surface 1662 via output control line(s) 530, where both output data line(s) 528 and output control line(s) 530 are connected to electro-optic network 1674. Carrier chip 1604 may perform pre- or -post processing of any data transmitted over electro-optic network 1674 including but not limited to modulation of light propagated by optical waveguides and/or mathematical operations on electrical signals propagated by wires in electro-optic network 1674. Propagation and/or modulation of light within input device 104 as described for configuration 802 and its variations occurs within waveguide network 706. Input data (not shown) may be received by input device 104 via optional receiving surface 1612 and/or through contact surface 1662, where optional receiving surface 1612 is comprised of an array of optical waveguides coupled to waveguide network 706 and arranged in any configuration and/or variation as described for waveguide arrays of device 5604 (FIG. 56-58). Likewise, input device 104 includes emitting surface 1616 that emits light propagated by and/or modulated within waveguide network 706 into free space 108, where emitting surface 1616 is comprised of an array of optical waveguides coupled to waveguide network 706 and arranged in any configuration and/or variation as described for waveguide arrays of device 5604 (FIG. 56-58). Propagation and/or modulation of light within filter device 304 as described for configuration 802 and its variations occurs within waveguide network 1634. Filter data (not shown) may be received by filter device 304 from free space 108 via receiving surface 1632 and/or through contact surface 1664, where receiving surface 1632 is comprised of an array of optical waveguides coupled to waveguide network 1634 and arranged in any configuration and/or variation as described for waveguide arrays of device 5604 (FIG. 56-58) and may contain different numbers of receiving waveguide elements. Likewise, filter device 304 includes emitting surface 1636 that emits light propagated by and/or modulated within waveguide network 1634 into free space 308, where emitting surface 1636 is comprised of an array of optical waveguides coupled to waveguide network 1634 and arranged in any configuration and/or variation as described for waveguide arrays of device 5604 (FIG. 56-58). Propagation, modulation, and/or detection of light within output device 106 as described for configuration 802 and its variations occurs within waveguide network 1654. Output data (not shown) may be received by output device 106 via receiving surface 1652, where receiving surface 1652 is comprised of an array of optical waveguides coupled to waveguide network 1654 and arranged in any configuration and/or variation as described for waveguide arrays of device 5604 (FIG. 56-58). Likewise, output device 106 may include an optional emitting surface 1656 that emits light propagated by and/or modulated within waveguide network 1654, where emitting surface 1656 is comprised of an array of optical waveguides coupled to waveguide network 1654 and arranged in any configuration and/or variation as described for waveguide arrays of device 5604 (FIG. 56-58).

In one variation of construction 2602, input device 104 has optional receiving surface 1612 whose receiving array is coupled to an off-device waveguide or array of waveguides (not shown) that provide input data, such as from another optical system, where receiving surface 1612 may have any number of waveguides in its receiving array. In a second variation of construction 2602, input device 104 has optional receiving surface 1612 whose receiving array is coupled to an off-device fiber or array of fibers (not shown) that provide input data, such as from another optical system, where receiving surface 1612 may have any number of waveguides in its receiving array. In a third variation of construction 2602, input device 104 has optional receiving surface 1612 whose receiving array is coupled to free space (not shown) that provides input data, such as from another optical system, where receiving surface 1612 may have any number of waveguides in its receiving array. In a fourth variation of construction 2602, input device 104 has optional receiving surface 1612 as described in the first, second, and/or third variations of construction 2602, and input data for input device 104 is only received via receiving surface 1612. In a fifth variation of construction 2602, input device 104 has optional receiving surface 1612 as described in the first, second, and/or third variations of construction 2602, and input data for input device 104 is received via receiving surface 1612 and/or input data line(s) 508. In a sixth variation of construction 2602, input device 104 has no optional receiving surface 1612 and input data is only supplied via input data line(s) 508 from carrier chip 1604. In a seventh variation of construction 2602, output device 106 has optional emitting surface 1656 whose emitting array is coupled to an off-device waveguide or array of waveguides (not shown) to provide output data, such as to another optical system, where emitting surface 1656 may have any number of waveguides in its emitting array. In an eighth variation of construction 2602, output device 106 has optional emitting surface 1656 whose emitting array is coupled to an off-device fiber or array of fibers (not shown) to provide output data, such as to another optical system, where emitting surface 1656 may have any number of waveguides in its emitting array. In a ninth variation of construction 2602, output device 106 has optional emitting surface 1656 whose emitting array is coupled to free space (not shown) to provide output data, such as to another optical system, where emitting surface 1656 may have any number of waveguides in its emitting array. In a tenth variation of construction 2602, output device 106 has optional emitting surface 1656 as described in the seventh, eighth, and/or ninth variations of construction 2602, and input data for output device 106 is only received via emitting surface 1656. In an eleventh variation of construction 2602, output device 106 has optional emitting surface 1656 as described in the seventh, eighth, and/or ninth variations of construction 2602, and output data for output device 106 is transmitted via emitting surface 1656 and/or output data line(s) 528. In a twelfth variation of construction 2602, output device 106 has no optional emitting surface 1656 and output data is only transmitted via output data line(s) 528 to carrier chip 1604. In a thirteenth variation of construction 2602, which may be combined with any of variation one through twelve of construction 2602 or any other variation, the basis configuration is instead configuration 902 (FIG. 9) where there is only one laser source, internal laser 704 coupled to waveguide network 706, and optional reference light guide 526 may be coupled to waveguide network 706 through optional waveguide coupler 708. In a fourteenth variation of construction 2602, which may be combined with any of variation one through twelve of construction 2602 or any other variation, the basis configuration is instead configuration 1402 (FIG. 14) where there are no on-configuration laser sources, and optional reference light guide 526 may be coupled to waveguide network 706 through optional waveguide coupler 708. Any variation of construction 2602 may be combined into a new variation of construction 2602.

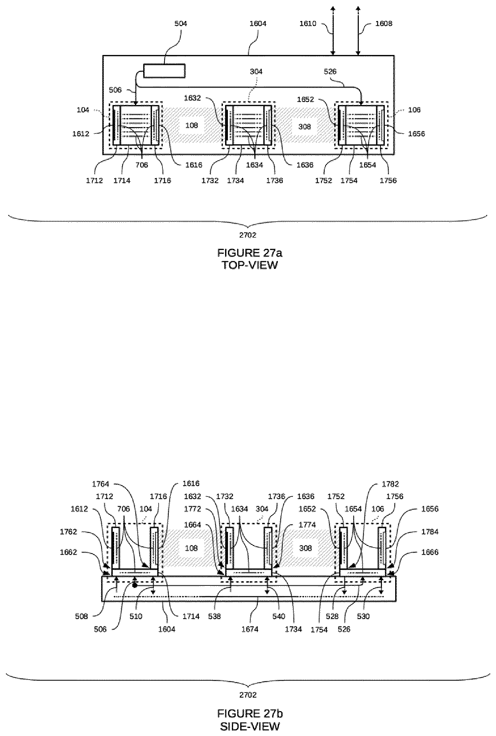

FIG. 27a and FIG. 27b show a construction 2702 of configuration 802 (FIG. 8) where all device receiving and emitting surfaces are oriented perpendicular to the top surface of carrier chip 1604. The description and variations for construction 2702 are identical to the description and variations for construction 2602 except that input, filter, and output devices have been split into multiple sub-device chips. Input device 104 is comprised of base control chip 1714, optional receiving chip 1712, and emitting chip 1716. Base control chip 1714 contains waveguide 706 and interfaces with carrier chip 1604 via contact surface 1662. Optional receiving chip 1712 contains optional receiving surface 1612 and interfaces with base control chip 1714 through contact surface 1762, where contact surface 1762 provides electro-optic interconnection between optional receiving chip 1712 and base control chip 1714. Likewise, emitting chip 1716 contains emitting surface 1616 and interfaces with base control chip 1714 through contact surface 1764, where contact surface 1764 provides electro-optic interconnection between emitting chip 1716 and base control chip 1714. Filter device 304 is comprised of a base control chip 1734, receiving chip 1732, and emitting chip 1736. Base control chip 1734 contains waveguide 1634 and interfaces with carrier chip 1604 via contact surface 1664. Receiving chip 1732 contains receiving surface 1632 and interfaces with base control chip 1734 through contact surface 1772, where contact surface 1772 provides electro-optic interconnection between receiving chip 1732 and base control chip 1734. Emitting chip 1736 contains emitting surface 1636 and interfaces with base control chip 1734 through contact surface 1774, where contact surface 1774 provides electro-optic interconnection between emitting chip 1736 and base control chip 1734. Output device 106 is comprised of a base control chip 1754, receiving chip 1752, and optional emitting chip 1756. Base control chip 1754 contains waveguide 1654 and interfaces with carrier chip 1604 via contact surface 1666. Receiving chip 1752 contains receiving surface 1652 and interfaces with base control chip 1754 through contact surface 1782, where contact surface 1782 provides electro-optic interconnection between receiving chip 1752 and base control chip 1754. Likewise, optional emitting chip 1756 contains optional emitting surface 1656 and interfaces with base control chip 1754 through contact surface 1784, where contact surface 1784 provides electro-optic interconnection between optional emitting chip 1756 and base control chip 1754.

All variations of construction 2602 apply to construction 2702, except for the following. Any variation of construction 2702 that has optional receiving surface 1612 will also have optional receiving chip 1712, and any variation that does not have optional receiving surface 1612 will not have optional receiving chip 1712. Likewise, any variation of construction 2702 that has optional emitting surface 1656 will also have optional emitting chip 1756, and any variation that does not have optional emitting surface 1656 will not have optional receiving chip 1756. Any variation of construction 2702 may be combined into a new variation of construction 2702.

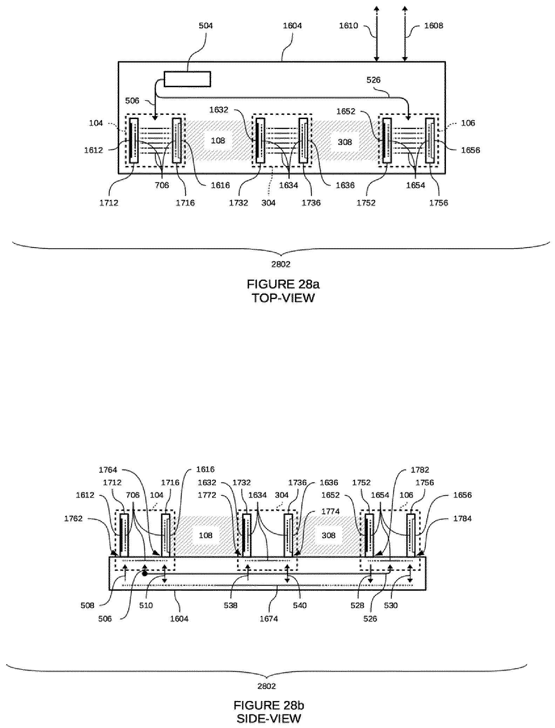

FIG. 28a and FIG. 28b show a construction 2802 of configuration 802 (FIG. 8) where all device receiving and emitting surfaces are oriented perpendicular to the top surface of carrier chip 1604, and portions of each input, filter, and output device are incorporated into carrier chip 1604. The description and variations for construction 2802 are identical to the description and variations for construction 2702 except that the components and functionality of control chips from construction 2702 have been integrated into carrier chip 1604 for construction 2802. For input device 104, components and functionality of control chip 1714, including portions of waveguide 706, have been integrated into carrier chip 1604 thereby eliminating contact surface 1662. Optional receiving chip 1712 interfaces with carrier chip 1604 through contact surface 1762, where contact surface 1762 provides electro-optic interconnection between optional receiving chip 1712, carrier chip 1604, and waveguide network 706. Likewise, emitting chip 1716 interfaces with carrier chip 1604 through contact surface 1764, where contact surface 1764 provides electro-optic interconnection between emitting chip 1716, carrier chip 1604, and waveguide network 706. For filter device 304, components and functionality of control chip 1734, including portions of waveguide 1634, have been integrated into carrier chip 1604 thereby eliminating contact surface 1664. Receiving chip 1732 interfaces with carrier chip 1604 through contact surface 1772, where contact surface 1772 provides electro-optic interconnection between receiving chip 1732, carrier chip 1604, and waveguide network 1634. Emitting chip 1736 interfaces with carrier chip 1604 through contact surface 1774, where contact surface 1774 provides electro-optic interconnection between emitting chip 1736, carrier chip 1604, and waveguide network 1634. For output device 106, components and functionality of control chip 1754, including portions of waveguide 1654, have been integrated into carrier chip 1604 thereby eliminating contact surface 1666. Receiving chip 1752 interfaces with carrier chip 1604 through contact surface 1782, where contact surface 1782 provides electro-optic interconnection between receiving chip 1752, carrier chip 1604, and waveguide network 1654. Likewise, optional emitting chip 1756 interfaces with carrier chip 1604 through contact surface 1784, where contact surface 1784 provides electro-optic interconnection between optional emitting chip 1756, carrier chip 1604, and waveguide network 1654. All variations of construction 2702 apply to construction 2802. Any variation of construction 2802 may be combined into a new variation of construction 2802.

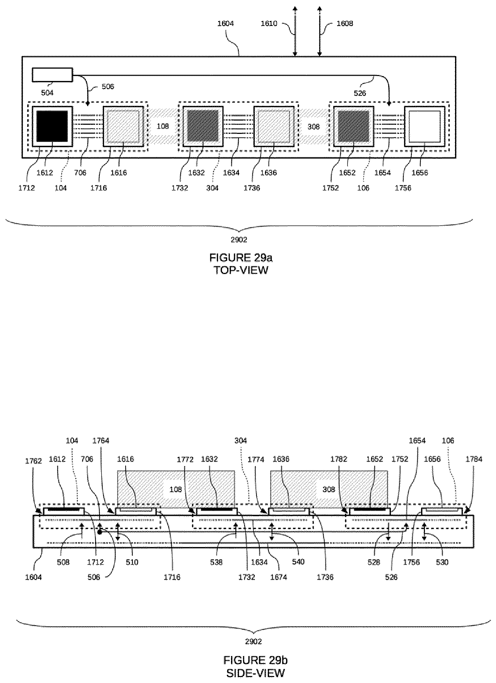

FIG. 29a and FIG. 29b show a construction 2902 of configuration 802 (FIG. 8) where all device receiving and emitting surfaces are oriented parallel to the top surface of carrier chip 1604, and portions of each input, filter, and output device are incorporated into carrier chip 1604. The description and variations for construction 2902 are identical to the description and variations for construction 2802 except that optional receiving chip 1712, emitting chip 1716, receiving chip 1732, emitting chip 1736, receiving chip 1752, and optional emitting chip 1756 are oriented parallel to the top surface of carrier chip 1604 such that all receiving and emitting surfaces are oriented parallel to the top surface of carrier chip 1604. construction 2902 is similar to construction 2602, except that portions of input device 104, filter device 304, and output device 106 have been integrated into carrier chip 1604. All variations of construction 2802 apply to construction 2902. Any variation of construction 2902 may be combined into a new variation of construction 2902.

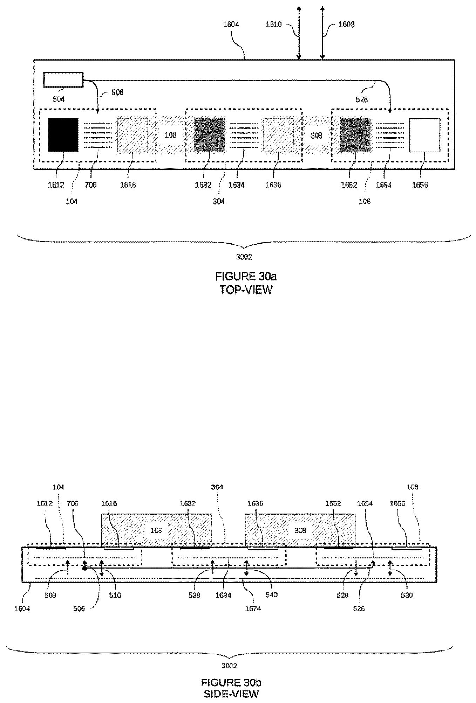

FIG. 30a and FIG. 30b show a construction 3002 of configuration 802 (FIG. 8) where all device receiving and emitting surfaces are oriented parallel to the top surface of carrier chip 1604, and all input, filter, and output devices are incorporated into carrier chip 1604. The description and variations for construction 3002 are identical to the description and variations for construction 2902 except that all components of input device 104, filter device 304, and output device 106 are mounted, bonded, attached, incorporated, embedded, or fabricated within carrier chip 1604 thereby eliminating optional receiving chip 1712, emitting chip 1716, receiving chip 1732, emitting chip 1736, receiving chip 1752, and optional emitting chip 1756. All variations of construction 2602 apply to construction 3002. Any variation of construction 3002 may be combined into a new variation of construction 3002.

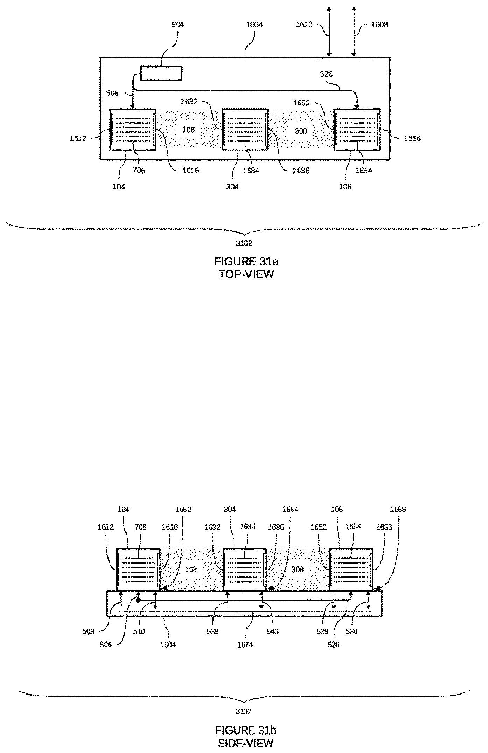

FIG. 31a and FIG. 31b show a construction 3102 of configuration 802 (FIG. 8) where all device receiving and emitting surfaces are oriented perpendicular to the top surface of carrier chip 1604. The description and variations for construction 3102 are identical to the description and variations for construction 2602 except that input device 104, filter device 304, and output device 106 are interfaced to carrier chip 1604 such that optional receiving surface 1612, emitting surface 1616, receiving surface 1632, emitting surface 1636, receiving surface 1652, and optional emitting surface 1656 are oriented perpendicular to the top surface of carrier chip 1604. All variations of construction 2602 apply to construction 3102. Any variation of construction 3102 may be combined into a new variation of construction 3102.

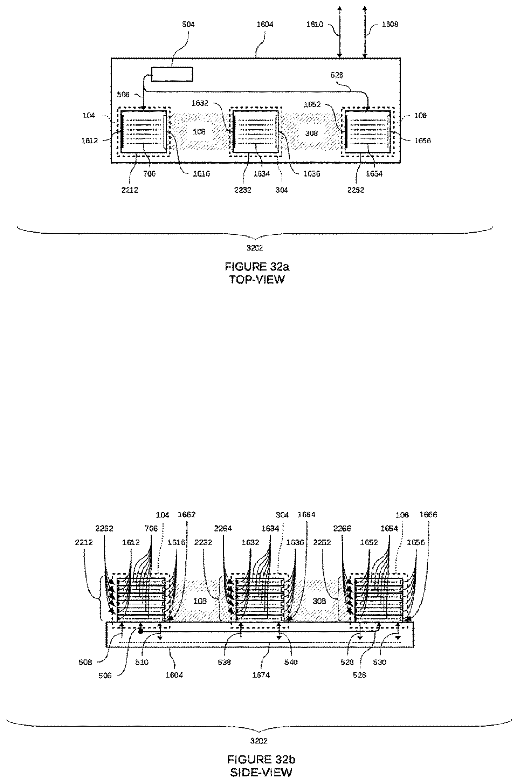

FIG. 32a and FIG. 32b show a construction 3202 of configuration 802 (FIG. 8) where all device receiving and emitting surfaces are oriented perpendicular to the top surface of carrier chip 1604, and all input, filter, and output devices are comprised of multiple stacked chips. The description and variations for construction 3202 are identical to the description and variations for construction 3102 except that input device 104, filter device 304, and output device 106 are comprised of multiple chips stacked parallel to the top surface of carrier chip 1604. Input device 104 is comprised of chip stack 2212 which contains optional receiving surface 1612, waveguide network 706, and emitting surface 1616. Each chip in chip stack 2212 is comprised of one or multiple rows of the receiving array (not shown) of optional receiving surface 1612, one or multiple rows of the emitting array (not shown) of emitting surface 1616, and the necessary electro-optic components and/or parts of waveguide network 706 to provide the functionality required by input device 104 for the portion of optional receiving surface 1612 and emitting surface 1616 within each chip and to interconnect with adjacent chips through contact surface 2262 between each chip in chip stack 2212. There are as many chips in chip stack 2212 as required to construct optional receiving surface 1612 and emitting surface 1616 to the dimensions required for input device 104. Chip stack 2212 interfaces with carrier chip 1604 through contact surface 1662 as described for input device 104 of construction 1604 and its variations. Filter device 304 is comprised of chip stack 2232 which contains receiving surface 1632, waveguide network 1634, and emitting surface 1636. Each chip in chip stack 2232 is comprised of one or multiple rows of the receiving array (not shown) of receiving surface 1632, one or multiple rows of the emitting array (not shown) of emitting surface 1636, and the necessary electro-optic components and/or parts of waveguide network 1634 to provide the functionality required by filter device 304 for the portion of receiving surface 1632 and emitting surface 1636 within each chip and to interconnect with adjacent chips through contact surface 2264 between each chip in chip stack 2232. There are as many chips in chip stack 2232 as required to construct receiving surface 1632 and emitting surface 1636 to the dimensions required for filter device 304. Chip stack 2212 interfaces with carrier chip 1604 through contact surface 1664 as described for filter device 304 of construction 1604 and its variations. Output device 106 is comprised of chip stack 2252 which contains receiving surface 1652, waveguide network 1654, and optional emitting surface 1656. Each chip in chip stack 2252 is comprised of one or multiple rows of the receiving array (not shown) of receiving surface 1652, one or multiple rows of the emitting array (not shown) of optional emitting surface 1656, and the necessary electro-optic components and/or parts of waveguide network 1654 to provide the functionality required by output device 106 for the portion of receiving surface 1652 and optional emitting surface 1656 within each chip and to interconnect with adjacent chips through contact surface 2266 between each chip in chip stack 2252. There are as many chips in chip stack 2252 as required to construct receiving surface 1652 and optional emitting surface 1656 to the dimensions required for output device 106. Chip stack 2252 interfaces with carrier chip 1604 through contact surface 1666 as described for output device 106 of construction 1604 and its variations. All variations of construction 3102 apply to construction 3202. Any variation of construction 3202 may be combined into a new variation of construction 3202.

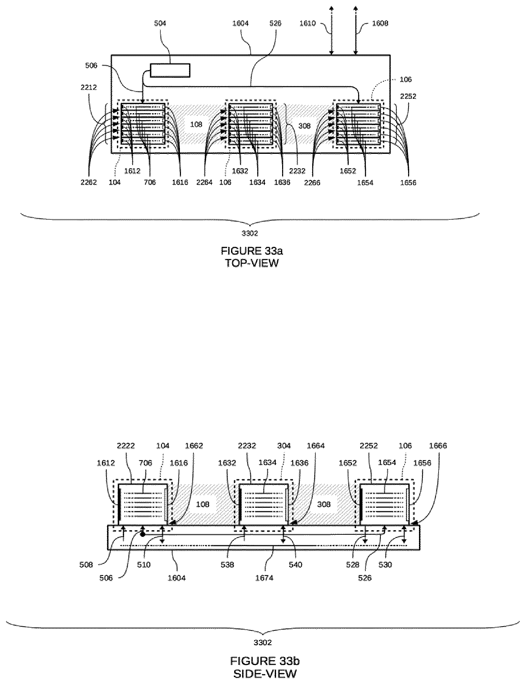

FIG. 33a and FIG. 33b show a construction 3302 of configuration 802 (FIG. 8) where all device receiving and emitting surfaces are oriented perpendicular to the top surface of carrier chip 1604, and all input, filter, and output devices are comprised of multiple chips stacked perpendicular to the top surface of carrier chip 1604. The description and variations for construction 3302 are identical to the description and variations for construction 3102 except that input device 104, filter device 304, and output device 106 are comprised of multiple chips stacked perpendicular to the top surface of carrier chip 1604. Input device 104 is comprised of chip stack 2212 which contains optional receiving surface 1612, waveguide network 706, and emitting surface 1616. Each chip in chip stack 2212 is comprised of one or multiple columns of the receiving array (not shown) of optional receiving surface 1612, one or multiple columns of the emitting array (not shown) of emitting surface 1616, and the necessary electro-optic components and/or parts of waveguide network 706 to provide the functionality required by input device 104 for the portion of optional receiving surface 1612 and emitting surface 1616 within each chip and to interconnect with adjacent chips through contact surface 2262 between each chip in chip stack 2212. There are as many chips in chip stack 2212 as required to construct optional receiving surface 1612 and emitting surface 1616 to the dimensions required for input device 104. Chip stack 2212 interfaces with carrier chip 1604 through contact surface 1662 as described for input device 104 of construction 1604 and its variations. Filter device 304 is comprised of chip stack 2232 which contains receiving surface 1632, waveguide network 1634, and emitting surface 1636. Each chip in chip stack 2232 is comprised of one or multiple columns of the receiving array (not shown) of receiving surface 1632, one or multiple columns of the emitting array (not shown) of emitting surface 1636, and the necessary electro-optic components and/or parts of waveguide network 1634 to provide the functionality required by filter device 304 for the portion of receiving surface 1632 and emitting surface 1636 within each chip and to interconnect with adjacent chips through contact surface 2264 between each chip in chip stack 2232. There are as many chips in chip stack 2232 as required to construct receiving surface 1632 and emitting surface 1636 to the dimensions required for filter device 304. Chip stack 2212 interfaces with carrier chip 1604 through contact surface 1664 as described for filter device 304 of construction 1604 and its variations. Output device 106 is comprised of chip stack 2252 which contains receiving surface 1652, waveguide network 1654, and optional emitting surface 1656. Each chip in chip stack 2252 is comprised of one or multiple columns of the receiving array (not shown) of receiving surface 1652, one or multiple columns of the emitting array (not shown) of optional emitting surface 1656, and the necessary electro-optic components and/or parts of waveguide network 1654 to provide the functionality required by output device 106 for the portion of receiving surface 1652 and optional emitting surface 1656 within each chip and to interconnect with adjacent chips through contact surface 2266 between each chip in chip stack 2252. There are as many chips in chip stack 2252 as required to construct receiving surface 1652 and optional emitting surface 1656 to the dimensions required for output device 106. Chip stack 2252 interfaces with carrier chip 1604 through contact surface 1666 as described for output device 106 of construction 1604 and its variations. All variations of construction 3102 apply to construction 3302. Any variation of construction 3302 may be combined into a new variation of construction 3302.

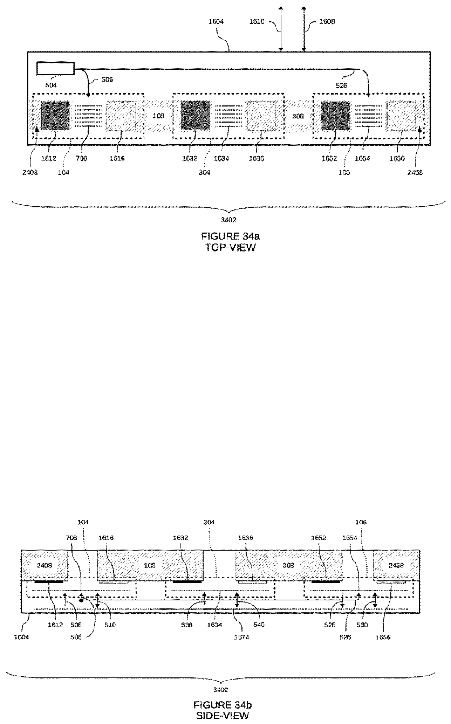

FIG. 34a and FIG. 34b show a construction 3402 of configuration 802 (FIG. 8) where all device receiving and emitting surfaces are oriented parallel to the top surface of carrier chip 1604, and all input devices, filter devices, output devices, and free space regions are incorporated into carrier chip 1604. The description and variations for construction 3402 are identical to the description and variations for construction 3002 except that all components of free space 108, free space 308, optional free space 2408, and optional free space 2458 are mounted, bonded, attached, incorporated, embedded, or fabricated within carrier chip 1604, where optional free space 2408 and/or optional free space 2458 may be a region air or other gas (such as nitrogen), a liquid (such as index-matching fluid), a solid (such as index-matching glass), or a vacuum containing zero or more lenses, beam splitters, polarizers, waveplates, waveguides, fibers, microlens arrays, or other optical components. Optional free space 2408 provides optical connection between optional receiving array 1612 and the surface of carrier chip 1604 to allow interconnection between input device 104 and other devices, configurations, constructions and/or their variations, where all optical elements within free space 2408 share a common optical axis with optional receiving array 1612. Similarly, optional free space 2458 provides optical connection between optional emitting array 1656 and the surface of carrier chip 1604 to allow interconnection between output device 106 and other devices, configurations, constructions and/or their variations, where all optical elements within free space 2458 share a common optical axis with optional receiving array 1656. All variations of construction 3002 apply to construction 3402. Any variation of construction 3402 may be combined into a new variation of construction 3402.

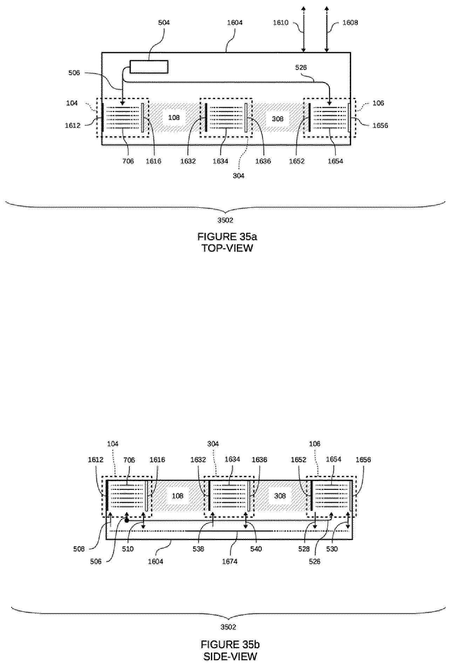

FIG. 35a and FIG. 35b show a construction 3502 of configuration 802 (FIG. 8) where all device receiving and emitting surfaces are oriented perpendicular to the top surface of carrier chip 1604, and all input devices, filter devices, output devices, and free space regions are incorporated into carrier chip 1604. The description and variations for construction 3502 are identical to the description and variations for construction 3102 except that all components of input device 104, filter device 304, output device 106, free space 108, and free space 308 are mounted, bonded, attached, incorporated, embedded, or fabricated within carrier chip 1604 thereby eliminating contact surface 1662, contact surface 1664, and contact surface 1666. Optional receiving surface 1612 and optional emitting surface 1656 are positioned at the side surfaces of carrier chip 1604 such that they could optionally interconnect with other devices, configurations, constructions and/or their variations via free space regions, waveguides, fibers, micro-lens arrays, or other light propagating medium (not shown). All variations of construction 3102 apply to construction 3502. Any variation of construction 3502 may be combined into a new variation of construction 3502.

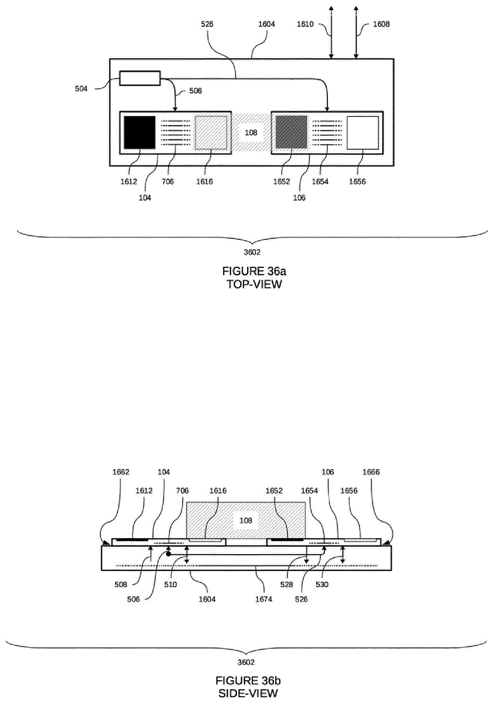

FIG. 36a and FIG. 36b show a construction 3602 of configuration 1002 (FIG. 10) where all devices and their receiving and emitting surfaces are oriented parallel to the top surface of carrier chip 1604. All components and devices of configuration 1002 are incorporated into construction 3602. Likewise, the description for configuration 1002 applies to construction 3602 except for the following additional details and described components. Carrier chip 1604 provides electrical and/or optical interconnection between itself and input device 104 and/or output device 106, where carrier chip 1604 may be a printed circuit board, integrated chip, chip carrier, interposer, or any other electrical and/or optical interconnecting platform. Laser 504 may be mounted, bonded, attached, embedded, or fabricated within or on carrier chip 1604. Light guide 506 and/or optional light guide 526 may be waveguides on or within carrier chip 1604. Input, output, and control data (not shown) for all devices connected to and/or including carrier chip 1604 may be transmitted to carrier chip 1604 via carrier chip data line(s) 1608 and carrier chip control line(s) 1610, where carrier chip data line(s) 1608 and/or carrier chip control line(s) 1610 may be electrical wires (including but not limited to pin grid arrays, ball grid arrays, or other chip carriers), optical fibers, waveguides, and/or any other data carrying or energy propagating medium whose terminals, connectors, and/or connection surfaces may be positioned on one or more surfaces and/or edges of carrier chip 1604. Electro-optic network 1674 may carry electrical and/or optical signals throughout carrier chip 1610 and between carrier chip data line(s) 1608, carrier chip control line(s) 1610, and/or to/from input device 104 and/or output device 106, where electro-optic network 1674 may contain electrical wires, optical fibers, waveguides, and/or any other data and/or energy propagating medium. Input device 104 is connected to carrier chip 1604 at electrical and/or optical contact surface 1662, where contact surface 1662 is the physical interface between input device 104 and carrier chip 1604 and may supply power, electrical, optical, and/or control data from carrier chip 1604 to input device 104. Input and control data (not shown) may be provided to input device 104 through contact surface 1662 via input data line(s) 508 and input control line(s) 510 which are connected to electro-optic network 1674. Output device 106 is connected to carrier chip 1604 at electrical and/or optical contact surface 1666, where contact surface 1666 is the physical interface between output device 106 and carrier chip 1604 and may supply power, electrical, optical, and/or control data from carrier chip 1604 to output device 106. Output data (not shown) may be received from output device 106 through contact surface 1662 via output data line(s) 528 and control data (not shown) may be transmitted to and received from output device 106 through contact surface 1662 via output control line(s) 530, where both output data line(s) 528 and output control line(s) 530 are connected to electro-optic network 1674. Carrier chip 1604 may perform pre- or - post processing of any data transmitted over electro-optic network 1674 including but not limited to modulation of light propagated by optical waveguides and/or mathematical operations on electrical signals propagated by wires in electro-optic network 1674. Propagation and/or modulation of light within input device 104 as described for configuration 1002 and its variations occurs within waveguide network 706. Input data (not shown) may be received by input device 104 via optional receiving surface 1612 and/or through contact surface 1662, where optional receiving surface 1612 is comprised of an array of optical waveguides coupled to waveguide network 706 and arranged in any configuration and/or variation as described for waveguide arrays of device 5604 (FIG. 56-58). Likewise, input device 104 includes emitting surface 1616 that emits light propagated by and/or modulated within waveguide network 706 into free space 108, where emitting surface 1616 is comprised of an array of optical waveguides coupled to waveguide network 706 and arranged in any configuration and/or variation as described for waveguide arrays of device 5604 (FIG. 56-58). Propagation, modulation, and/or detection of light within output device 106 as described for configuration 1002 and its variations occurs within waveguide network 1654. Output data (not shown) may be received by output device 106 via receiving surface 1652, where receiving surface 1652 is comprised of an array of optical waveguides coupled to waveguide network 1654 and arranged in any configuration and/or variation as described for waveguide arrays of device 5604 (FIG. 56-58). Likewise, output device 106 may include an optional emitting surface 1656 that emits light propagated by and/or modulated within waveguide network 1654, where emitting surface 1656 is comprised of an array of optical waveguides coupled to waveguide network 1654 and arranged in any configuration and/or variation as described for waveguide arrays of device 5604 (FIG. 56-58).

In one variation of construction 3602, input device 104 has optional receiving surface 1612 whose receiving array is coupled to an off-device waveguide or array of waveguides (not shown) that provide input data, such as from another optical system, where receiving surface 1612 may have any number of waveguides in its receiving array. In a second variation of construction 3602, input device 104 has optional receiving surface 1612 whose receiving array is coupled to an off-device fiber or array of fibers (not shown) that provide input data, such as from another optical system, where receiving surface 1612 may have any number of waveguides in its receiving array. In a third variation of construction 3602, input device 104 has optional receiving surface 1612 whose receiving array is coupled to free space (not shown) that provides input data, such as from another optical system, where receiving surface 1612 may have any number of waveguides in its receiving array. In a fourth variation of construction 3602, input device 104 has optional receiving surface 1612 as described in the first, second, and/or third variations of construction 3602, and input data for input device 104 is only received via receiving surface 1612. In a fifth variation of construction 3602, input device 104 has optional receiving surface 1612 as described in the first, second, and/or third variations of construction 3602, and input data for input device 104 is received via receiving surface 1612 and/or input data line(s) 508. In a sixth variation of construction 3602, input device 104 has no optional receiving surface 1612 and input data is only supplied via input data line(s) 508 from carrier chip 1604. In a seventh variation of construction 3602, output device 106 has optional emitting surface 1656 whose emitting array is coupled to an off-device waveguide or array of waveguides (not shown) to provide output data, such as to another optical system, where emitting surface 1656 may have any number of waveguides in its emitting array. In an eighth variation of construction 3602, output device 106 has optional emitting surface 1656 whose emitting array is coupled to an off-device fiber or array of fibers (not shown) to provide output data, such as to another optical system, where emitting surface 1656 may have any number of waveguides in its emitting array. In a ninth variation of construction 3602, output device 106 has optional emitting surface 1656 whose emitting array is coupled to free space (not shown) to provide output data, such as to another optical system, where emitting surface 1656 may have any number of waveguides in its emitting array. In a tenth variation of construction 3602, output device 106 has optional emitting surface 1656 as described in the seventh, eighth, and/or ninth variations of construction 3602, and input data for output device 106 is only received via emitting surface 1656. In an eleventh variation of construction 3602, output device 106 has optional emitting surface 1656 as described in the seventh, eighth, and/or ninth variations of construction 3602, and output data for output device 106 is transmitted via emitting surface 1656 and/or output data line(s) 528. In a twelfth variation of construction 3602, output device 106 has no optional emitting surface 1656 and output data is only transmitted via output data line(s) 528 to carrier chip 1604. In a thirteenth variation of construction 3602, which may be combined with any of variation one through twelve of construction 3602 or any other variation, the basis configuration is instead configuration 1102 (FIG. 11) where there is only one laser source, internal on-device laser 704 coupled to waveguide network 706, and optional reference light guide 526 may be coupled to waveguide network 706 through optional waveguide coupler 708. In a fourteenth variation of construction 3602, which may be combined with any of variation one through twelve of construction 3602 or any other variation, the basis configuration is instead configuration 1502 (FIG. 15) where there are no on-configuration laser sources, and optional reference light guide 526 may be coupled to waveguide network 706 through optional waveguide coupler 708. Any variation of construction 3602 may be combined into a new variation of construction 3602.

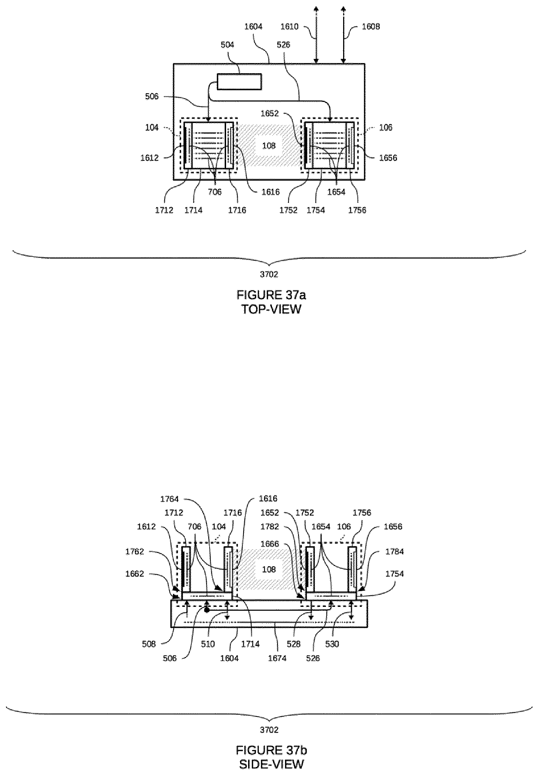

FIG. 37a and FIG. 37b show a construction 3702 of configuration 1002 (FIG. 10) where all device receiving and emitting surfaces are oriented perpendicular to the top surface of carrier chip 1604. The description and variations for construction 3702 are identical to the description and variations for construction 3602 except that input and output devices have been split into multiple sub-device chips. Input device 104 is comprised of base control chip 1714, optional receiving chip 1712, and emitting chip 1716. Base control chip 1714 contains waveguide 706 and interfaces with carrier chip 1604 via contact surface 1662. Optional receiving chip 1712 contains optional receiving surface 1612 and interfaces with base control chip 1714 through contact surface 1762, where contact surface 1762 provides electro-optic interconnection between optional receiving chip 1712 and base control chip 1714. Likewise, emitting chip 1716 contains emitting surface 1616 and interfaces with base control chip 1714 through contact surface 1764, where contact surface 1764 provides electro-optic interconnection between emitting chip 1716 and base control chip 1714. Output device 106 is comprised of a base control chip 1754, receiving chip 1752, and optional emitting chip 1756. Base control chip 1754 contains waveguide 1654 and interfaces with carrier chip 1604 via contact surface 1666. Receiving chip 1752 contains receiving surface 1652 and interfaces with base control chip 1754 through contact surface 1782, where contact surface 1782 provides electro-optic interconnection between receiving chip 1752 and base control chip 1754. Likewise, optional emitting chip 1756 contains optional emitting surface 1656 and interfaces with base control chip 1754 through contact surface 1784, where contact surface 1784 provides electro-optic interconnection between optional emitting chip 1756 and base control chip 1754. All variations of construction 3602 apply to construction 3702, except for the following. Any variation of construction 3702 that has optional receiving surface 1612 will also have optional receiving chip 1712, and any variation that does not have optional receiving surface 1612 will not have optional receiving chip 1712. Likewise, any variation of construction 3702 that has optional emitting surface 1656 will also have optional emitting chip 1756, and any variation that does not have optional emitting surface 1656 will not have optional receiving chip 1756. Any variation of construction 3702 may be combined into a new variation of construction 3702.

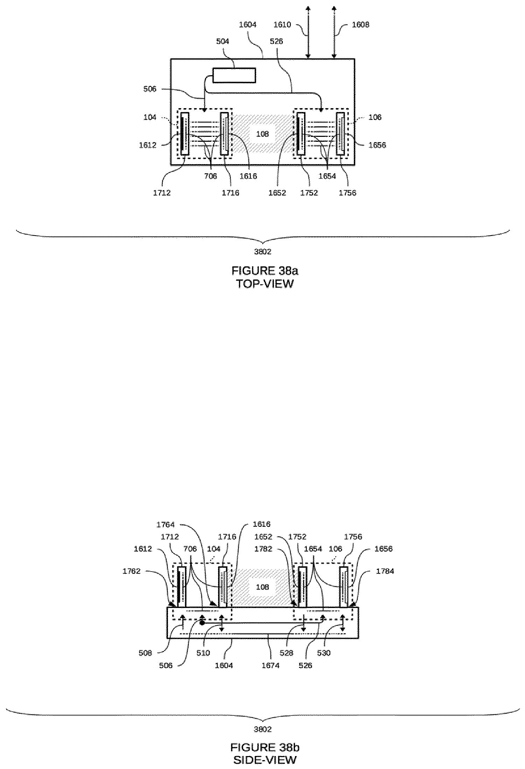

FIG. 38a and FIG. 38b show a construction 3802 of configuration 1002 (FIG. 10) where all device receiving and emitting surfaces are oriented perpendicular to the top surface of carrier chip 1604, and portions of each input and output device are incorporated into carrier chip 1604. The description and variations for construction 3802 are identical to the description and variations for construction 3702 except that the components and functionality of control chips from construction 3702 have been integrated into carrier chip 1604 for construction 3802. For input device 104, components and functionality of control chip 1714, including portions of waveguide 706, have been integrated into carrier chip 1604 thereby eliminating contact surface 1662. Optional receiving chip 1712 interfaces with carrier chip 1604 through contact surface 1762, where contact surface 1762 provides electro-optic interconnection between optional receiving chip 1712, carrier chip 1604, and waveguide network 706. Likewise, emitting chip 1716 interfaces with carrier chip 1604 through contact surface 1764, where contact surface 1764 provides electro-optic interconnection between emitting chip 1716, carrier chip 1604, and waveguide network 706. For output device 106, components and functionality of control chip 1754, including portions of waveguide 1654, have been integrated into carrier chip 1604 thereby eliminating contact surface 1666. Receiving chip 1752 interfaces with carrier chip 1604 through contact surface 1782, where contact surface 1782 provides electro-optic interconnection between receiving chip 1752, carrier chip 1604, and waveguide network 1654. Likewise, optional emitting chip 1756 interfaces with carrier chip 1604 through contact surface 1784, where contact surface 1784 provides electro-optic interconnection between optional emitting chip 1756, carrier chip 1604, and waveguide network 1654. All variations of construction 3702 apply to construction 3802. Any variation of construction 3802 may be combined into a new variation of construction 3802.

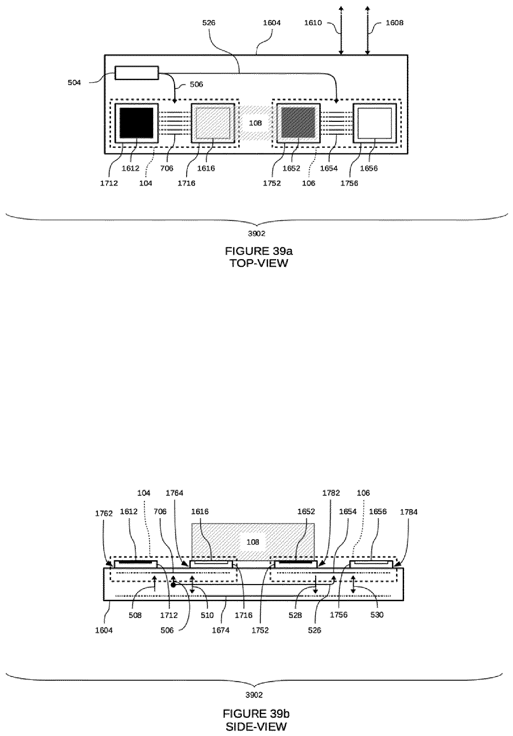

FIG. 39a and FIG. 39b show a construction 3902 of configuration 1002 (FIG. 10) where all device receiving and emitting surfaces are oriented parallel to the top surface of carrier chip 1604, and portions of each input and output device are incorporated into carrier chip 1604. The description and variations for construction 3902 are identical to the description and variations for construction 3802 except that optional receiving chip 1712, emitting chip 1716, receiving chip 1752, and optional emitting chip 1756 are oriented parallel to the top surface of carrier chip 1604 such that all receiving and emitting surfaces are oriented parallel to the top surface of carrier chip 1604. Construction 3902 is similar to construction 3602, except that portions of input device 104 and output device 106 have been integrated into carrier chip 1604. All variations of construction 3802 apply to construction 3902. Any variation of construction 3902 may be combined into a new variation of construction 3902.

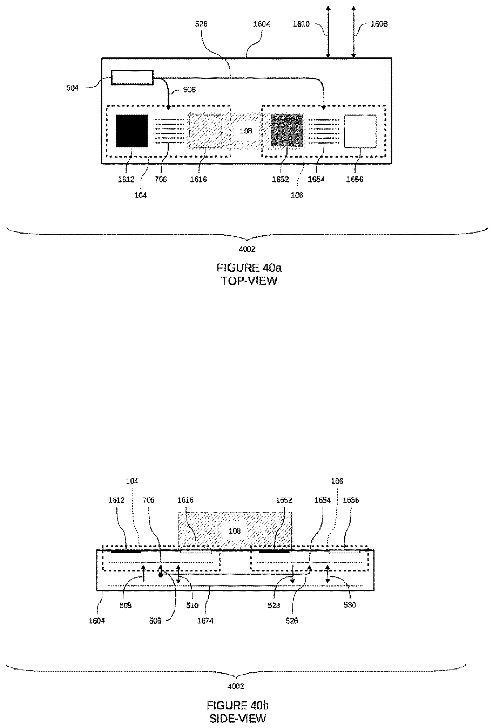

FIG. 40a and FIG. 40b show a construction 4002 of configuration 1002 (FIG. 10) where all device receiving and emitting surfaces are oriented parallel to the top surface of carrier chip 1604, and all input and output devices are incorporated into carrier chip 1604. The description and variations for construction 4002 are identical to the description and variations for construction 3902 except that all components of input device 104 and output device 106 are mounted, bonded, attached, incorporated, embedded, or fabricated within carrier chip 1604 thereby eliminating optional receiving chip 1712, emitting chip 1716, receiving chip 1752, and optional emitting chip 1756. All variations of construction 3602 apply to construction 4002. Any variation of construction 4002 may be combined into a new variation of construction 4002.

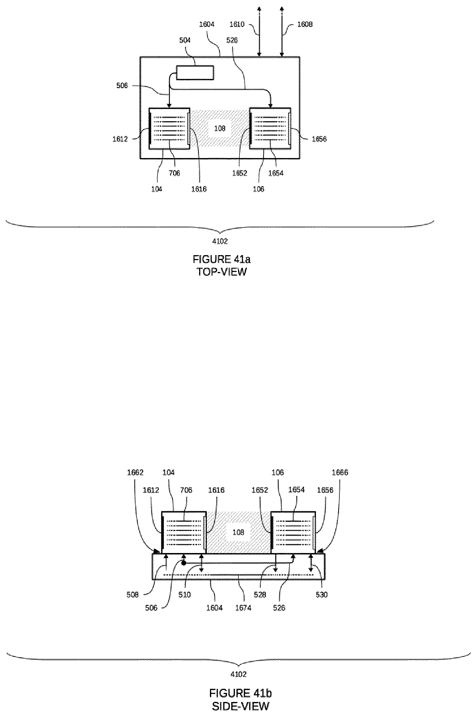

FIG. 41a and FIG. 41b show a construction 4102 of configuration 1002 (FIG. 10) where all device receiving and emitting surfaces are oriented perpendicular to the top surface of carrier chip 1604. The description and variations for construction 4102 are identical to the description and variations for construction 3602 except that input device 104 and output device 106 are interfaced to carrier chip 1604 such that optional receiving surface 1612, emitting surface 1616, receiving surface 1652, and optional emitting surface 1656 are oriented perpendicular to the top surface of carrier chip 1604. All variations of construction 3602 apply to construction 4102. Any variation of construction 4102 may be combined into a new variation of construction 4102.

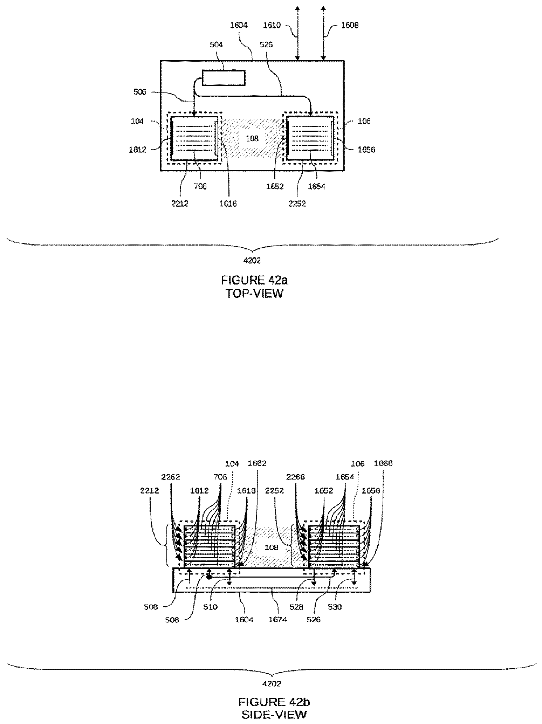

FIG. 42a and FIG. 42b show a construction 4202 of configuration 1002 (FIG. 10) where all device receiving and emitting surfaces are oriented perpendicular to the top surface of carrier chip 1604, and all input and output devices are comprised of multiple stacked chips. The description and variations for construction 4202 are identical to the description and variations for construction 4102 except that input device 104 and output device 106 are comprised of multiple chips stacked parallel to the top surface of carrier chip 1604. Input device 104 is comprised of chip stack 2212 which contains optional receiving surface 1612, waveguide network 706, and emitting surface 1616. Each chip in chip stack 2212 is comprised of one or multiple rows of the receiving array (not shown) of optional receiving surface 1612, one or multiple rows of the emitting array (not shown) of emitting surface 1616, and the necessary electro-optic components and/or parts of waveguide network 706 to provide the functionality required by input device 104 for the portion of optional receiving surface 1612 and emitting surface 1616 within each chip and to interconnect with adjacent chips through contact surface 2262 between each chip in chip stack 2212. There are as many chips in chip stack 2212 as required to construct optional receiving surface 1612 and emitting surface 1616 to the dimensions required for input device 104. Chip stack 2212 interfaces with carrier chip 1604 through contact surface 1662 as described for input device 104 of construction 1604 and its variations. Output device 106 is comprised of chip stack 2252 which contains receiving surface 1652, waveguide network 1654, and optional emitting surface 1656. Each chip in chip stack 2252 is comprised of one or multiple rows of the receiving array (not shown) of receiving surface 1652, one or multiple rows of the emitting array (not shown) of optional emitting surface 1656, and the necessary electro-optic components and/or parts of waveguide network 1654 to provide the functionality required by output device 106 for the portion of receiving surface 1652 and optional emitting surface 1656 within each chip and to interconnect with adjacent chips through contact surface 2266 between each chip in chip stack 2252. There are as many chips in chip stack 2252 as required to construct receiving surface 1652 and optional emitting surface 1656 to the dimensions required for output device 106. Chip stack 2252 interfaces with carrier chip 1604 through contact surface 1666 as described for output device 106 of construction 1604 and its variations. All variations of construction 4102 apply to construction 4202. Any variation of construction 4202 may be combined into a new variation of construction 4202.

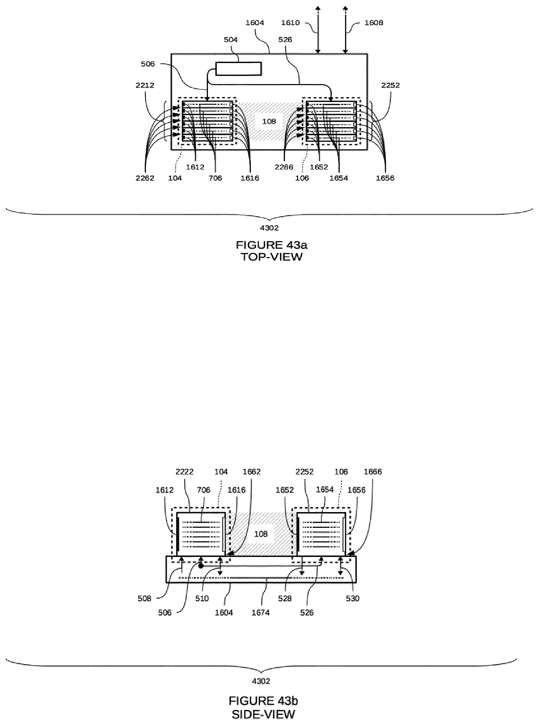

FIG. 43a and FIG. 43b show a construction 4302 of configuration 1002 (FIG. 10) where all device receiving and emitting surfaces are oriented perpendicular to the top surface of carrier chip 1604, and all input and output devices are comprised of multiple chips stacked perpendicular to the top surface of carrier chip 1604. The description and variations for construction 4302 are identical to the description and variations for construction 4102 except that input device 104 and output device 106 are comprised of multiple chips stacked perpendicular to the top surface of carrier chip 1604. Input device 104 is comprised of chip stack 2212 which contains optional receiving surface 1612, waveguide network 706, and emitting surface 1616. Each chip in chip stack 2212 is comprised of one or multiple columns of the receiving array (not shown) of optional receiving surface 1612, one or multiple columns of the emitting array (not shown) of emitting surface 1616, and the necessary electro-optic components and/or parts of waveguide network 706 to provide the functionality required by input device 104 for the portion of optional receiving surface 1612 and emitting surface 1616 within each chip and to interconnect with adjacent chips through contact surface 2262 between each chip in chip stack 2212. There are as many chips in chip stack 2212 as required to construct optional receiving surface 1612 and emitting surface 1616 to the dimensions required for input device 104. Chip stack 2212 interfaces with carrier chip 1604 through contact surface 1662 as described for input device 104 of construction 1604 and its variations. Output device 106 is comprised of chip stack 2252 which contains receiving surface 1652, waveguide network 1654, and optional emitting surface 1656. Each chip in chip stack 2252 is comprised of one or multiple columns of the receiving array (not shown) of receiving surface 1652, one or multiple columns of the emitting array (not shown) of optional emitting surface 1656, and the necessary electro-optic components and/or parts of waveguide network 1654 to provide the functionality required by output device 106 for the portion of receiving surface 1652 and optional emitting surface 1656 within each chip and to interconnect with adjacent chips through contact surface 2266 between each chip in chip stack 2252. There are as many chips in chip stack 2252 as required to construct receiving surface 1652 and optional emitting surface 1656 to the dimensions required for output device 106. Chip stack 2252 interfaces with carrier chip 1604 through contact surface 1666 as described for output device 106 of construction 1604 and its variations. All variations of construction 4102 apply to construction 4302. Any variation of construction 4302 may be combined into a new variation of construction 4302.

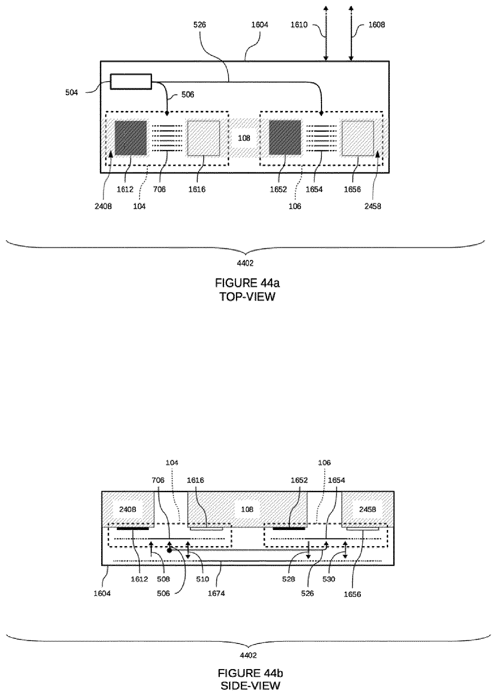

FIG. 44a and FIG. 44b show a construction 4402 of configuration 1002 (FIG. 10) where all device receiving and emitting surfaces are oriented parallel to the top surface of carrier chip 1604, and all input devices, output devices, and free space regions are incorporated into carrier chip 1604. The description and variations for construction 4402 are identical to the description and variations for construction 4002 except that all components of free space 108, optional free space 2408, and optional free space 2458 are mounted, bonded, attached, incorporated, embedded, or fabricated within carrier chip 1604, where optional free space 2408 and/or optional free space 2458 may be a region air or other gas (such as nitrogen), a liquid (such as index-matching fluid), a solid (such as index-matching glass), or a vacuum containing zero or more lenses, beam splitters, polarizers, waveplates, waveguides, fibers, microlens arrays, or other optical components. Optional free space 2408 provides optical connection between optional receiving array 1612 and the surface of carrier chip 1604 to allow interconnection between input device 104 and other devices, configurations, constructions and/or their variations, where all optical elements within free space 2408 share a common optical axis with optional receiving array 1612. Similarly, optional free space 2458 provides optical connection between optional emitting array 1656 and the surface of carrier chip 1604 to allow interconnection between output device 106 and other devices, configurations, constructions and/or their variations, where all optical elements within free space 2458 share a common optical axis with optional receiving array 1656.

All variations of construction 4002 apply to construction 4402. Any variation of construction 4402 may be combined into a new variation of construction 4402.

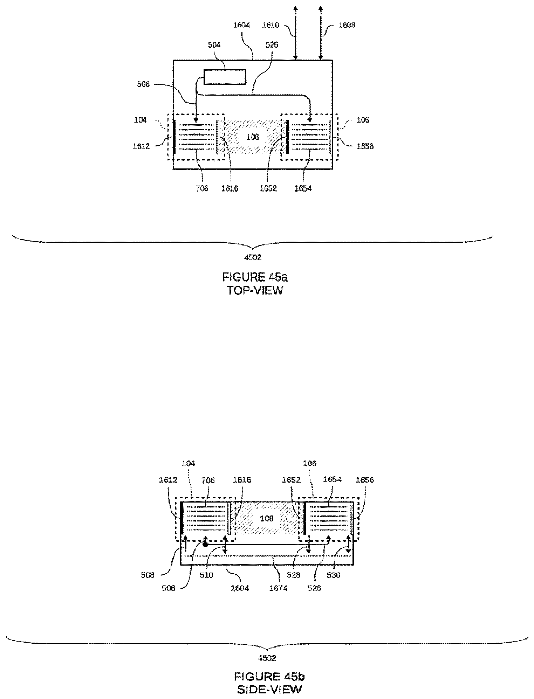

FIG. 45a and FIG. 45b show a construction 4502 of configuration 1002 (FIG. 10) where all device receiving and emitting surfaces are oriented perpendicular to the top surface of carrier chip 1604, and all input devices, output devices, and free space regions are incorporated into carrier chip 1604. The description and variations for construction 4502 are identical to the description and variations for construction 4102 except that all components of input device 104, output device 106, and free space 108 are mounted, bonded, attached, incorporated, embedded, or fabricated within carrier chip 1604 thereby eliminating contact surface 1662 and contact surface 1666. Optional receiving surface 1612 and optional emitting surface 1656 are positioned at the side surfaces of carrier chip 1604 such that they could optionally interconnect with other devices, configurations, constructions and/or their variations via free space regions, waveguides, fibers, micro-lens arrays, or other light propagating medium (not shown).

All variations of construction 4102 apply to construction 4502. Any variation of construction 4502 may be combined into a new variation of construction 4502.

The possible constructions of configurations shown in FIG. 5 through FIG. 15 are not limited to the constructions shown in FIG. 16a through FIG. 45b and may vary from the constructions by physical dimensions, number of elements, components, devices, and/or systems, and/or by the layout and/or positioning of elements, components, devices, and/or systems such as to improve manufacturing efficiency and/or to make the construction satisfy form-factor requirements, including but not limited to more compact and/or modular designs. Likewise, the possible constructions of configurations shown may vary in their external interfaces and/or packaging from the constructions shown such as to support electrical and/or optical interconnection on any surface and/or face of the possible construction with another device, system, configuration, and/or construction where a possible construction may include but is not limited to zero or more electrical wires, pins, and/or pads, optical fibers, waveguides, couplers, and/or any other light or energy propagating medium and/or connector to facilitate such interconnection.

All and possible constructions, configurations, systems, devices, and/or their variations may be connected into complex systems to perform various tasks, where there may be any number of connected constructions, configurations, systems, devices and/or their variations in a given complex system. Data may enter and/or exit the complex system as electrical and/or optical information, where data that enters the complex system in a given form (i.e encoding, compression, modulation, or otherwise) or by a given carrier type (i.e. electrical, optical, or otherwise) need not exit the complex system by the same form or carrier type. Likewise, data within the complex system may move between the electrical and/or optical domain during processing as the data moves between components of the complex system, where the data may undergo modification and may modulate and/or be modulated by other data and/or signals.

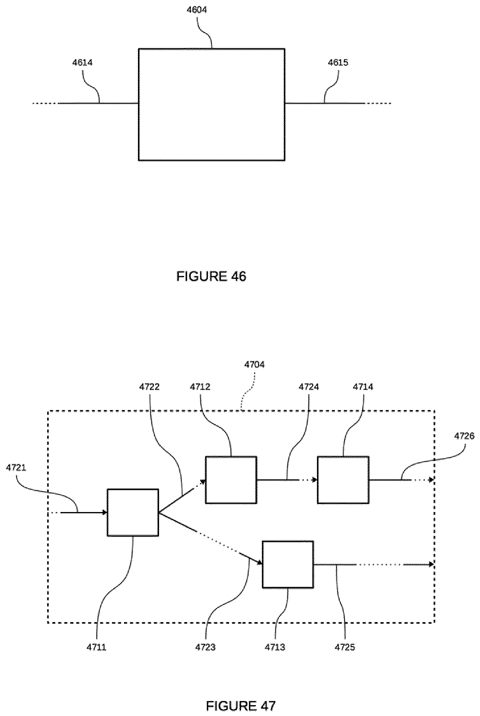

FIG. 46 shows complex system 4604, a generic complex optical system with one or more sub-system components (not shown), where the sub-system components may be any and/or possible complex optical system, construction, configuration, system, device, and/or their variations. The sub-system components (not shown) may be interconnected via electrical wires, optical fibers, waveguides, free space regions (including but not limited to vacuum, gas, liquid, or solid free space regions), and/or any other data carrying or energy propagating medium (not shown). Input data is received via interconnect 4614 and output via interconnect 4615, where interconnect 4614-4615 may be one or more electrical wires, optical fibers, waveguides, free space regions (including but not limited to vacuum, gas, liquid, or solid free space regions), and/or any other data carrying or energy propagating medium. Interconnect 4614 and interconnect 4615 need not contain the same type of number of data or energy propagating components. complex system 4604 may be, but is not limited to, a printed circuit board with sub-system components (not shown) mounted, bonded, attached, and/or connected to its surface, a chip with sub-system components (not shown) mounted, bonded, attached, embedded, and/or fabricated within or on its surface, or a collection of discrete sub-system components (not shown) associated by their contribution to the requirements of complex system 4604, where such discrete sub-system components (not shown) may be physically remote from each other.

FIG. 47 shows complex system 4704, a possible configuration of complex system 4604 with four sub-system components. Sub-system 4711-4714 may be any and/or possible construction, configuration, system, device, and/or their variations connected by interconnect 4722-4724, where interconnect 4722-4724 may be one or more electrical wires, optical fibers, waveguides, free space regions (including but not limited to vacuum, gas, liquid, or solid free space regions), and/or any other data carrying or energy propagating medium. Input data is received via interconnect 4721 and output via interconnect 4725-4526, where interconnect 4721 and/or interconnect 4725-4726 may be one or more electrical wires, optical fibers, waveguides, free space regions (including but not limited to vacuum, gas, liquid, or solid free space regions), and/or any other data carrying or energy propagating medium.

Various forms of the optical information processing systems (including but not limited to one or more of their devices, configurations, constructions, complex systems, and/or their variations) could be used to replace some or all portions of a given information processing, analysis, and/or learning application device and/or system including but not limited to those designed for artificial intelligence, pattern recognition (audio, image, video, etc.), data pre-/post-processing, high-frequency trading, information and computer security, encryption and/or decryption, compression and/or decompression, encoding and/or decoding, and/or traditional computing system devices and/or components, including but not limited to complete replacement of traditional electrical computing systems.

For traditional computing system components, the optical information processing systems could be used to replace electrical, optical, or electro-optic networking systems, storage systems, and/or data processing systems as a optical networking system, an optical storage system, and an optical information processing system, where any combination of the systems could be used to create an optical computing system. A variation of the optical computing system has electrical and/or optical data communication systems for communicating with other computing systems.

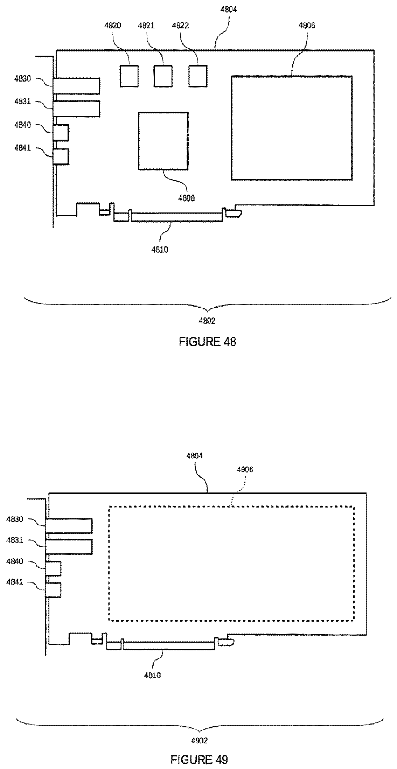

FIG. 48 shows computer peripheral device 4802, an example computer peripheral device incorporating a complex optical system. Printed circuit board 4804 may hold and electrically and/or optically interconnect complex system 4806, processor 4808, optional memory 4820-4822, optional optical networking connector 4830-4831, and optional electrical networking connector 4840-4841, where such interconnection is via one or more electrical wires, optical fibers, waveguides, free space regions (including but not limited to vacuum, gas, liquid, or solid free space regions), and/or any other data carrying or energy propagating medium. Complex system 4806 may be electrically and/or optically mounted, bonded, attached, and/or connected to printed circuit board 4804, where complex system 4806 may be any variation or configuration of complex system 4604 (FIG. 46). Input and/or output data may be transferred to and/or from computer peripheral device 4802 via optional optical networking connector 4830-4831, optional electrical networking connector 4840-4841, and/or electrical computer connector 4810. Complex system 4806 may receive and/or transmit data via optional optical networking connector 4830-4831, optional electrical networking connector 4840-4841, electrical computer connector 4810, optional memory 4820-4822, and/or processor 4808, where complex system 4806 may be directly connected to optional optical networking connector 4830-4831 via optical fiber, waveguide, and/or other light propagating medium. There may be additional components and/or devices on printed circuit board 4804 in addition to those shown. Likewise, relative positioning of the components on printed circuit board 4804 may differ from that shown.

In one variation of computer peripheral device 4802, there is no optional optical networking connector 4830-4831 and data is only transferred via optional electrical networking connector 4840-4841 and/or electrical computer connector 4810. In a second variation of computer peripheral device 4802, there is no optional electrical networking connector 4840-4841 and data is only transferred via optional optical networking connector 4830-4831 and/or electrical computer connector 4810. In a third variation of computer peripheral device 4802, there is no optional optical networking connector 4830-4831 nor optional electrical networking connector 4840-4841 and data is only transferred via electrical computer connector 4810. In a fourth variation of computer peripheral device 4802, there is no optional memory 4820-4822 and complex system 4806 and/or processor 4808 have the necessary memory and/or data delay capability to support the functional requirements of computer peripheral device 4802. A fifth variation of computer peripheral device 4802 combines variation four with any of variation one to three.

FIG. 49 shows computer peripheral device 4902, an example computer peripheral device where the functionality of electrical processor and/or memory components have been integrated into complex system 4906. The description and variations for computer peripheral device 4902 are identical to the description and variations for computer peripheral device 4802 except that the functionality provided by processor 4808 and/or optional memory 4820-4822 have been integrated into complex system 4906, where complex system 4906 may be any variation or configuration of complex system 4604 (FIG. 46).

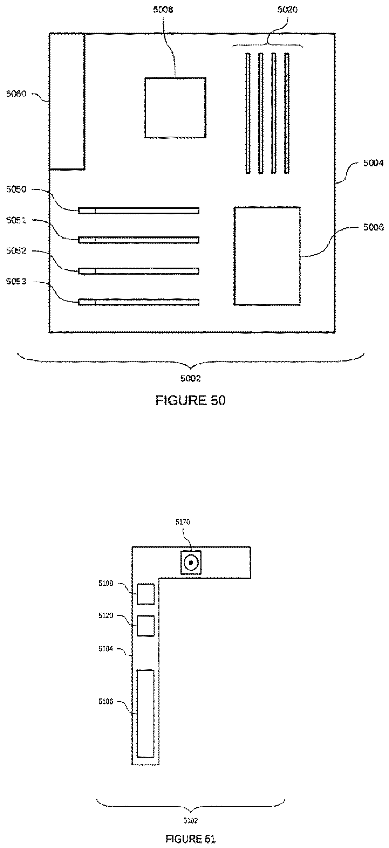

FIG. 50 shows a computer motherboard 5002, an example computer motherboard incorporating a complex optical system. Printed circuit board 5004 may hold and electrically and/or optically interconnect complex system 5006, processor 5008, memory 5020, optional electrical peripheral connector 5050-5053, optional input/output port 5060, where such interconnection is via one or more electrical wires, optical fibers, waveguides, free space regions (including but not limited to vacuum, gas, liquid, or solid free space regions), and/or any other data carrying or energy propagating medium. Complex system 5006 may be electrically and/or optically mounted, bonded, attached, and/or connected to printed circuit board 5004, where complex system 5006 may be any variation or configuration of complex system 4604 (FIG. 46). Complex system 5006 may receive and/or transmit data via processor 5008, memory 5020, optional PCI connector 5050-5053, and/or optional input/output port 5060. There may be additional components and/or devices on printed circuit board 5004 in addition to those shown. Likewise, relative positioning of the components on printed circuit board 5004 may differ from that shown.

In one variation of computer motherboard 5002, there is one or more of optional electrical peripheral connector 5050-5053. In a second variation of computer motherboard 5002, there are none of optional electrical peripheral connector 5050-5053. In a third variation of computer motherboard 5002, there is no optional input/output port 5060. A fourth variation of computer motherboard 5002 combines variation three with either variation one or two.

FIG. 51 shows smartphone motherboard 5102, an example smartphone motherboard incorporating a complex optical system. Printed circuit board 5104 may hold and electrically and/or optically interconnect complex system 5106, processor 5108, memory 5120, and camera 5170, where such interconnection is via one or more electrical wires, optical fibers, waveguides, free space regions (including but not limited to vacuum, gas, liquid, or solid free space regions), and/or any other data carrying or energy propagating medium. Complex system 5106 may be electrically and/or optically mounted, bonded, attached, and/or connected to printed circuit board 5104, where complex system 5106 may be any variation or configuration of complex system 4604 (FIG. 46). Complex system 5106 may receive and/or transmit data via processor 5108, memory 5120, and/or camera 5170, where complex system 5106 may be directly connected to camera 5170 via electrical wire, optical fiber, waveguide, and/or other light propagating or energy propagating medium. There may be additional components and/or devices on printed circuit board 5104 in addition to those shown. Likewise, relative positioning of the components on printed circuit board 5104 may differ from that shown.

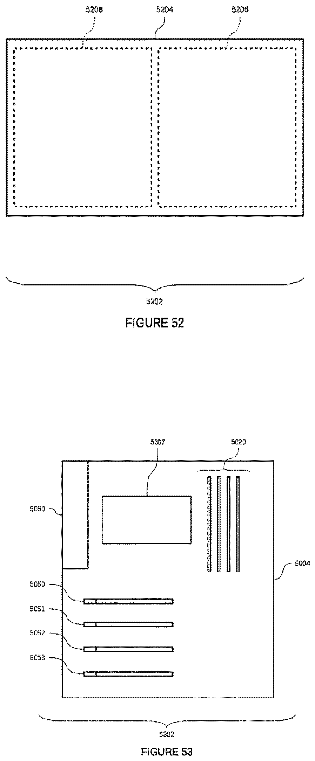

FIG. 52 shows electro-optic processor 5202, an example processor incorporating electrical processing unit(s) and a complex optical system. Carrier chip 5204 may hold and electrically and/or optically interconnect complex system 5206 and processor 5208, where such interconnection is via one or more electrical wires, optical fibers, waveguides, free space regions (including but not limited to vacuum, gas, liquid, or solid free space regions), and/or any other data carrying or energy propagating medium. Complex system 5206 may be electrically and/or optically mounted, bonded, attached, connected, embedded, or fabricated within or on carrier chip 5204, where complex system 5206 may be any variation or configuration of complex system 4604 (FIG. 46). Likewise, processor 5208 may be electrically and/or optically mounted, bonded, attached, connected, embedded, or fabricated within or on carrier chip 5204, where processor 5208 may include one or more electrical central processing units, graphics processing units, and/or memory components. Carrier chip 5204 may be a printed circuit board, integrated chip, chip carrier, interposer, or any other electrical and/or optical interconnecting platform. Carrier chip 5204 may have electrical wires (including but not limited to pin grid arrays, ball grid arrays, or other chip carriers), optical fibers, waveguides, and/or any other data carrying or energy propagating medium whose terminals, connectors, and/or connection surfaces may be positioned on one or more surfaces and/or edges of carrier chip 5204 to facilitate connection to a printed circuit board, socket, device, and/or other system. There may be additional components and/or devices on carrier chip 5204 in addition to those shown. Likewise, relative positioning of the components on printed circuit board 5204 may differ from that shown.

FIG. 53 shows computer motherboard 5302, an example computer motherboard incorporating an electro-optic processor. The description and variations for computer motherboard 5302 are identical to the description and variations for computer motherboard 5002 except that complex system 5006 and processor 5008 from computer motherboard 5002 have been replaced with electro-optic processor 5307, where electro-optic processor 5307 may be any variation or configuration of electro-optic processor 5202 (FIG. 52).

FIG. 54 shows electro-optic motherboard 5402, an example electro-optic computer motherboard incorporating a complex optical system. Carrier chip 5404 may hold and electrically and/or optically interconnect complex system 5406, optional optical networking connector 5430-5431, and optional electrical networking connector 5440-5441, where such interconnection is via one or more electrical wires, optical fibers, waveguides, free space regions (including but not limited to vacuum, gas, liquid, or solid free space regions), and/or any other data carrying or energy propagating medium. Complex system 5406 may be electrically and/or optically mounted, bonded, attached, connected, embedded, or fabricated within or on carrier chip 5404, where complex system 5406 may be any variation or configuration of complex system 4604 (FIG. 46). Input and/or output data may be transferred to and/or from electro-optic motherboard 5402 via optional optical networking connector 5430-5431 and/or optional electrical networking connector 5440-5441. Complex system 5406 may receive and/or transmit data via optional optical networking connector 5430-5431 and/or optional electrical networking connector 5440-5441, where complex system 5406 may be directly connected to optional optical networking connector 5430-5431 via optical fiber, waveguide, and/or other light propagating medium. Carrier chip 5404 may be a printed circuit board, integrated chip, chip carrier, interposer, or any other electrical and/or optical interconnecting platform. There may be additional components and/or devices on carrier chip 5404 in addition to those shown. Likewise, relative positioning of the components on carrier chip 5404 may differ from that shown.

In one variation of electro-optic motherboard 5402, there is no optional optical networking connector 5430-5431 and data is only transferred via optional electrical networking connector 5440-5441. In a second variation of electro-optic motherboard 5402, there is no optional electrical networking connector 5440-5441 and data is only transferred via optional optical networking connector 5430-5431.

FIG. 55 shows electro-optic high-performance computing system 5502, a server rack of connected electrical and/or electro-optic computer servers. Server rack 5504 contains computer server 5580-5586, where computer server 5580-5586 may be a traditional electrical computer server or an electro-optic computer server that incorporates an electro-optic motherboard, such as those shown in FIG. 50, FIG. 53, and FIG. 54. Computer server 5580-5586 are connected together and/or to external computer systems via electrical and/or optical networking cables. There may be additional and/or fewer computer servers, components, and/or devices in server rack 5504 in addition to those shown. Likewise, relative positioning of the computer servers and components in server rack 5504 may differ from that shown.

Complex systems and devices such as those shown in FIG. 46-55 may be used for many different applications including, but not limited to, artificial intelligence, pattern recognition (audio, image, video, etc.), data pre-/post-processing, high-frequency trading, information and computer security, encryption and/or decryption, compression and/or decompression, encoding and/or decoding, and/or traditional computing system device and/or component functionality , where a sufficiently complex system may completely replace traditional electrical computing systems in their entirety.

There are several potential advantages of using complex optical information processing systems for processing of large arrays of information, such as for image processing and/or artificial intelligence applications, where optical information processing systems have the potential to process high resolution image data at the same rate as low resolution image data by eliminating the requirement for image scaling, sampling, and/or compression (limited only by the waveguide array dimensions of the optical processing system), which is not feasible with traditional electrical processor hardware or dedicated AI chips. Additionally, if the complex optical system is designed to handle full resolution images (i.e. image or video data at the full resolution of a given camera), then such a complex system could be used in deep learning applications without any pooling. Traditional deep learning models implemented on electrical chips and devices require pooling and low resolution tensor/matrix operations because limitations in feasible hardware design make them inefficient at high resolutions, whereas complex optical systems are efficient regardless of the resolution and/or matrix dimensions (limited only by the waveguide emission and/or receiving array dimensions of the optical processing system).

Complex system array dimensions will differ depending on the target platform constraints. For a smartphone complex system, such as that shown in FIG. 51, the array might be between 4 and 6 mm in diameter, which for pixel pitch of 1 µm (as described previously for silicon-on-insulator waveguide array with a design wavelength of 1550 nm) would give a resolution range between 4000x4000 to 6000x6000 pixels. When constrained by the operating speeds of between 20 MHz and 30 GHz for the electro-optic components of the system (as described previously for modulating and photo-detecting components) the data throughput of the complex system will be between 320 TB/s and 480 PB/s for a 4 mm array, and 720 TB/s and 1 EB/s (all calculations assuming 10-bit data resolution per waveguide). However, for larger complex systems, such as those designed for use on a computer peripheral device like those shown in FIG. 48 and FIG. 49, the array be between 20 and 40 mm in diameter, which for pixel pitch of 1 µm would give a resolution range between 20000x20000 and 40000x40000 pixels. When constrained by the operating speeds of between 20 MHz and 30 GHz for the electro-optic components of the system the data throughput of the complex system will be between 8 PB/s and 12 EB/s for a 4 mm array, and 32 PB/s and 48 EB/s (all calculations assuming 10-bit data resolution per waveguide). Such an analysis is just an example and is not intended to limit the scope of the complex systems described, but rather to illustrate potential operating rates for the given design assumptions.

Likewise, the small- and large-array systems might target different use cases, such as for artificial intelligence applications where large-array systems may be used for training systems, while the small-array systems may be used for inference systems.

For artificial intelligence applications, such as deep learning, the optical information processing system could be used in a 4f system configuration as an optical convolution system to perform the convolution and deconvolution operations in a convolutional neural network, where the optical 4f system is effectively a single convolution, deconvolution, and/or nonlinear layer of a deep learning neural network. More complicated optical systems could be constructed by chaining multiple layers together (i.e. multiple devices, systems, configurations, constructions, complex systems, and/or their variations), where a sufficiently complicated system could completely implement a fully optical neural network. A more complicated system could be used to perform both convolution/deconvolution and nonlinear (such as ReLU) operations. A more complicated system could be used to perform convolution/deconvolution, nonlinear operations, and other mathematical operations such as addition and multiplication. A more complicated system could take raw input from sensors and directly process the information as an artificial neural network optical information processing system and output decisions electrically and/or optically, manipulate external devices, and/or pass information to further electrical and/or optical computing systems.

For pattern recognition, the optical information processing system could be used in a 4f system configuration as a cross-correlation system to perform cross-correlation between one or more datum or sets of data. A more complicated system could be used as a pattern recognition optical information processing system to process the cross-correlated output and recognize matches, either by peak-detection algorithms or in concert with a variation of the artificial intelligence system.

For high-frequency trading, the artificial neural network optical information processing system could be configured as an optical high-frequency trading decision system to make trade-decisions using logic trained using historical and simulated exchange data. A more complicated system could be used to perform differential and comparative operations between multiple data sources during the decision-making process. A more complicated system could be used to detect and adapt to time-varying trading patterns. A more complicated system could be used to learn and react to competitor trading algorithms heuristically. A more complicated system could combine any number of any variations of the optical high-frequency trading decision system to create a more robust decision-making system. A more complicated system combines any variation of the artificial neural network optical information processing system with any variation of the optical computing system to create an all-optical high-frequency trading system.

For information and computer security, the artificial neural network optical information processing system could be configured as an optical information security system to analyze information supplied indirectly or directly by sensors, networks, and memory storage systems to perform network, computer, and system security and defense operations, authentication and authorization operations, and other information security tasks.

For data pre-/post-processing, the optical information processing system could be configured as an optical data processing system to perform various mathematical operations to pre- and/or post-process information to be used by other optical information processing system variations and/or computer systems, such as scaling, filtering, segmenting, etc.

For encryption/decryption, the optical information processing system and/or artificial neural network optical information processing system could be configured as an optical encryption/decryption system.

For compression/decompression, the optical information processing system and/or the artificial neural network optical information processing system could be configured as a compression/decompression system.

For encoding/decoding, the optical information processing system and/or the artificial neural network optical information processing system could be configured as an encoding/decoding system.

In certain aspects, the term "communicate" is to be interpreted broadly and includes both one-way communication and any number of potential kinds of communication as for example bi-directional communication. It may simply include the transfer of data, a signal, or light from a first optical element to another optical element when referring to optical communication.

### CLAUSES

1. A spatial light modulating, SLM, device comprising:
   one or more optical inputs,
   one or more optical outputs,
   a plurality of waveguides arranged into an array of receivers and/or emitters, wherein each waveguide is coupled to one or more optical inputs, and
   at least one light modulating element for modulating light passing through at least one of the plurality of waveguides; wherein said waveguides and said light modulating elements are integrated in at least one common module with one of said optical inputs or optical outputs having an interface with a free space region occupied in part by a vacuum, gas, liquid, and/or solid medium.
2. A SLM device according to clause 1, wherein said module has an electro-optic interconnection for connection to a processing system.
3. A SLM device according to either clause 1 or clause 2, wherein the at least one light modulating element is in-line with the at least one of the plurality of waveguides.
4. A SLM device according to any one of the preceding clauses wherein the at least one light modulating element is a waveguide adjacent to the at least one of the plurality of waveguides.
5. A SLM device according to any one of the preceding clauses wherein the at least one light modulating element is enclosing the at least one of the plurality of waveguides.
6. A SLM device according to any one of the preceding clauses wherein the at least one light modulating element comprises one or more of the following: a thermo-optic phase-shifter, an electro-optic polymer, at least one gain component, and/or an evanescently-coupled-pump amplifier.
7. A SLM device according to any one of the preceding clauses wherein the optical input is off-device and coupled to each of the plurality of waveguides via a branching element.
8. A SLM device according to any one of clauses1 to 7, the device further comprising a further waveguide array for splitting the optical input into a plurality of light paths.
9. A SLM device according to any one of the preceding clauses further comprising a micro-lens array for capturing the modulated light after passing through at least one of the plurality of waveguides and projecting the captured modulated light towards a free space region occupied in part by a vacuum, gas, liquid, and/or solid medium.
10. A SLM device according to any one of the preceding clauses wherein the plurality of waveguides branch out from a single waveguide coupled to the optical input.
11. A SLM device according to any one of the preceding clauses wherein said module integrates a plurality of waveguides and possesses a light-emitting surface and/or a light-receiving surface.
12. A SLM device according to any one of the preceding clauses wherein the at least one of the plurality of waveguides has a planar light-emitting surface and/or a planar light-receiving surface.
13. A SLM device according to any one of the preceding clauses wherein the at least one of the plurality of waveguides has a non-planar light-emitting surface and/or a non-planar light-receiving surface.
14. A SLM device according to any one of the preceding clauses wherein said SLM device is self-emissive.
15. An optical processing system comprising a plurality of SLM devices according to any of the preceding clauses wherein at least two SLM devices communicate through a common free space region occupied in part by a vacuum, gas, liquid, and/or solid medium.
16. An optical processing system according to clause15, wherein at least one lens is optically positioned between said at least two SLM devices.
17. An optical processing system according to either clause15 or clause16, wherein at least one of said SLM devices interfaces with an electro-optic carrier.
18. An optical processing system according to any one of clauses15 to clause17, comprising at least one lens with a focal length *f* and any number of additional optical elements.
19. An optical processing system according to any one of clauses15 to 17, comprising at least one assembly with a focal length *f* and any number of additional optical elements.
20. An optical processing system according to any one of clauses15 to 17, wherein the optical path length of the free space between two connected devices is equal to 2f.
21. An optical processing system according to any one of clauses15 to 17, wherein the optical path length of the free space between two connected devices is at least 2f.
22. An optical processing system according to any one of clauses15 to 17, wherein the optical path length of the free space between two connected devices is one or more of: at least *f*, less *than f,* equal to *f.*
23. An optical processing system according to any one of clauses15 to 17, wherein the total optical path length of the free space between three successively connected devices is equal to 4f.
24. An optical processing system according to any one of clauses15 to 17, wherein the total optical path length of the free space between three successively connected devices is at least 4f.
25. An optical processing system according to any one of clauses15 to 17, wherein the total optical path length of the free space between three successively connected devices is one or more of: at least *f*, less than *f*, equal to*f.*
26. An optical processing system according to any one of clauses15 to 17, wherein one or more of said devices performs photodetection and detects one or more of the following: the phase of light; the amplitude of light; the polarization of light; the intensity of light; both the phase and amplitude of light; both the phase and intensity of light; both the phase and polarization of light; both the amplitude and polarization of light; both the intensity and polarization of light; optionally the intensity and the polarization may be detected simultaneously; the combination of phase, amplitude, and polarization of light; the combination of phase, intensity, and polarization of light.
27. An optical correlator comprising a plurality of SLM devices according to any one of clauses 1 to 14, wherein at least two SLM devices communicate through a common free space region occupied in part by a vacuum, gas, liquid, and/or solid medium.
28. A receiver-transmitter SLM device, comprising:
   a first plurality of elements arranged into an array of emitters,
   a second plurality of elements arranged into an array of receivers; and
   an array of waveguides coupling said array of emitters with said array of receivers; wherein said array of emitters, said array of receivers and said array of waveguides are integrated into a common module.
29. A receiver-transmitter SLM device according to clause28, wherein said module has an electro-optic interconnection for connection to a processing system.
30. A receiver-transmitter SLM device according to either clause28 or clause29, wherein the first plurality of elements are coupled to respective optical fibres for allowing the modulated light to exit the device.
31. A receiver-transmitter SLM device according to any one of clauses28 to 30, wherein the second plurality of elements are coupled to respective optical fibres for allowing the modulated light to enter the device.
32. A receiver-transmitter SLM device according to any of clauses28 to 31, further comprising at least one light modulating element for modulating light passing through the at least one waveguides.
33. A receiver-transmitter SLM device according to clause32, wherein the at least one light modulating element is in-line with the at least one waveguide.
34. A receiver-transmitter SLM device according to clause32 or clause33, wherein the at least one light modulating element is a waveguide adjacent to at least one waveguide.
35. A receiver-transmitter SLM device according to any of clauses32 to 34, wherein at least one light modulating element is enclosing part or all of the at least one waveguide.
36. A receiver-transmitter SLM device according to any of clauses32 to 35, wherein at least one light modulating element comprises one or more of the following a thermo-optic modulator, an electro-optic modulator, an acousto-optic modulator, a mechanical modulator, at least one gain component; optionally said at least one gain component comprises an evanescently-coupled-pump amplifier.
37. A receiver-transmitter SLM device according to any of clauses28 to 36, wherein the array of emitters is in a same plane as the array of receivers.
38. A receiver-transmitter SLM device according to any of clauses28 to 36, wherein the array of emitters is a plane orthogonal to the array of receivers.
39. A receiver-transmitter SLM device according to any of clauses28 to 36, wherein the array of emitters is in plane opposing the array of receivers.
40. A receiver-transmitter SLM device according to any of clauses28 to 39, wherein the number of emitters is equal to, greater than, or less than the number of receivers.
41. A system comprising at least one of an SLM device according to any one of the preceding clausesand at least one of a receiver-transmitter SLM device according to any of clauses28 to 40, configured to receive light with the array of receivers of the receiver-transmitter SLM device to thereby provide the optical input, wherein the plurality of waveguides of the self-emissive spatial light modulating, SLM, device branch out from a single waveguide coupled to the optical input.
42. A photo-detection device comprising an array of inputs, an array of outputs and a plurality of waveguides optically arranged between said array of inputs and said array of outputs, wherein said array of inputs, said array of outputs and a plurality of waveguides are integrated into a common module and a photo detector is provided to convert modulated light from the optical domain to the electrical domain.
43. A photo-detection device according to clause 42, further comprising at least one light modulating element for modulating light passing through at least one of the plurality of waveguides.
44. A photo-detection device according to either clause 42 or clause 43, wherein at least one of the plurality of waveguides terminates at one or a combination of the following: an interferometric photodetector, an electro-optic photodetector, and/or a differential photodetector.
45. A photo-detection device according to any one of clauses42 to 44, wherein one or more waveguides are split into multiple detectors for measuring multiple light properties.
46. A photo-detection device according to any one of clauses42 to 45, wherein said photo detector performs photodetection by one or more of the following: detecting the phase of light, detecting the amplitude of light, detecting the polarization of light, detecting the intensity of light, detecting both the phase and amplitude of light, detecting both the phase and intensity of light, detecting both the phase and polarization of light, detecting both the amplitude and polarization of light, detecting both the intensity and polarization of light; optionally the intensity and the polarization may be detected simultaneously, detecting a combination of the phase, amplitude, and polarization of light, detecting a combination of the phase, intensity, and polarization of light.
47. A display device comprising a SLM device according to any one of the preceding clauses.
48. A SLM-photo-detection device comprising one or more optical inputs, one or more optical outputs, a plurality of waveguides arranged into an array of receivers and/or emitters, wherein each waveguide is coupled to one or more optical inputs, and at least one light modulating element for modulating light passing through at least one of the plurality of waveguides; wherein said waveguides and said light modulating elements are integrated in at least one common module with one of said optical inputs or optical outputs having an interface with a free space region occupied in part by a vacuum, gas, liquid, and/or solid medium; said device further comprising one or more photo-detection elements for converting modulated light from the optical domain to the electrical domain, said photo-detection elements operating with a plurality of waveguide elements of said waveguides or of another plurality of waveguides; said plurality of waveguide elements being arranged to form an array of receivers.
49. A SLM-photo-detection device according to clause48 and in accordance with any one of the preceding clauses.
50. A receiver-transmitter-photo-detection device comprising:
   a first plurality of elements arranged into an array of emitters,
   a second plurality of elements arranged into an array of receivers; and
   at least one waveguide coupling at least one of the first plurality of elements to at least one of the second plurality of elements; said device further comprising one or more photo-detection elements for converting modulated light from the optical domain to the electrical domain, said photo-detection elements operating with one or more of said plurality of elements or with one or more of a further plurality of elements; said plurality of elements being arranged as part of said array of receivers or as a further array of receivers.
51. A receiver-transmitter-photo-detection device according to clause50 and in accordance with any one of the preceding clauses.
52. An optical information processing system which includes at least one SLM device according to any one of the appropriate preceding clauses.
53. An optical information processing system which includes at least one SLM-photo-detection device according to any of the appropriate preceding clauses.
54. An optical information processing system which includes at least one receiver-transmitter-photo-detection device according to any of the appropriate preceding clauses.
55. An optical information processing system which includes at least one receiver-transmitter SLM device and a photo-detection device according to any of the appropriate preceding clauses.
56. An optical information processing system which includes at least one SLM and a photo-detection device according to any of the appropriate preceding clauses.
57. An optical system comprising at least one SLM device according to any one of the preceding clauses wherein each one of the emitting or receiving surfaces from any given SLM shares a common optical axis with at least one other emitting or receiving surface via a free space region occupied in part by a vacuum, gas, liquid, and/or solid medium.

## Claims

1. A spatial light modulating, SLM, device comprising:
one or more optical inputs,
a first module (104, 5604) comprising a first plurality of waveguides (5712) arranged into an array, said first module having at least a surface of emitters (5608), wherein each waveguide (5712) is coupled to one or more optical inputs, whereby said waveguide simultaneously carries optical signals, and said first module further comprises at least one light modulating element (5832) for modulating light passing through at least one of the first plurality of waveguides; and said light modulating elements are integrated as a common module, said surface of emitters forming an interface with a free space region occupied in part by a vacuum, gas, liquid, and/or solid medium, and
a further module (106, 5904) comprising a second plurality of waveguides (5964) arranged into an array, said further module having at least a surface of receivers (5906) forming an interface with a free space region occupied in part by a vacuum, gas, liquid, and/or solid medium, said further module comprising at least one photo-detection device, **characterised in that** said second plurality of waveguides of said further module and said photo-detection device are integrated as a common module; said further module comprising a sequence of said surface of receivers (5964); said second plurality of waveguides (5964) and at least one photo-detection device; said photo-detection device comprising photo-detector components (5982) corresponding to each waveguide; said waveguides and said photo-detector components (5982) being integrated into a common module; wherein a Fourier transform is realised between said first module (104, 5604) and said further module (106, 5904); said Fourier transform incorporating at least one Fourier transform configuration or a sequence of at least two Fourier transform configurations (110, 210).

2. A SLM device according to claim 1, wherein said first or said further module has an electro-optic interconnection for connection to a processing system.

3. A SLM device according to either claim 1 or claim 2, wherein the at least one light modulating element is one of the following: in-line with the at least one of the plurality of waveguides, a waveguide adjacent to the at least one of the plurality of waveguides, and enclosing the at least one of the plurality of waveguides.

4. A SLM device according to any one of the preceding claims, wherein the at least one light modulating element comprises one or more of the following: a thermo-optic phase-shifter, an electro-optic polymer, at least one gain component, and/or an evanescently-coupled-pump amplifier.

5. A SLM device according to any one of the preceding claims, wherein the optical input is off-device and coupled to each of the plurality of waveguides via a branching element.

6. A SLM device according to any one of claims 1 to 5, the device further comprising a further waveguide array for splitting the optical input into a plurality of light paths.

7. A SLM device according to any one of the preceding claims, further comprising a micro-lens array (5722) for capturing the modulated light after passing through at least one of the plurality of waveguides and projecting the captured modulated light towards a free space region occupied in part by a vacuum, gas, liquid, and/or solid medium.

8. A SLM device according to any one of the preceding claims, wherein the plurality of waveguides branch out from a single waveguide coupled to the optical input.

9. A SLM device according to any one of the preceding claims, wherein said module integrates a plurality of waveguides and possesses a light-emitting surface and/or a light-receiving surface.

10. A SLM device according to any one of the preceding claims, wherein the at least one of the plurality of waveguides has a planar light-emitting surface and/or a planar light-receiving surface.

11. A SLM device according to any one of the preceding claims, wherein the at least one of the plurality of waveguides has a non-planar light-emitting surface and/or a non-planar light-receiving surface.

12. A SLM device according to any one of the preceding claims, wherein said SLM device is self-emissive.

13. An optical processing system according to any of the preceding claims, wherein at least one of said SLM devices interfaces with an electro-optic carrier.

14. An optical processing system according to any one of the preceding claims, wherein said photo-detection device detects one or more of the following: the phase of light; the amplitude of light; the polarization of light; the intensity of light; both the phase and amplitude of light; both the phase and intensity of light; both the phase and polarization of light; both the amplitude and polarization of light; both the intensity and polarization of light; optionally the intensity and the polarization may be detected simultaneously; the combination of phase, amplitude, and polarization of light; the combination of phase, intensity, and polarization of light.
